# EUROPEAN PATENT SPECIFICATION

(11) **EP 3 487 901 B1**
(45) Date of publication and mention of the grant of the patent: **18.05.2022**
(21) Application number: 17746297.5
(22) Date of filing: 20.07.2017
(51) Int. Cl.: C08G 18/48, C08G 18/64, C08G 18/10, C08G 18/12, C09D 175/04, C08G 18/34, C08G 18/42, C08G 18/75

(54) **POLYURETHANE POLYMERS COMPRISING POLYSACCHARIDES**
POLYURETHANPOLYMERE MIT POLYSACCHARIDEN
POLYMÈRES DE POLYURÉTHANE COMPRENANT DES POLYSACCHARIDES

(30) Priority: 22.07.2016 US 201662365411 P; 05.08.2016 US 201662371359 P; 22.08.2016 US 201662377707 P; 23.01.2017 US 201762449218 P
(43) Date of publication of application: 29.05.2019
(73) Proprietor: Nutrition & Biosciences USA 4, Inc., Rochester NY 14623 (US)
(72) Inventor: BEHABTU, Natnael, Wilmington Delaware 19801 (US); LENGES, Christian Peter, Wilmington Delaware 19810 (US); MEKONNEN, Tizazu H., Kingston Ontario K7M 7B9 (CA); OPPER, Kathleen, Wilmington Delaware 19807 (US); SENDIJAREVIC, Aisa, Troy Michigan 48085 (US); SENDIJAREVIC, Ibrahim, Bloomfield Hills Michigan 48302 (US); SENDIJAREVIC, Vahid, Troy Michigan 48085 (US)
(74) Representative: Dehns
(86) International application number: PCT/US2017/042990
(87) International publication number: WO 2018/017789

(56) References cited:
- US-A1- 2010 179 241
- US-A1- 2015 152 196
- BELHASSEN RAMZI ET AL: "PREPARATION AND PROPERTIES OF STARCH-BASED BIOPOLYMERS MODIFIED WITH DIFUNCTIONAL ISOCYANATES", INTERNET CITATION, 17 November 2010 (2010-11-17), pages 81-102, XP002685906, ISSN: 1930-2126 Retrieved from the Internet: URL:www.bioresources.com [retrieved on 2012-10-09]

## Description

### CROSS-REFERENCE TO RELATED APPLICATIONS

This application claims priority to and the benefit of U.S. provisional application number 62/365411, titled "Polyurethane Polymers," filed July 22, 2016; U.S. provisional application number 62/371359, titled "Polyurethane Polymers Comprising Polysaccharides", filed August 5, 2016; U.S. provisional application number 62/377707, titled "Polyurethane Polymers Comprising Polysaccharides", filed August 22, 2016; and U.S. provisional application number 62/449218, titled "Polyurethane Polymers Comprising Polysaccharides", filed January 23, 2017.

### FIELD OF THE DISCLOSURE

The present disclosure is directed towards polyurethane polymers and polyurethane compositions comprising polysaccharides and polysaccharide derivatives generated in enzymatic polymerization processes. The polyurethane polymers and compositions can be useful as a coating, a film, a foam, an adhesive, in a personal care product, as a water absorbent, or as a component of a composite.

### BACKGROUND OF THE DISCLOSURE

Polyurethanes are an important class of polymers and can be used in many industries. They can find uses as films, fibers, paints, elastomers, sealants, adhesives, caulking, food packaging, insulation, molded products, foams, and a variety of other uses.

Polyurethanes are typically the reaction product of an isocyanate functional monomer or an isocyanate functional prepolymer, wherein two or more isocyanate groups are present and one or more hydroxyl functional monomers or prepolymers, wherein two or more hydroxyl groups are present per monomer or prepolymer. The isocyanate functional components and the hydroxyl functional components are typically derived from non-renewable petroleum-based resources.

US 2015/0152196 discloses polyurethanes derived from cellulosic compounds or starches, including (in a lengthy list) dextran and a variety of glucans. US 2010/0179241 utilizes a highly branched polysaccharide, for example polydextrose, which is derivatized with at least two esters of different length. Belhassen et al., in BioResources 6(1), pp 81-12 (2011), report on the preparation of thermoplastic starch (corn starch) modified in *situ* with a diisocyanate derivative.

It is desirable to find new sources for one or more of the components that form a part of the polyurethane, especially if the component is produced from a renewable resource.

Driven by a desire to find new structural polysaccharides using enzymatic syntheses or genetic engineering of microorganisms or plant hosts, researchers have discovered polysaccharides that are biodegradable, and that can be made economically from renewable resource-based feedstocks. An example of such a polysaccharide is poly alpha-1,3-glucan, a glucan polymer characterized by having alpha-1,3-glycosidic linkages. This polymer has been isolated by contacting an aqueous solution of sucrose with a glucosyltransferase enzyme isolated from *Streptococcus salivarius* (Simpson et al., Microbiology 141:1451-1460, 1995). Furthermore, polysaccharides of different linkages, content of primary and secondary hydroxyl, tuned molecular weight, branched and linear architecture, and crystallinity can be isolated and used as described herein. Polysaccharides can be added or take the place of components of polyurethane formulations including polyol, isocyanate, graft polyol, fillers, and additives used in polyurethanes.

### SUMMARY OF THE DISCLOSURE

Disclosed herein are polyurethane polymers comprising:
a) at least one polyisocyanate;
b) a polysaccharide comprising:
   i) poly alpha-1,3-glucan;
   ii) a poly alpha-1,3-glucan ester compound represented by Structure I: 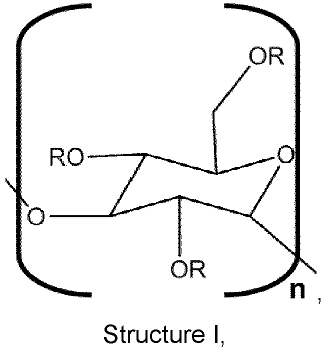 wherein
      (A) n is at least 6;
      (B) each R is independently an -H or an acyl group; and
      (C) the compound has a degree of substitution of about 0.05 to about 3.0;
   iii) poly alpha-1,3-1,6-glucan;
   iv) a composition comprising a poly alpha-1,3-glucan ester compound represented by Structure II: 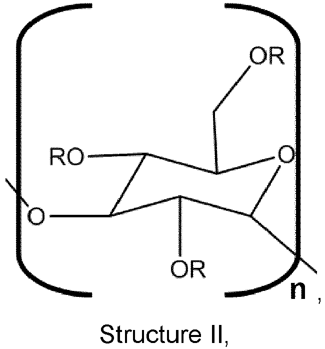 wherein
      (D) n is at least 6;
      (E) each R is independently an -H or a first group comprising -CO-Cₓ-COOH, wherein the -Cₓ- portion of said first group comprises a chain of 2 to 6 carbon atoms; and
      (F) the compound has a degree of substitution with the first group of about 0.001 to about 0.1;
   v) a poly alpha-1,3-glucan ether compound represented by Structure III: 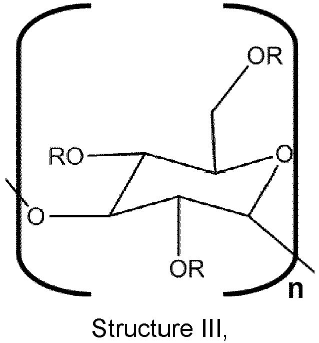
      (G) wherein n is at least 6;
      (H) each R is independently an H or an organic group; and
      (I) the ether compound has a degree of substitution of about 0.05 to about 3.0; and
c) optionally, at least one polyol.

In some embodiments, the polyisocyanate comprises 1,6-hexamethylene diisocyanate, isophorone diisocyanate, 2,4-diisocyanatotoluene, bis(4-isocyanatocyclohexyl) methane, 1,3-bis(1-isocyanato-1-methylethyl)benzene, bis(4-isocyanatophenyl)methane, 2,4'-diphenylmethane diisocyanate, or a combination thereof.

In some embodiments, the polyol is present and the polyol is a C₂ to C₁₂ alkane diol, 1,2,3-propanetriol, 2-hydroxymethyl-2-methyl-1,3-propanediol, 2-ethyl-2-hydroxymethyl-1,3-propanediol, 2,2-bis(hydroxymethyl)-1,3-propanediol, a polyether polyol, a polyester polyol, or a combination thereof.

In some embodiments, the polyurethane polymer further comprises d) at least one of a second polyol comprising at least one hydroxy acid. In some embodiments, the second polyol is 2-hydroxymethyl-3-hydroxypropanoic acid, 2-hydroxymethyl-2-methyl-3-hydroxypropanoic acid, 2-hydroxymethyl-2-ethyl-3-hydroxypropanoic acid, 2-hydroxymethyl-2-propyl-3-hydroxypropanoic acid, citric acid, tartaric acid, or a combination thereof.

In some embodiments, the polyurethane polymer further comprises a polyetheramine.

In one embodiment, the polysaccharide comprises poly alpha-1,3-glucan. In one embodiment, the poly saccharide comprises poly alpha-1,3-1,6-glucan. In one embodiment, the polysaccharide comprises water insoluble alpha-(1,3-glucan) polymer having 90% or greater alpha-1,3-glycosidic linkages, less than 1% by weight of alpha-1,3,6-glycosidic branch points, and a number average degree of polymerization in the range of from 55 to 10,000.

In one embodiment, the polysaccharide comprises a poly alpha-1,3-glucan ester compound. represented by Structure I 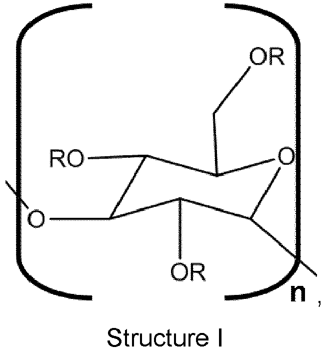 wherein
(A) n is at least 6;
(B) each R is independently an -H or an acyl group; and
(C) the compound has a degree of substitution of about 0.05 to about 3.0.

In one embodiment, the polysaccharide comprises a composition comprising a poly alpha-1,3-glucan ester compound represented by Structure II: 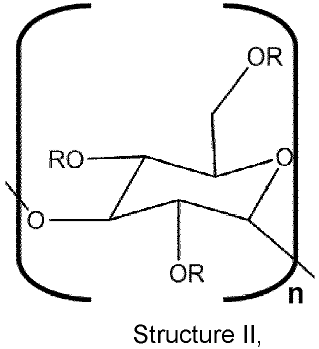 wherein
(D) n is at least 6;
(E) each R is independently an -H or a first group comprising -CO-Cₓ-COOH, wherein the -Cₓ- portion of said first group comprises a chain of 2 to 6 carbon atoms; and
(F) the compound has a degree of substitution with the first group of about 0.001 to about 0.1.

In some embodiments, the polysaccharide comprises a poly alpha-1,3-glucan ether compound represented by Structure III: 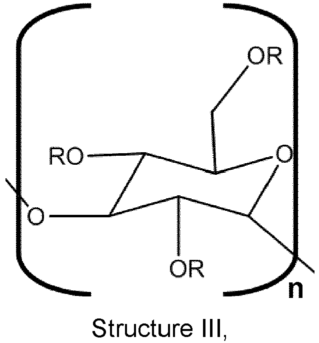 wherein
(G) n is at least 6;
(H) each R is independently an -H or an organic group; and
(I) the ether compound has a degree of substitution of about 0.05 to about 3.0.

In one embodiment, the polysaccharide comprises an enzymatically-produced polysaccharide.

In one embodiment, the polysaccharide is present in the polyurethane polymer at an amount in the range of from about 0.1 weight percent to about 50 weight percent, based on the total weight of the polyurethane polymer.

Also disclosed herein are polyurethane compositions comprising the polyurethane polymer, wherein the polyurethane composition further comprises a solvent. In some embodiments, the solvent is water, an organic solvent, or a combination thereof.

In some embodiments, the polyurethane compositions further comprise one or more additives, wherein the additive is one or more of dispersants, rheological aids, antifoams, foaming agents, adhesion promoters, antifreezes, flame retardants, bactericides, fungicides, preservatives, polymers, polymer dispersions, or a combination thereof.

In yet another embodiment, a polyurethane foam is disclosed, the polyurethane foam comprising a polyurethane polymer. In other embodiments, an adhesive, a coating, a film, and a molded article comprising a polyurethane polymer are disclosed. Also disclosed is a coated fibrous substrate comprising: a fibrous substrate having a surface, wherein the surface comprises a coating comprising a polyurethane polymer on at least a portion of the surface. In some embodiments, the fibrous substrate is a fiber, a yarn, a fabric, a textile, or a nonwoven.

### DETAILED DESCRIPTION OF THE DISCLOSURE

As used herein, the term "embodiment" or "disclosure" is not meant to be limiting, but applies generally to any of the embodiments defined in the claims or described herein. These terms are used interchangeably herein.

Unless otherwise disclosed, the terms "a" and "an" as used herein are intended to encompass one or more (i.e., at least one) of a referenced feature.

When an amount, concentration, value or parameter is given as either a range or a list of upper values and lower values, this is to be understood as specifically disclosing all ranges formed from any pair of any upper range limit and any lower range limit, regardless of whether ranges are separately disclosed. For example, when a range of "1 to 5" is recited, the recited range should be construed as including any single value within the range or as any values encompassed between the ranges, for example, "1 to 4", "1 to 3", "1 to 2", "1 to 2 & 4 to 5", "1 to 3 & 5". Where a range of numerical values is recited herein, unless otherwise stated, the range is intended to include the endpoints thereof, and all integers and fractions within the range.

The features and advantages of the present disclosure will be more readily understood, by those of ordinary skill in the art from reading the following detailed description. It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination. In addition, references to the singular may also include the plural (for example, "a" and "an" may refer to one or more) unless the context specifically states otherwise.

The use of numerical values in the various ranges specified in this application, unless expressly indicated otherwise, are stated as approximations as though the minimum and maximum values within the stated ranges were both proceeded by the word "about". In this manner, slight variations above and below the stated ranges can be used to achieve substantially the same results as values within the ranges. Also, the disclosure of these ranges is intended as a continuous range including each and every value between the minimum and maximum values.

As used herein:
The terms "percent by volume", "volume percent", "vol%" and "v/v
   %" are used interchangeably herein. The percent by volume of a solute in a solution can be determined using the formula: [(volume of solute)/(volume of solution)] x 100%.

The terms "percent by weight", "weight percentage (wt%)" and "weight-weight percentage (% w/w)" are used interchangeably herein. Percent by weight refers to the percentage of a material on a mass basis as it is comprised in a composition, mixture or solution.

The terms "increased", "enhanced" and "improved" are used interchangeably herein. These terms may refer to, for example, a quantity or activity that is at least 1%, 2%, 3%, 4%, 5%, 6%, 7%, 8%, 9%, 10%, 20%, 30%, 40%, 50%, 60%, 70%, 80%, 90%, 100%, 125%, 150%, 175%, or 200% (or any integer between 1% and 200%) more than the quantity or activity for which the increased quantity or activity is being compared.

The phrase "water insoluble" means that less than 5 grams of the substance, for example, the alpha-(1,3-glucan) polymer, dissolves in 100 milliliters of water at 23°C. In other embodiments, water insoluble means that less than 4 grams or 3 grams or 2 grams or 1 grams of the substance is dissolved in water at 23°C.

The term "polyurethane" or "polyurethane polymer" means a polymer having more than one urethane (-N(H)-C(O)-) bond. Because the structure of a polyurethane can be complex, the polyurethane described herein will be discussed in terms of the various monomers that are used to form the polyurethane.

The term "aliphatic isocyanate" means an isocyanate functional molecule wherein the isocyanate group (-NCO) is attached to a carbon having *sp³* hybridization. In contrast, an "aromatic isocyanate" is an isocyanate functional molecule wherein the isocyanate group is attached to a carbon atom having *sp²* hybridization.

The term "polyisocyanate" is defined as di- and higher-functional isocyanates, and the term includes oligomers. Any polyisocyanate having predominately two or more isocyanate groups, is suitable for use in preparing the polyurethane polymers disclosed herein.

As used herein, the term "polysaccharide" means a polymeric carbohydrate molecule composed of long chains of monosaccharide units bound together by glycosidic linkages and on hydrolysis give the constituent monosaccharides or oligosaccharides.

The term "fabric", as used herein, refers to a multilayer construction of fibers or yarns.

The term "fiber" as used herein refers to an elongate body the length dimension of which is much greater than the transverse dimensions of width and thickness. Accordingly, the term fiber includes monofilament fiber, multifilament fiber, ribbon, strip, a plurality of any one or combinations thereof and the like having regular or irregular cross-section.

The term "yarn" as used herein refers to a continuous strand of fibers.

The term "textile" as used herein refers to garments and other articles fabricated from fibers, yarns, or fabrics when the products retain the characteristic flexibility and drape of the original fabrics.

The present disclosure is directed to a polyurethane polymer comprising or consisting essentially of:
a) at least one polyisocyanate;
b) a polysaccharide comprising:
   i) poly alpha-1,3-glucan;
   ii) a poly alpha-1,3-glucan ester compound represented by Structure I: 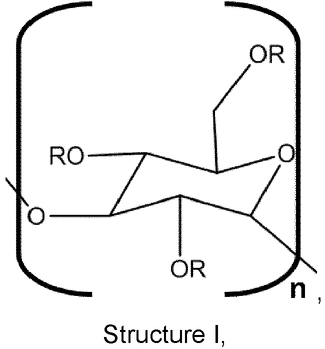 wherein
      (A) n is at least 6;
      (B) each R is independently an -H or an acyl group; and
      (C) the compound has a degree of substitution of about 0.05 to about 3.0;
   iii) poly alpha-1,3-1,6-glucan;
   iv) a poly alpha-1,3-glucan ester compound represented by Structure II: 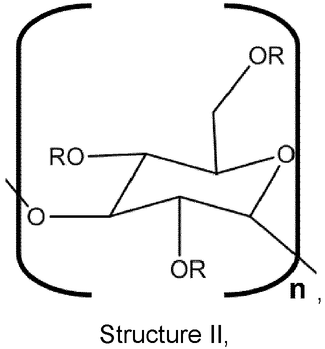 wherein
      (D) n is at least 6;
      (E) each R is independently an -H or a first group comprising -CO-Cₓ-COOH, wherein the -Cₓ- portion of said first group comprises a chain of 2 to 6 carbon atoms; and
      (F) the compound has a degree of substitution with the first group of about 0.001 to about 0.1; or
   v) a poly alpha-1,3-glucan ether compound represented by Structure III: 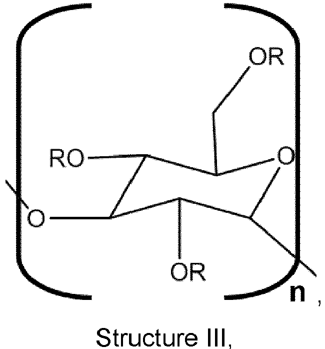 wherein
      (G) n is at least 6;
      (H) each R is independently an -H or an organic group; and
      (I) the ether compound has a degree of substitution of about 0.05 to about 3.0; and
c) optionally, at least one polyol.

In other embodiments, the polyurethane polymer can further comprise one or more amines; and/or one or more hydroxy acid.

The at least one polyisocyanate can be any of the known polyisocyanates. For example, the polyisocyanate can be an aliphatic polyisocyanate, an aromatic polyisocyanate or a polyisocyanate that has both aromatic and aliphatic groups. Examples of polyisocyanates can include, for example, 1,6-hexamethylene diisocyanate, isophorone diisocyanate, 2,4-toluene diisocyanate, 2,6-toluene diisocyanate, mixtures of 2,4- and 2,6-toluene diisocyanate, bis(4-isocyanatocyclohexyl) methane, 1,3-bis(1-isocyanato-1-methylethyl)benzene, bis(4-isocyanatophenyl)methane, 2,4'-diphenylmethane diisocyanate, 2,2'-diphenylmethane diisocyanate, 2,4-diisocyanatotoluene, bis(3-isocyanatophenyl)methane, 1,4-diisocyanatobenzene, 1,3-diisocyanato-o-xylene, 1,3-diisocyanato-p-xylene, 1,3-diisocyanato-m-xylene, 2,4-diisocyanato-1-chlorobenzene, 2,4-diisocyanato-1-nitrobenzene, 2,5-diisocyanato-1-nitrobenzene, m-phenylene diisocyanate, hexahydrotoluene diisocyanate, 1,5-naphthalene diisocyanate, 1-methoxy-2,4-phenylene diisocyanate, 4,4'-biphenylmethane diisocyanate, 4,4'-biphenylene diisocyanate, 3,3'-dimethyl-4,4'-diphenylmethane diisocyanate, 3,3'-4,4'-diphenylmethane diisocyanate, 3,3'-dimethyldiphenylmethane-4,4'-diisocyanate, or a combination thereof. Also useful are homopolymers of polyisocyanates, for example, polyisocyanates comprising allophanate, biuret, isocyanurate, iminooxadiazinedione, or carbodiimide groups.

The polysaccharide comprises:
i) poly alpha-1,3-glucan;
ii) a poly alpha-1,3-glucan ester compound represented by Structure I: 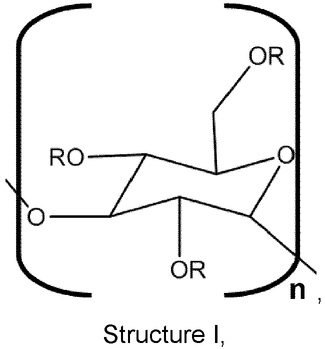 wherein
   (A) n is at least 6;
   (B) each R is independently an -H or an acyl group; and
   (C) the compound has a degree of substitution of about 0.05 to about 3.0;
iii) poly alpha-1,3-1,6-glucan;
iv) a poly a poly alpha-1,3-glucan ester compound represented by Structure II: 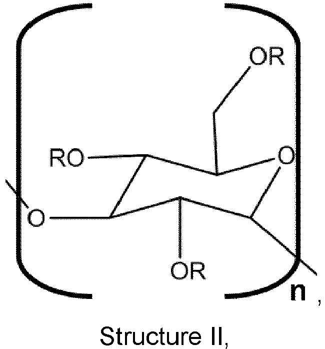 wherein
   (D) n is at least 6;
   (E) each R is independently an -H or a first group comprising -CO-Cₓ-COOH, wherein the -Cₓ- portion of said first group comprises a chain of 2 to 6 carbon atoms; and
   (F) the ester compound has a degree of substitution with the first group of about 0.001 to about 0.1.
v) a poly alpha-1,3-glucan ether compound represented by Structure III: 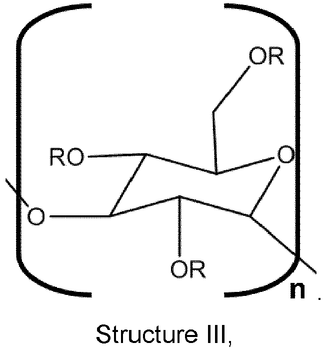 wherein
   (G) n is at least 6;
   (H) each R is independently an -H or an organic group; and
   (J) the ether compound has a degree of substitution of about 0.05 to about 3.0.

Mixtures of these polysaccharides can also be used. In one embodiment, the polysaccharide comprises a poly alpha-1,3-glucan ester compound with a degree of substitution of about 0.05 to about 3.0.

In some embodiments, the polysaccharides react as a polyol in the formation of the polyurethane polymer. Without being bound by theory, it is thought that within the polyurethane polymer the polysaccharide can function as a polyol (a reactive filler), as a non-reactive filler, or both. The extent to which the polysaccharide can function as a reactive or non-reactive filler is thought to relate to the solubility of the polysaccharide, and to the relative amounts of polysaccharide, polyisocyanate, and other polyol, if present.

In one embodiment, the polysaccharide comprises poly alpha-1,3-glucan. The terms "poly alpha-1,3-glucan", "alpha-1,3-glucan polymer" and "glucan polymer" are used interchangeably herein. The term "glucan" herein refers to a polysaccharide of D-glucose monomers that are linked by glycosidic linkages. Poly alpha-1,3-glucan is a polymer comprising glucose monomeric units linked together by glycosidic linkages, wherein at least 50% of the glycosidic linkages are alpha-1,3-glycosidic linkages. Poly alpha-1,3-glucan is a type of polysaccharide. The structure of poly alpha-1,3-glucan can be illustrated as follows:

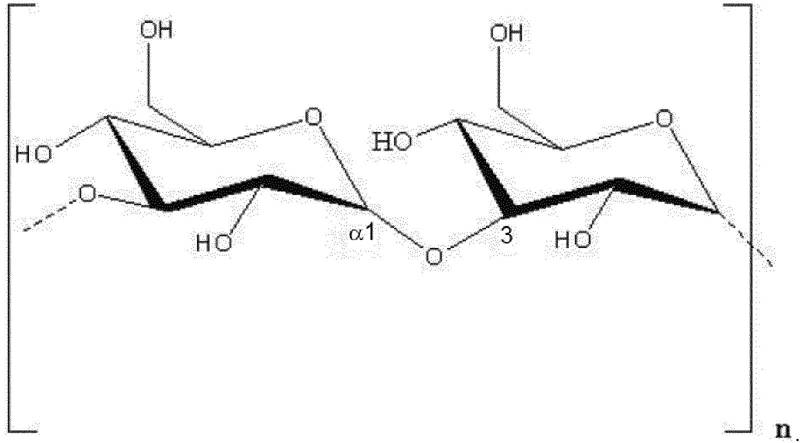

The poly alpha-1,3-glucan can be prepared using chemical methods, or it can be prepared by extracting it from various organisms, such as fungi, that produce poly alpha-1,3-glucan. Alternatively, poly alpha-1,3-glucan can be enzymatically produced from sucrose using one or more glucosyltransferase (gtf) enzymes, as described in U.S. Patent Nos. 7,000,000; 8,642,757; and 9,080,195, for example. Using the procedures given therein, the polymer is made directly in a one-step enzymatic reaction using a recombinant glucosyltransferase enzyme, for example the gtfJ enzyme, as the catalyst and sucrose as the substrate. The poly alpha-1,3-glucan is produced with fructose as the by-product. As the reaction progresses, the poly alpha-1,3-glucan precipitates from solution.

The process to produce poly alpha-1,3-glucan from sucrose using, for example, a glucosyl transferase enzyme, can result in a slurry of the poly alpha-1,3-glucan in water. The slurry can be filtered to remove some of the water, giving the solid poly alpha-1,3-glucan as a wet cake containing in the range of from 30 to 50 percent by weight of poly alpha-1,3-glucan, with the remainder being water. In some embodiments, the wet cake comprises in the range of from 35 to 45 percent by weight of the poly alpha-1,3-glucan. The wet cake can be washed with water to remove any water soluble impurities, for example, sucrose, fructose, or phosphate buffers. In some embodiments, the wet cake comprising the poly alpha-1,3-glucan can be used as is. In other embodiments, the wet cake can be further dried under reduced pressure, at elevated temperature, by freeze drying, or a combination thereof, to give a powder comprising greater than or equal to 50 percent by weight of the poly alpha-1,3-glucan. In some embodiments, the poly alpha-1,3-glucan can be a powder, comprising less than or equal to 20 percent by weight water. In other embodiments, the poly alpha-1,3-glucan can be a dry powder comprising less than or equal to 15, 14, 13, 12, 11, 10, 9, 8, 7, 6, 5, 4, 3, 2, or 1 percent by weight water.

In some embodiments, the percentage of glycosidic linkages between the glucose monomer units of the poly alpha-1,3-glucan that are alpha-1,3 is greater than or equal to 50%, 60%, 70%, 80%, 90%, 95%, 96%, 97%, 98%, 99%, or 100% (or any integer value between 50% and 100%). In such embodiments, accordingly, poly alpha-1,3-glucan has less than or equal to 50%, 40%, 30%, 20%, 10%, 5%, 4%, 3%, 2%, 1%, or 0% (or any integer value between 0% and 50%) of glycosidic linkages that are not alpha-1,3.

The terms "glycosidic linkage" and "glycosidic bond" are used interchangeably herein and refer to the type of covalent bond that joins a carbohydrate (sugar) molecule to another group such as another carbohydrate. The term "alpha-1,3-glycosidic linkage" as used herein refers to the type of covalent bond that joins alpha-D-glucose molecules to each other through carbons 1 and 3 on adjacent alpha-D-glucose rings. This linkage is illustrated in the poly alpha-1,3-glucan structure provided above. Herein, "alpha-D-glucose" will be referred to as "glucose". All glycosidic linkages disclosed herein are alpha-glycosidic linkages, except where otherwise noted.

The poly alpha-1,3-glucan may have a weight average degree of polymerisation (DPw) of at least about 400. In some embodiments, the poly alpha-1,3-glucan has a DPw of from about 400 to about 1400, or from about 400 to about 1000, or from about 500 to about 900.

The poly alpha-1,3-glucan can be used as a dry powder, for example, containing less than 5% by weight or water, or in other embodiments, the poly alpha-1,3-glucan can be used a wet cake, containing greater than 5% by weight of water.

In one embodiment, the polysaccharide comprises water insoluble alpha-(1,3-glucan) polymer having 90% or greater α-1,3-glycosidic linkages, less than 1% by weight of alpha-1,3,6-glycosidic branch points, and a number average degree of polymerization in the range of from 55 to 10,000.

The phrase "alpha-(1,3-glucan) polymer" means a polysaccharide comprising glucose monomer units linked together by glycosidic linkages wherein at least 50% of the glycosidic linkages are α-1,3-glycosidic linkages. In other embodiments, the percentage of α-1,3-glycosidic linkages can be greater than or equal to 90%, 95%, 96%, 97%, 98%, 99% or 100% (or any integer value between 50% and 100%). Accordingly, the α-(1,3→glucan) polymer comprises less than or equal to 10%, 5%, 4%, 3%, 2%, 1% or 0% of glycosidic linkages that are not α-1,3-glycosidic linkages. The α-(1,3→glucan) polymer also has a number average degree of polymerization in the range of from 55 to 10,000.

In one embodiment, the polysaccharide is a poly alpha-1,3-glucan ester compound with a degree of substitution of about 0.05 to about 3.0. In one embodiment, a poly alpha-1,3-glucan ester compound can be represented by Structure I: 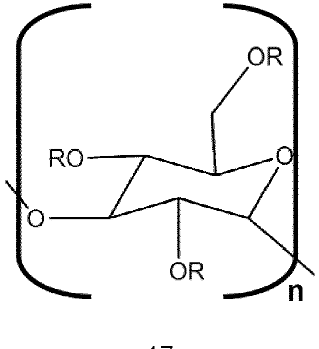 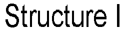 wherein
(A) n can be at least 6;
(B) each R can independently be a hydrogen atom (H) or an acyl group; and
(C) the ester compound has a degree of substitution of about 0.05 to about 3.0. Poly alpha-1,3-glucan ester compounds disclosed herein are synthetic, man-made compounds. Poly alpha-1,3-glucan ester compounds can be prepared by contacting poly alpha-1,3-glucan in a reaction that is substantially anhydrous with at least one acid catalyst, at least one acid anhydride, and at least one organic acid, as disclosed in U.S. Patent No. 9,278,988. An acyl group derived from the acid anhydride is esterified to the poly alpha-1,3-glucan in this contacting step, thereby producing a poly alpha-1,3-glucan ester compound.

The poly alpha-1,3-glucan used to produce poly alpha-1,3-glucan ester compounds herein is preferably linear/unbranched. In certain embodiments, poly alpha-1,3-glucan has no branch points or less than about 10%, 9%, 8%, 7%, 6%, 5%, 4%, 3%, 2%, or 1% branch points as a percent of the glycosidic linkages in the polymer. Examples of branch points include alpha-1,6 branch points, such as those present in mutan polymer.

The Mₙ or M_{w} of poly alpha-1,3-glucan used to prepare poly alpha-1,3-glucan ester compounds herein may be at least about 500 to about 300000. Alternatively, Mₙ or M_{w} can be at least about 10000, 25000, 50000, 75000, 100000, 125000, 150000, 175000, 200000, 225000, 250000, 275000, or 300000 (or any integer between 10000 and 300000), for example.

The terms "poly alpha-1,3-glucan ester compound", "poly alpha-1,3-glucan ester", and "poly alpha-1,3-glucan ester derivative" are used interchangeably herein. A poly alpha-1,3-glucan ester compound is termed an "ester" herein by virtue of comprising the substructure -C_{G}-O-CO-C-, where "-C_{G}-" represents carbon 2, 4, or 6 of a glucose monomeric unit of a poly alpha-1,3-glucan ester compound, and where "-CO-C-" is comprised in the acyl group.

An "acyl group" group herein can be an acetyl group (-CO-CH₃), propionyl group (-CO-CH₂-CH₃), butyryl group (-CO-CH₂-CH₂-CH₃), pentanoyl group (-CO-CH₂-CH₂-CH₂-CH₃), hexanoyl group (-CO-CH₂-CH₂-CH₂-CH₂-CH₃), heptanoyl group (-CO-CH₂-CH₂-CH₂-CH₂-CH₂-CH₃), or octanoyl group (-CO-CH₂-CH₂-CH₂-CH₂-CH₂-CH₂-CH₃), for example. The carbonyl group (-CO-) of the acyl group is ester-linked to carbon 2, 4, or 6 of a glucose monomeric unit of a poly alpha-1,3-glucan ester compound.

Poly alpha-1,3-glucan ester compounds in certain embodiments disclosed herein may contain one type of acyl group. For example, one or more R groups ester-linked to the glucose group in the above formula may be a propionyl group; the R groups in this particular example would thus independently be hydrogen and propionyl groups. As another example, one or more R groups ester-linked to the glucose group in the above formula may be an acetyl group; the R groups in this particular example would thus independently be hydrogen and acetyl groups. Certain embodiments of poly alpha-1,3-glucan ester compounds herein do not have a DoS by acetyl groups of 2.75 or more.

Alternatively, poly alpha-1,3-glucan ester compounds disclosed herein can contain two or more different types of acyl groups. Examples of such compounds contain two different acyl groups, such as (i) acetyl and propionyl groups (poly alpha-1,3-glucan acetate propionate, where R groups are independently H, acetyl, or propionyl), or (ii) acetyl and butyryl groups (poly alpha-1,3-glucan acetate butyrate, where R groups are independently H, acetyl, or butyryl).

Regarding nomenclature, a poly alpha-1,3-glucan ester compound can be referenced herein by referring to the organic acid(s) corresponding with the acyl group(s) in the compound. For example, an ester compound comprising acetyl groups can be referred to as a poly alpha-1,3-glucan acetate, an ester compound comprising propionyl groups can be referred to as a poly alpha-1,3-glucan propionate, and an ester compound comprising butyryl groups can be referred to as a poly alpha-1,3-glucan butyrate. However, this nomenclature is not meant to refer to the poly alpha-1,3-glucan ester compounds herein as acids *per se*.

"Poly alpha-1,3-glucan triacetate" herein refers to a poly alpha-1,3-glucan ester compound with a degree of substitution by acetyl groups of 2.75 or higher.

The terms "poly alpha-1,3-glucan monoester" and "monoester" are used interchangeably herein. A poly alpha-1,3-glucan monoester contains only one type of acyl group. Examples of such monoesters are poly alpha-1,3-glucan acetate (comprises acetyl groups) and poly alpha-1,3-glucan propionate (comprises propionyl groups).

The terms "poly alpha-1,3-glucan mixed ester" and "mixed ester" are used interchangeably herein. A poly alpha-1,3-glucan mixed ester contains two or more types of an acyl group. Examples of such mixed esters are poly alpha-1,3-glucan acetate propionate (comprises acetyl and propionyl groups) and poly alpha-1,3-glucan acetate butyrate (comprises acetyl and butyryl groups).

The terms "organic acid" and "carboxylic acid" are used interchangeably herein. An organic acid has the formula R-COOH, where R is an organic group and COOH is a carboxylic group. The R group herein is typically a saturated linear carbon chain (up to seven carbon atoms). Examples of organic acids are acetic acid (CH₃-COOH), propionic acid (CH₃-CH₂-COOH) and butyric acid (CH₃-CH₂-CH₂-COOH).

The "molecular weight" of poly alpha-1,3-glucan and poly alpha-1,3-glucan ester compounds herein can be represented as number-average molecular weight (Mₙ) or as weight-average molecular weight (M_{w}). Alternatively, molecular weight can be represented as Daltons, grams/mole, DPw (weight average degree of polymerization), or DPn (number average degree of polymerization). Various means are known in the art for calculating these molecular weight measurements, such as high-pressure liquid chromatography (HPLC), size exclusion chromatography (SEC), or gel permeation chromatography (GPC).

The poly alpha-1,3-glucan ester compound has a degree of substitution (DoS) of about 0.05 to about 3.0. The term "degree of substitution" (DoS) as used herein refers to the average number of hydroxyl groups substituted in each monomeric unit (glucose) of a poly alpha-1,3-glucan ester compound. Since there are three hydroxyl groups in each monomeric unit in poly alpha-1,3-glucan, the DoS in a poly alpha-1,3-glucan ester compound herein can be no higher than 3. Alternatively, the DoS of a poly alpha-1,3-glucan ester compound disclosed herein can be about 0.2 to about 2.0. Alternatively still, the DoS can be at least about 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0. It would be understood by those skilled in the art that since a poly alpha-1,3-glucan ester compound disclosed herein has a degree of substitution between about 0.05 to about 3.0, the R groups of the compound cannot only be hydrogen.

The wt% of one or more acyl groups in a poly alpha-1,3-glucan ester compound herein can be referred to instead of referencing a DoS value. For example, the wt% of an acyl group in a poly alpha-1,3-glucan ester compound can be at least about 0.1%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, or 60%.

The percentage of glycosidic linkages between the glucose monomer units of the poly alpha-1,3-glucan ester compound that are alpha-1,3 is at least about 50%, 60%, 70%, 80%, 90%, 95%, 96%, 97%, 98%, 99%, or 100% (or any integer between 50% and 100%). In such embodiments, accordingly, the compound has less than about 50%, 40%, 30%, 20%, 10%, 5%, 4%, 3%, 2%, 1%, or 0% (or any integer value between 0% and 50%) of glycosidic linkages that are not alpha-1,3.

The backbone of a poly alpha-1,3-glucan ester compound disclosed herein is preferably linear/unbranched. In certain embodiments, the compound has no branch points or less than about 10%, 9%, 8%, 7%, 6%, 5%, 4%, 3%, 2%, or 1% branch points as a percent of the glycosidic linkages in the polymer. Examples of branch points include alpha-1,6 branch points.

The formula of a poly alpha-1,3-glucan ester compound in certain embodiments can have an n value of at least 6. Alternatively, n can have a value of at least 10, 50, 100, 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, or 4000 (or any integer between 10 and 4000).

The molecular weight of a poly alpha-1,3-glucan ester compound disclosed herein can be measured as number-average molecular weight (Mₙ) or as weight-average molecular weight (M_{w}). Alternatively, molecular weight can be measured in Daltons or grams/mole. It may also be useful to refer to the DP_{w} (weight average degree of polymerization) or DPₙ (number average degree of polymerization) of the poly alpha-1,3-glucan polymer component of the compound.

The Mₙ or M_{w} of poly alpha-1,3-glucan ester compounds disclosed herein may be at least about 1000. Alternatively, the Mₙ or M_{w} can be at least about 1000 to about 600000. Alternatively still, the Mₙ or M_{w} can be at least about 10000, 25000, 50000, 75000, 100000, 125000, 150000, 175000, 200000, 225000, 250000, 275000, or 300000 (or any integer between 10000 and 300000), for example.

A poly alpha-1,3-glucan ester in certain embodiments can have a DoS by acetyl groups up to about 2.00, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, or 3.00. Thus, for example, the DoS by acetyl groups can be up to about 2.00-2.40, 2.00-2.50, or 2.00-2.65. As other examples, the DoS by acetyl groups can be about 0.05 to about 2.60, about 0.05 to about 2.70, about 1.2 to about 2.60, or about 1.2 to about 2.70. Such poly alpha-1,3-glucan esters can be a monoester or a mixed ester.

A poly alpha-1,3-glucan ester in certain embodiments can have a wt% of propionyl groups up to about 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, or 55%. Such poly alpha-1,3-glucan esters can be a monoester or a mixed ester. Regarding mixed esters, poly alpha-1,3-glucan acetate propionate can have a wt% of acetyl groups up to about 0.1%, 1%, 2%, 3%, 4%, 5%, 6%, 7%, 8%, 9%, or 10%, and a wt% of propionyl groups as per any of the propionyl wt%'s listed above, for example.

A poly alpha-1,3-glucan ester in certain embodiments can have a wt% of butyryl groups up to about 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, or 60%. A poly alpha-1,3-glucan ester in other embodiments can have a DoS by butyryl groups up to about 0.80, 0.85, 0.90, 0.95, 1.00, 1.05, 1.10, 1.15, or 1.20. Such poly alpha-1,3-glucan esters can be a monoester or a mixed ester. Regarding mixed esters, poly alpha-1,3-glucan acetate butyrate can have a wt% of acetyl groups up to about 0.1%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, or 36%, and a wt% of butyryl groups as per any of the butyryl wt%'s listed above, for example.

The structure, molecular weight and DoS of a poly alpha-1,3-glucan ester product can be confirmed using various physiochemical analyses known in the art such as NMR spectroscopy and size exclusion chromatography (SEC).

In one embodiment, the polysaccharide comprises a poly alpha-1,3-glucan ester compound, and the poly alpha-1,3-glucan ester compound is a poly alpha-1,3-glucan acetate propionate; a poly alpha-1,3-glucan acetate butyrate; a poly alpha-1,3-glucan acetate; or mixtures thereof. In one embodiment, the poly alpha-1,3-glucan ester compound is a poly alpha-1,3-glucan acetate propionate. In one embodiment, the poly alpha-1,3-glucan ester compound is a poly alpha-1,3-glucan acetate butyrate. In one embodiment, the poly alpha 1,3-glucan ester compound is a poly alpha-1,3-glucan acetate.

In one embodiment, the polysaccharide is poly alpha-1,3-1,6-glucan. In one embodiment, the polysaccharide comprises poly alpha-1,3-1,6-glucan wherein (i) at least 30% of the glycosidic linkages of the poly alpha-1,3-1,6-glucan are alpha-1,3 linkages, (ii) at least 30% of the glycosidic linkages of the poly alpha-1,3-1,6-glucan are alpha-1,6 linkages, (iii) the poly alpha-1,3-1,6-glucan has a weight average degree of polymerization (DP_{w}) of at least 1000; and (iv) the alpha-1,3 linkages and alpha-1,6 linkages of the poly alpha-1,3-1,6-glucan do not consecutively alternate with each other. In another embodiment, at least 60% of the glycosidic linkages of the poly alpha-1,3-1,6-glucan are alpha-1,6 linkages. The term "alpha-1,6-glycosidic linkage" as used herein refers to the covalent bond that joins alpha-D-glucose molecules to each other through carbons 1 and 6 on adjacent alpha-D-glucose rings.

Poly alpha-1,3-1,6-glucan is a product of a glucosyltransferase enzyme, as disclosed in United States Patent Application Publication 2015/0232785 A1.

The glycosidic linkage profile of a poly alpha-1,3-1,6-glucan herein can be determined using any method known in the art. For example, a linkage profile can be determined using methods that use nuclear magnetic resonance (NMR) spectroscopy (e.g., ¹³C NMR or ¹H NMR). These and other methods that can be used are disclosed in Food Carbohydrates: Chemistry, Physical Properties, and Applications (S. W. Cui, Ed., Chapter 3, S. W. Cui, Structural Analysis of Polysaccharides, Taylor & Francis Group LLC, Boca Raton, FL, 2005).

The terms "poly alpha-1,3-1,6-glucan", "alpha-1,3-1,6-glucan polymer", and "poly (alpha-1,3)(alpha-1,6) glucan" are used interchangeably herein (note that the order of the linkage denotations "1,3" and "1,6" in these terms is of no moment). Poly alpha-1,3-1,6-glucan herein is a polymer comprising glucose monomeric units linked together by glycosidic linkages (i.e., glucosidic linkages), wherein at least about 30% of the glycosidic linkages are alpha-1,3-glycosidic linkages, and at least about 30% of the glycosidic linkages are alpha-1,6-glycosidic linkages. Poly alpha-1,3-1,6-glucan is a type of polysaccharide containing a mixed glycosidic linkage content. The meaning of the term poly alpha-1,3-1,6-glucan in certain embodiments herein excludes "alternan," which is a glucan containing alpha-1,3 linkages and alpha-1,6 linkages that consecutively alternate with each other (U.S. Pat. No. 5702942, U.S. Pat. Appl. Publ. No. 2006/0127328). Alpha-1,3 and alpha-1,6 linkages that "consecutively alternate" with each other can be visually represented by ...G-1,3-G-1,6-G-1,3-G-1,6-G-1,3-G-1,6-G-1,3-G-..., for example, where G represents glucose.

The "molecular weight" of a poly alpha-1,3-1,6-glucan useful in polyurethane polymers can be represented as number-average molecular weight (Mₙ) or as weight-average molecular weight (M_{w}). Alternatively, molecular weight can be represented as Daltons, grams/mole, DP_{w} (weight average degree of polymerization), or DPₙ (number average degree of polymerization). Various means are known in the art for calculating these molecular weight measurements such as with high-pressure liquid chromatography (HPLC), size exclusion chromatography (SEC), or gel permeation chromatography (GPC).

The term "poly alpha-1,3-1,6-glucan wet cake" herein refers to poly alpha-1,3-1,6-glucan that has been separated from a slurry and washed with water or an aqueous solution. Poly alpha-1,3-1,6-glucan is not completely dried when preparing a wet cake.

An "aqueous composition" herein refers to a solution or mixture in which the solvent is at least about 20 wt% water, for example, and which comprises poly alpha-1,3-1,6-glucan. Examples of aqueous compositions herein are aqueous solutions and hydrocolloids.

The terms "hydrocolloid" and "hydrogel" are used interchangeably herein. A hydrocolloid refers to a colloid system in which water is the dispersion medium. A "colloid" herein refers to a substance that is microscopically dispersed throughout another substance. Therefore, a hydrocolloid herein can also refer to a dispersion, emulsion, mixture, or solution of poly alpha-1,3-1,6-glucan in water or aqueous solution.

The term "aqueous solution" herein refers to a solution in which the solvent is water. Poly alpha-1,3-1,6-glucan can be dispersed, mixed, and/or dissolved in an aqueous solution. An aqueous solution can serve as the dispersion medium of a hydrocolloid herein.

In some embodiments:
(i) at least 30% of the glycosidic linkages of the poly alpha-1,3-1,6-glucan are alpha-1,3 linkages,
(ii) at least 30% of the glycosidic linkages of the poly alpha-1,3-1,6-glucan are alpha-1,6 linkages,
(iii) the poly alpha-1,3-1,6-glucan has a weight average degree of polymerization (DP_{w}) of at least 1000; and
(iv) the alpha-1,3 linkages and alpha-1,6 linkages of the poly alpha-1,3-1,6-glucan do not consecutively alternate with each other.

At least 30% of the glycosidic linkages of poly alpha-1,3-1,6-glucan are alpha-1,3 linkages, and at least 30% of the glycosidic linkages of the poly alpha-1,3-1,6-glucan are alpha-1,6 linkages. Alternatively, the percentage of alpha-1,3 linkages in poly alpha-1,3-1,6-glucan herein can be at least 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, or 64%. Alternatively still, the percentage of alpha-1,6 linkages in poly alpha-1,3-1,6-glucan herein can be at least 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, or 69%.

A poly alpha-1,3-1,6-glucan can have any one the aforementioned percentages of alpha-1,3 linkages and any one of the aforementioned percentages of alpha-1,6 linkages, just so long that the total of the percentages is not greater than 100%. For example, poly alpha-1,3-1,6-glucan herein can have (i) any one of 30%, 31%, 32%, 33%, 34%, 35%, 36%, 37%, 38%, 39%, or 40% (30%-40%) alpha-1,3 linkages and (ii) any one of 60%, 61%, 62%, 63%, 64%, 65%, 66%, 67%, 68%, or 69% (60%-69%) alpha-1,6 linkages, just so long that the total of the percentages is not greater than 100%. Non-limiting examples include poly alpha-1,3-1,6-glucan with 31% alpha-1,3 linkages and 67% alpha-1,6 linkages. In certain embodiments, at least 60% of the glycosidic linkages of the poly alpha-1,3-1,6-glucan are alpha-1,6 linkages.

A poly alpha-1,3-1,6-glucan can have, for example, less than 10%, 9%, 8%, 7%, 6%, 5%, 4%, 3%, 2%, or 1% of glycosidic linkages other than alpha-1,3 and alpha-1,6. In another embodiment, a poly alpha-1,3-1,6-glucan only has alpha-1,3 and alpha-1,6 linkages.

Other examples of alpha-1,3 and alpha-1,6 linkage profiles and methods for their product are disclosed in published United States patent application 2015/0232785. The linkages and DPw of Glucan produced by various Gtf Enzymes, as disclosed in US 2015/0232785, are listed in the following "Linkages" Table.

**Linkages Table**

| Linkages and DP_{w} of Glucan Produced by Various Gtf Enzymes | | | |
|---|---|---|---|
| | Glucan Alpha Linkages | | |
| Gtf | % 1,3 | % 1,6 | DP_{w} |
| 4297 | 31 | 67 | 10540 |
| 3298 | 50 | 50 | 1235 |
| 0544 | 62 | 36 | 3815 |
| 5618 | 34 | 66 | 3810 |
| 2379 | 37 | 63 | 1640 |

The backbone of a poly alpha-1,3-1,6-glucan disclosed herein can be linear/unbranched. Alternatively, there can be branches in the poly alpha-1,3-1,6-glucan. A poly alpha-1,3-1,6-glucan in certain embodiments can thus have no branch points or less than about 30%, 29%, 28%, 27%, 26%, 25%, 24%, 23%, 22%, 21%, 20%, 19%, 18%, 17%, 16%, 15%, 14%, 13%, 12%, 11%, 10%, 9%, 8%, 7%, 6%, 5%, 4%, 3%, 2%, or 1% branch points as a percent of the glycosidic linkages in the polymer.

The alpha-1,3 linkages and alpha-1,6 linkages of a poly alpha-1,3-1,6-glucan do not consecutively alternate with each other. For the following discussion, consider that ...G-1,3-G-1,6-G-1,3-G-1,6-G-1,3-G-... (where G represents glucose) represents a stretch of six glucose monomeric units linked by consecutively alternating alpha-1,3 linkages and alpha-1,6 linkages. Poly alpha-1,3-1,6-glucan in certain embodiments herein comprises less than 2, 3, 4, 5, 6, 7, 8, 9, 10, or more glucose monomeric units that are linked consecutively with alternating alpha-1,3 and alpha-1,6 linkages.

The molecular weight of a poly alpha-1,3-1,6-glucan can be measured as DP_{w} (weight average degree of polymerization) or DPₙ (number average degree of polymerization). Alternatively, molecular weight can be measured in Daltons or grams/mole. It may also be useful to refer to the number-average molecular weight (Mₙ) or weight-average molecular weight (M_{w}) of the poly alpha-1,3-1,6-glucan.

A poly alpha-1,3-1,6-glucan useful in polyurethane polymers can have a DP_{w} of at least about 1000. For example, the DP_{w} of the poly alpha-1,3-1,6-glucan can be at least about 10000. Alternatively, the DP_{w} can be at least about 1000 to about 15000. Alternatively still, the DP_{w} can be at least about 1000, 2000, 3000, 4000, 5000, 6000, 7000, 8000, 9000, 10000, 11000, 12000, 13000, 14000, or 15000 (or any integer between 1000 and 15000), for example. Given that a poly alpha-1,3-1,6-glucan herein can have a DP_{w} of at least about 1000, such a glucan polymer is typically water-insoluble.

A poly alpha-1,3-1,6-glucan useful in polyurethane polymers can have an M_{w} of at least about 50000, 100000, 200000, 300000, 400000, 500000, 600000, 700000, 800000, 900000, 1000000, 1100000, 1200000, 1300000, 1400000, 1500000, or 1600000 (or any integer between 50000 and 1600000), for example. The M_{w} in certain embodiments is at least about 1000000. Alternatively, poly alpha-1,3-1,6-glucan can have an M_{w} of at least about 4000, 5000, 10000, 20000, 30000, or 40000, for example.

A poly alpha-1,3-1,6-glucan herein can comprise at least 20 glucose monomeric units, for example. Alternatively, the number of glucose monomeric units can be at least 25, 50, 100, 500, 1000, 2000, 3000, 4000, 5000, 6000, 7000, 8000, or 9000 (or any integer between 10 and 9000), for example.

Poly alpha-1,3-1,6-glucan herein can be provided in the form of a powder when dry, or a paste, colloid or other dispersion when wet, for example.

In another embodiment, the polysaccharide comprises a composition comprising a poly alpha-1,3-glucan ester compound represented by Structure II: 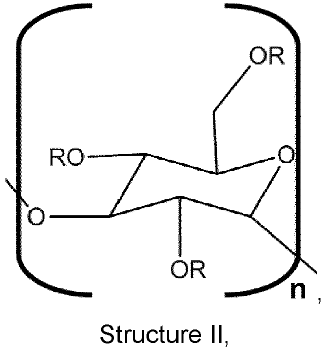 wherein
(D) n is at least 6;
(E) each R is independently an -H or a first group comprising -CO-Cₓ-COOH, wherein the -Cₓ- portion of said first group comprises a chain of 2 to 6 carbon atoms; and
(F) the ester compound has a degree of substitution with the first group of about 0.001 to about 0.1.

Such poly alpha-1,3-glucan esters and their preparation are disclosed in published patent application WO 2017/003808.

A poly alpha-1,3-glucan ester compound of Structure II is termed an "ester" herein by virtue of comprising the substructure -C_{G}-O-CO-Cₓ-, where "-C_{G}-" represents carbon 2, 4, or 6 of a glucose monomeric unit of a poly alpha-1,3-glucan ester compound, and where "-CO-Cₓ-" is comprised in the first group.

A "first group" herein comprises -CO-Cₓ-COOH. The term "-Cₓ-" refers to a portion of the first group that typically comprises a chain of 2 to 6 carbon atoms, each carbon atom preferably having four covalent bonds.

The terms "poly alpha-1,3-glucan monoester" and "monoester" are used interchangeably herein. A poly alpha-1,3-glucan monoester contains one type of first group.

The terms "poly alpha-1,3-glucan mixed ester" and "mixed ester" are used interchangeably herein. A poly alpha-1,3-glucan mixed ester contains two or more types of a first group.

The terms "reaction", "esterification reaction", "reaction composition", "reaction preparation" and the like are used interchangeably herein and refer to a reaction comprising, or consisting of, poly alpha-1,3-glucan and at least one cyclic organic anhydride. A reaction is placed under suitable conditions (e.g., time, temperature, pH) for esterification of one or more hydroxyl groups of the glucose units of poly alpha-1,3-glucan with a first group provided by the cyclic organic anhydride, thereby yielding a poly alpha-1,3-glucan ester compound.

The terms "cyclic organic anhydride", "cyclic organic acid anhydride", "cyclic acid anhydride" and the like are used interchangeably herein. A cyclic organic anhydride herein can have the formula shown below:

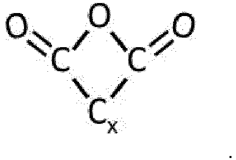

The -Cₓ- portion of the formula above typically comprises a chain of 2 to 6 carbon atoms; each carbon atom in this chain preferably has four covalent bonds. During an esterification reaction herein, the anhydride group (-CO-O-CO-) of a cyclic organic anhydride breaks such that one end of the broken anhydride becomes a -COOH group and the other end is esterified to a hydroxyl group of poly alpha-1,3-glucan, thereby rendering an esterified first group (-CO-Cₓ-COOH).

Each R group in the formula of a poly alpha-1,3-glucan ester compound represented by Structure II can independently be an -H or a first group comprising -CO-Cₓ-COOH. The -Cₓ- portion of the first group typically comprise a chain of 2 to 6 carbon atoms; each of these carbon atoms is preferably involved in four covalent bonds. In general, each carbon in the chain, aside from being covalently bonded with an adjacent carbon atom(s) in the chain or a carbon atom of the flanking C=O and COOH groups, can also be bonded to hydrogen(s), a substituent group(s) such as an organic group, and/or be involved in a carbon-carbon double-bond. For example, a carbon atom in the -Cₓ- chain can be saturated (i.e., -CH₂-), double-bonded with an adjacent carbon atom in the -Cₓ- chain (e.g., -CH=CH-), and/or be bonded to a hydrogen and an organic group (i.e., one hydrogen is substituted with an organic group). Skilled artisans would understand how the carbon atoms of the -Cₓ- portion of a first group comprising -CO-Cₓ-COOH can typically be bonded, given that carbon has a valency of four. It is contemplated that, in some embodiments, the -Cₓ-portion of the first group can comprise a chain of 2 to 16, 2 to 17, or 2 to 18 carbon atoms.

In certain embodiments, the -Cₓ- portion of the first group (-CO-Cₓ-COOH) comprises only CH₂ groups. Examples of a first group in which the -Cₓ- portion comprises only CH₂ groups are -CO-CH₂-CH₂-COOH, -CO-CH₂-CH₂-CH₂-COOH, -CO-CH₂-CH₂-CH₂-CH₂-COOH, -CO-CH₂-CH₂-CH₂-CH₂-CH₂-COOH, and -CO-CH₂-CH₂-CH₂-CH₂-CH₂-CH₂-COOH. As further disclosed below regarding processes for synthesizing a poly alpha-1,3-glucan ester compound, these first groups can be derived, respectively, by reacting succinic anhydride, glutaric anhydride, adipic anhydride, pimelic anhydride, or suberic anhydride with poly alpha-1,3-glucan.

As further disclosed below regarding processes for synthesizing a poly alpha-1,3-glucan ester compound, each of these first groups comprising a -Cₓ- portion with at least one organic group branch can be derived by reacting the appropriate cyclic organic anhydride with poly alpha-1,3-glucan. An illustrative example includes using methylsuccinic anhydride to ester-derivatize poly alpha-1,3-glucan, where the resultant first group is -CO-CH₂-CH(CH₃)-COOH or -CO-CH(CH₃)-CH₂-COOH. Thus, a cyclic organic anhydride comprising a -Cₓ- portion represented in any of the above-listed first groups (where the corresponding -Cₓ- portion of a cyclic organic anhydride is that portion linking each side of the anhydride group [-CO-O-CO-] together to form a cycle) can be reacted with poly alpha-1,3-glucan to produce an ester thereof having the corresponding first group (-CO-Cₓ-COOH).

In certain embodiments, poly alpha-1,3-glucan ester compounds represented by Structure II can contain one type of a first group comprising -CO-Cₓ-COOH. For example, one or more R groups ester-linked to the glucose group in the above formula may be -CO-CH₂-CH₂-COOH; the R groups in this particular example would thus independently be hydrogen and -CO-CH₂-CH₂-COOH groups (such an ester compound can be referred to as poly alpha-1,3-glucan succinate; its synthesis is described in an Example in the Experimental Section herein).

Poly alpha-1,3-glucan ester compounds useful in the polyurethane polymers disclosed herein have a degree of substitution (DoS) with one or more first groups (-CO-Cₓ-COOH) of about 0.001 to about 0.1. Alternatively, the DoS of a poly alpha-1,3-glucan ester compound can be about 0.001 to about 0.02, 0.025, 0.03, 0.035, 0.04, 0.05, 0.06, 0.07, 0.08, 0.09, or 0.1, for example. Alternatively still, it is believed that the DoS can be at least about 0.001, 0.01, 0.05, or 0.1, for example. The DoS can optionally be expressed as a range between any two of these values. It would be understood by those skilled in the art that, since a poly alpha-1,3-glucan ester compound herein has a degree of substitution between about 0.001 to about 0.1, the R groups of the compound cannot only be hydrogen.

A poly alpha-1,3-glucan ester compound herein can have at least about 50%, 60%, 70%, 80%, 90%, 95%, 96%, 97%, 98%, 99%, or 100% (or any integer between 50% and 100%) glycosidic linkages that are alpha-1,3. In such embodiments, accordingly, the poly alpha-1,3-glucan ester compound has less than about 50%, 40%, 30%, 20%, 10%, 5%, 4%, 3%, 2%, 1%, or 0% (or any integer value between 0% and 50%) of glycosidic linkages that are not alpha-1,3. A poly alpha-1,3-glucan ester compound preferably has at least about 98%, 99%, or 100% glycosidic linkages that are alpha-1,3.

The backbone of a poly alpha-1,3-glucan ester compound herein is preferably linear/unbranched. In certain embodiments, the compound has no branch points or less than about 10%, 9%, 8%, 7%, 6%, 5%, 4%, 3%, 2%, or 1% branch points as a percent of the glycosidic linkages in the polymer. Examples of branch points include alpha-1,6 branch points.

The formula of a poly alpha-1,3-glucan ester compound in certain embodiments can have an n value of at least 6. Alternatively, n can have a value of at least 10, 50, 100, 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, or 4000 (or any integer between 10 and 4000), for example. The value of n in still other examples can be in a range of 25-250, 50-250, 75-250, 100-250, 150-250, 200-250, 25-200, 50-200, 75-200, 100-200, 150-200, 25-150, 50-150, 75-150, 100-150, 25-100, 50-100, 75-100, 25-75, 50-75, or 25-50.

The molecular weight of a poly alpha-1,3-glucan ester compound disclosed herein can be measured as number-average molecular weight (Mₙ) or as weight-average molecular weight (M_{w}). Alternatively, molecular weight can be measured in Daltons or grams/mole. It may also be useful to refer to the DP_{w} (weight average degree of polymerization) or DPₙ (number average degree of polymerization) of the poly alpha-1,3-glucan polymer component of the compound. The Mₙ or M_{w} of a poly alpha-1,3-glucan ester compound herein can be at least about 1000, for example. Alternatively, the Mₙ or M_{w} can be at least about 1000 to about 600000. Alternatively still, the Mₙ or M_{w} can be at least about 10000, 25000, 50000, 75000, 100000, 125000, 150000, 175000, 200000, 225000, 250000, 275000, or 300000 (or any integer between 10000 and 300000), for example.

A method of producing a poly alpha-1,3-glucan ester compound represented by Structure II comprises:
(a) contacting poly alpha-1,3-glucan in a reaction with a cyclic organic anhydride, thereby producing a poly alpha-1,3-glucan ester compound represented by Structure II, and
(b) optionally, isolating the poly alpha-1,3-glucan ester compound produced in step (a).

Poly alpha-1,3-glucan is contacted with at least one cyclic organic anhydride in the disclosed reaction. A cyclic organic anhydride herein can have the formula shown below:

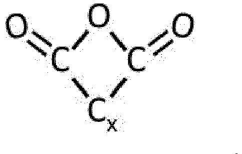

The -Cₓ- portion of the formula above typically comprises a chain of 2 to 6 carbon atoms, each carbon atom preferably having four covalent bonds. It is contemplated that, in some embodiments, the -Cₓ- portion can comprise a chain of 2 to 16, 2 to 17, or 2 to 18 carbon atoms. During a reaction of the present method, the anhydride group (-CO-O-CO-) of the cyclic organic anhydride breaks such that one end of the broken anhydride becomes a COOH group and the other end is esterified to a hydroxyl group of the poly alpha-1,3-glucan, thereby rendering an esterified first group (-CO-Cₓ-COOH). Depending on the cyclic organic anhydride used, there typically can be one or two possible products of such an esterification reaction.

Examples of cyclic organic anhydrides that can be included in a reaction herein include succinic anhydride, glutaric anhydride, adipic anhydride, pimelic anhydride, and suberic anhydride. These can be used, respectively, to esterify -CO-CH₂-CH₂-COOH, -CO-CH₂-CH₂-CH₂-COOH, -CO-CH₂-CH₂-CH₂-CH₂-COOH, -CO-CH₂-CH₂-CH₂-CH₂-CH₂-COOH, and -CO-CH₂-CH₂-CH₂-CH₂-CH₂-CH₂-COOH as a first group to poly alpha-1,3-glucan. These are all examples of first groups in which the -Cₓ- portion comprises only CH₂ groups. Thus, a cyclic organic anhydride herein can be one in which the -Cₓ- portion of the formula above comprises only CH₂ groups (e.g., 2 to 6 CH₂ groups).

A cyclic organic anhydride herein can be, in some aspects, one in which the -Cₓ- portion of the formula above comprises at least one branch comprising an organic group. Examples of such cyclic organic anhydrides include those that would yield -CO-CH₂-CH(CH₂CH=CHCH₂CH₂CH₂CH₂CH₂CH₃)-COOH or -CO-CH(CH₂CH=CHCH₂CH₂CH₂CH₂CH₂CH₃)-CH₂-COOH as first groups. Other examples of such cyclic organic anhydrides include those that would yield -CO-CH₂-CH₂-COOH, -CO-CH₂-CH₂-CH₂-COOH, -CO-CH₂-CH₂-CH₂-CH₂-COOH, -CO-CH₂-CH₂-CH₂-CH₂-CH₂-COOH, or -CO-CH₂-CH₂-CH₂-CH₂-CH₂-CH₂-COOH as first groups, but in which at least one, two, three, or more hydrogens thereof is/are substituted with an organic group branch (R^{b}). Still other examples of such cyclic organic anhydrides include those that would yield -CO-CH=CH-CH₂-COOH, -CO-CH=CH-CH₂-CH₂-COOH, -CO-CH=CH-CH₂-CH₂-CH₂-COOH, -CO-CH=CH-CH₂-CH₂-CH₂-CH₂-COOH, -CO-CH₂-CH=CH-COOH, -CO-CH₂-CH=CH-CH₂-COOH, -CO-CH₂-CH=CH-CH₂-CH₂-COOH, -CO-CH₂-CH=CH-CH₂-CH₂-CH₂-COOH, -CO-CH₂-CH₂-CH=CH-COOH, -CO-CH₂-CH₂-CH=CH-CH₂-COOH, -CO-CH₂-CH₂-CH=CH-CH₂-CH₂-COOH, -CO-CH₂-CH₂-CH₂-CH=CH-COOH, -CO-CH₂-CH₂-CH₂-CH=CH-CH₂-COOH, or -CO-CH₂-CH₂-CH₂-CH₂-CH=CH-COOH as first groups, but in which at least one, two, three, or more hydrogens thereof is/are substituted with an R^{b} group. Suitable examples of R^{b} groups herein include alkyl groups and alkenyl groups. An alkyl group herein can comprise 1-18 carbons (linear or branched), for example (e.g., methyl, ethyl, propyl, butyl, pentyl, hexyl, heptyl, octyl, nonyl, or decyl group). An alkenyl group herein can comprise 1-18 carbons (linear or branched), for example (e.g., methylene, ethenyl, propenyl, butenyl, pentenyl, hexenyl, heptenyl, octenyl [e.g., 2-octenyl], nonenyl [e.g., 2-nonenyl], or decenyl group).

Examples of cyclic organic anhydrides by name that can be included in a reaction herein include maleic anhydride, methylsuccinic anhydride, methylmaleic anhydride, dimethylmaleic anhydride, 2-ethyl-3-methylmaleic anhydride, 2-hexyl-3-methylmaleic anhydride, 2-ethyl-3-methyl-2-pentenedioic anhydride, itaconic anhydride (2-methylenesuccinic anhydride), 2-nonen-1-yl succinic anhydride, and 2-octen-1-yl succinic anhydride. In particular, for example, maleic anhydride can be used to esterify -CO-CH=CH-COOH as a first group to poly alpha-1,3-glucan; methylsuccinic anhydride can be used to esterify -CO-CH₂-CH(CH₃)-COOH and/or -CO-CH(CH₃)-CH₂-COOH as a first group to poly alpha-1,3-glucan; methylmaleic anhydride can be used to esterify -CO-CH=C(CH₃)-COOH and/or -CO-C(CH₃)=CH-COOH as a first group to poly alpha-1,3-glucan; dimethylmaleic anhydride can be used to esterify -CO-C(CH₃)=C(CH₃)-COOH as a first group to poly alpha-1,3-glucan; 2-ethyl-3-methylmaleic anhydride can be used to esterify -CO-C(CH₂CH₃)=C(CH₃)-COOH and/or -CO-C(CH₃)=C(CH₂CH₃)-COOH as a first group to poly alpha-1,3-glucan; 2-hexyl-3-methylmaleic anhydride can be used to esterify -CO-C(CH₂CH₂CH₂CH₂CH₂CH₃)=C(CH₃)-COOH and/or -CO-C(CH₃)=C(CH₂CH₂CH₂CH₂CH₂CH₃)-COOH as a first group to poly alpha-1,3-glucan; itaconic anhydride can be used to esterify -CO-CH₂-C(CH₂)-COOH and/or -CO-C(CH₂)-CH₂-COOH as a first group to poly alpha-1,3-glucan; 2-nonen-1-yl succinic anhydride can be used to esterify -CO-CH₂-CH(CH₂CH=CHCH₂CH₂CH₂CH₂CH₂CH₃)-COOH and/or -CO-CH(CH₂CH=CHCH₂CH₂CH₂CH₂CH₂CH₃)-CH₂-COOH as a first group to poly alpha-1,3-glucan.

One, two, three, or more cyclic organic anhydrides as presently disclosed can be used in an esterification reaction, for example. A cyclic organic anhydride can typically be obtained commercially in a concentrated (e.g., >95%, 96%, 97%, 98%, or 99% pure) form. The amount of cyclic organic anhydride in an esterification reaction herein can be selected to provide a composition comprising a poly alpha-1,3-glucan ester compound having a degree of substitution with the first group of about 0.001 to about 0.1.

In another embodiment, the polysaccharide comprises a poly alpha-1,3-glucan ether compound represented by Structure III: 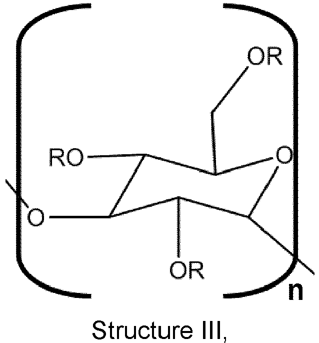 wherein
(G) n is at least 6;
(H) each R is independently an -H or an organic group; and
(J) the ether compound has a degree of substitution of about 0.05 to about 3.0. Poly alpha-1,3-glucan ether compounds useful to prepare polyurethane polymers can be an alkyl ether and/or hydroxyalkyl ether derivative of poly alpha-1,3-glucan. Such poly alpha-1,3-glucan ether compounds and their preparation are disclosed in U.S. Patent No. 9,139,718. Mixtures of polysaccharides comprising ether compounds can also be used.

The terms "poly alpha-1,3-glucan ether compound", "poly alpha-1,3-glucan ether", and "poly alpha-1,3-glucan ether derivative" are used interchangeably herein.

An "organic group" group as used herein refers to a chain of one or more carbons that (i) has the formula -CₙH₂ₙ₊₁ (i.e., an alkyl group, which is completely saturated) or (ii) is mostly saturated but has one or more hydrogens substituted with another atom or functional group (i.e., a "substituted alkyl group"). Such substitution may be with one or more hydroxyl groups, oxygen atoms (thereby forming an aldehyde or ketone group), carboxyl groups, or other alkyl groups.

A "hydroxy alkyl" group herein refers to a substituted alkyl group in which one or more hydrogen atoms of the alkyl group are substituted with a hydroxyl group. A "carboxy alkyl" group herein refers to a substituted alkyl group in which one or more hydrogen atoms of the alkyl group are substituted with a carboxyl group.

The degree of substitution (DoS) of a poly alpha-1,3-glucan ether compound useful to prepare polyurethane polymers can be from about 0.05 to about 3.0. Alternatively, the DoS can be about 0.2 to about 2.0. Alternatively still, the DoS can be at least about 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0. It would be understood by those skilled in the art that since a poly alpha-1,3-glucan ether compound herein has a degree of substitution between about 0.05 to about 3.0, and by virtue of being an ether, the R groups of the compound cannot only be hydrogen.

The percentage of glycosidic linkages between the glucose monomer units of poly alpha-1,3-glucan ether compounds herein that are alpha-1,3 is at least about 50%, 60%, 70%, 80%, 90%, 95%, 96%, 97%, 98%, 99%, or 100% (or any integer between 50% and 100%). In such embodiments, accordingly, the compound has less than about 50%, 40%, 30%, 20%, 10%, 5%, 4%, 3%, 2%, 1%, or 0% (or any integer value between 0% and 50%) of glycosidic linkages that are not alpha-1,3.

The backbone of a poly alpha-1,3-glucan ether compound herein is preferably linear/unbranched. In certain embodiments, the compound has no branch points or less than about 10%, 9%, 8%, 7%, 6%, 5%, 4%, 3%, 2%, or 1% branch points as a percent of the glycosidic linkages in the polymer. Examples of branch points include alpha-1,6 branch points.

In certain embodiments, the formula of a poly alpha-1,3-glucan ether compound can have an n value of at least 6. Alternatively, n can have a value of at least 25, 50, 75, 100, 150, 200, 250, 300, 350, 400, 450, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, or 4000 (or any integer between 25 and 4000), for example. The value of n in still other examples can be in a range of 25-250, 50-250, 75-250, 100-250, 150-250, 200-250, 25-200, 50-200, 75-200, 100-200, 150-200, 25-150, 50-150, 75-150, 100-150, 25-100, 50-100, 75-100, 25-75, 50-75, or 25-50.

The molecular weight of a poly alpha-1,3-glucan ether compound can be measured as number-average molecular weight (Mₙ) or as weight-average molecular weight (M_{w}). Alternatively, molecular weight can be measured in Daltons or grams/mole. It may also be useful to refer to the DP_{w} (weight average degree of polymerization) or DPₙ (number average degree of polymerization) of the poly alpha-1,3-glucan polymer component of the compound.

The Mₙ or M_{w} of a poly alpha-1,3-glucan ether compound useful in polyurethane polymers may be at least about 1000. Alternatively, the Mₙ or M_{w} can be at least about 1000 to about 600000. Alternatively still, the Mₙ or M_{w} can be at least about 2000, 3000, 4000, 5000, 6000, 7000, 8000, 9000, 10000, 15000, 20000, 25000, 30000, 35000, 40000, 45000, 50000, 75000, 100000, 150000, 200000, 250000, 300000, 350000, 400000, 450000, 500000, 550000, or 600000 (or any integer between 2000 and 600000), for example.

Each R group in the formula of the poly alpha-1,3-glucan ether compound can independently be an H or an organic group. An organic group may be an alkyl group such as a methyl, ethyl, propyl, butyl, pentyl, hexyl, heptyl, octyl, nonyl, or decyl group, for example.

Alternatively, an organic group may be a substituted alkyl group in which there is a substitution on one or more carbons of the alkyl group. The substitution(s) may be one or more hydroxyl, aldehyde, ketone, and/or carboxyl groups. For example, a substituted alkyl group may be a hydroxy alkyl group, dihydroxy alkyl group, or carboxy alkyl group.

Examples of suitable hydroxy alkyl groups are hydroxymethyl (-CH₂OH), hydroxyethyl (e.g., -CH₂CH₂OH, -CH(OH)CH₃), hydroxypropyl (e.g., -CH₂CH₂CH₂OH, -CH₂CH(OH)CH₃, -CH(OH)CH₂CH₃), hydroxybutyl and hydroxypentyl groups. Other examples include dihydroxy alkyl groups (diols) such as dihydroxymethyl, dihydroxyethyl (e.g., -CH(OH)CH₂OH), dihydroxypropyl (e.g., -CH₂CH(OH)CH₂OH, -CH(OH)CH(OH)CH₃), dihydroxybutyl and dihydroxypentyl groups.

Examples of suitable carboxy alkyl groups are carboxymethyl (-CH₂COOH), carboxyethyl (e.g., -CH₂CH₂COOH, -CH(COOH)CH₃), carboxypropyl (e.g., -CH₂CH₂CH₂COOH, -CH₂CH(COOH)CH₃, -CH(COOH)CH₂CH₃), carboxybutyl and carboxypentyl groups.

Alternatively still, one or more carbons of an alkyl group can have a substitution(s) with another alkyl group. Examples of such substituent alkyl groups are methyl, ethyl and propyl groups. To illustrate, an R group can be -CH(CH₃)CH₂CH₃ or -CH₂CH(CH₃)CH₃, for example, which are both propyl groups having a methyl substitution.

As should be clear from the above examples of various substituted alkyl groups, a substitution (e.g., hydroxy or carboxy group) on an alkyl group in certain embodiments may be bonded to the terminal carbon atom of the alkyl group, where the terminal carbon group is opposite the terminus that is in ether linkage to the glucose group in the above formula. An example of this terminal substitution is the hydroxypropyl group -CH₂CH₂CH₂OH. Alternatively, a substitution may be on an internal carbon atom of an alkyl group. An example on an internal substitution is the hydroxypropyl group -CH₂CH(OH)CH₃. An alkyl group can have one or more substitutions, which may be the same (e.g., two hydroxyl groups [dihydroxy]) or different (e.g., a hydroxyl group and a carboxyl group).

Poly alpha-1,3-glucan ether compounds in certain embodiments may contain one type of organic group. For example, one or more R groups ether-linked to the glucose group in the above formula may be a methyl group; the R groups in this particular example would thus independently be hydrogen and methyl groups. Certain embodiments of poly alpha-1,3-glucan ether compounds containing only one type of organic group do not have a carboxy alkyl group (e.g., carboxymethyl group) as the organic group.

Alternatively, poly alpha-1,3-glucan ether compounds can contain two or more different types of organic groups. Examples of such compounds contain (i) two different alkyl groups as R groups, (ii) an alkyl group and a hydroxy alkyl group as R groups (alkyl hydroxyalkyl poly alpha-1,3-glucan, generically speaking), (iii) an alkyl group and a carboxy alkyl group as R groups (alkyl carboxyalkyl poly alpha-1,3-glucan, generically speaking), (iv) a hydroxy alkyl group and a carboxy alkyl group as R groups (hydroxyalkyl carboxyalkyl poly alpha-1,3-glucan, generically speaking), (v) two different hydroxy alkyl groups as R groups, or (vi) two different carboxy alkyl groups as R groups. Specific non-limiting examples of such compounds include ethyl hydroxyethyl poly alpha-1,3-glucan (i.e., where R groups are independently H, ethyl, or hydroxyethyl), hydroxyalkyl methyl poly alpha-1,3-glucan (i.e., where R groups are independently H, hydroxyalkyl, or methyl), carboxymethyl hydroxyethyl poly alpha-1,3-glucan (i.e., where R groups are independently H, carboxymethyl, or hydroxyethyl), and carboxymethyl hydroxypropyl poly alpha-1,3-glucan (i.e., where R groups are independently H, carboxymethyl, or hydroxypropyl). Certain embodiments of poly alpha-1,3-glucan ether compounds containing two or more different types of organic groups do not have a carboxy alkyl group (e.g., carboxymethyl group) as one of the organic groups.

In one embodiment, the poly alpha-1,3-glucan ether compound comprises hydroxypropyl poly alpha-1,3-glucan. In another embodiment, the poly alpha-1,3-glucan ether compound comprises hydroxyethyl poly alpha-1,3-glucan. In a further embodiment, the poly alpha-1,3-glucan ether compound comprises carboxymethyl poly alpha-1,3-glucan.

Poly alpha-1,3-glucan ether compounds can be prepared by contacting poly alpha-1,3-glucan under alkaline conditions with at least one etherification agent comprising an organic group, as disclosed in US Patent 9,139,718. Etherification agents can include dialkyl sulfates, dialkyl carbonates, alkyl halides, alkyl triflates, and alkyl fluorosulfonates. Etherification agents suitable for preparing a hydroxyalkyl poly alpha-1,3-glucan ether include alkylene oxides, such as ethylene oxide, propylene oxide, butylene oxide, or combinations thereof.

In a further embodiment, the polysaccharide comprises an enzymatically-produced polysaccharide. Examples of enzymatically-produced polysaccharide include poly alpha-1,3-glucan; poly alpha-1,3-1,6-glucan; and water insoluble alpha-(1,3-glucan) polymer having 90% or greater α-1,3-glycosidic linkages, less than 1% by weight of alpha-1,3,6-glycosidic branch points, and a number average degree of polymerization in the range of from 55 to 10,000. Enzymatic methods for the production of poly alpha-1,3-glucan are described in U.S. Patent Nos. 7,000,000; 8,642,757; and 9,080195, for example. Enzymatic production of poly alpha-1,3-1,6-glucan is disclosed in United States Patent Application Publication 2015/0232785 A1.

In one embodiment, the polyurethane polymer comprises a) at least on polyisocyanate; b) poly alpha-1,3-glucan; and c), optionally, at least one polyol.

In another embodiment, the polyurethane polymer comprises:
a) at least one polyisocyanate;
b) a polysaccharide comprising:
   i) poly alpha-1,3-glucan;
   ii) a poly alpha-1,3-glucan ester compound with a degree of substitution of about 0.05 to about 3.0;
   iii) poly alpha-1,3-1,6-glucan; or
   iv) water insoluble alpha-(1,3-glucan) polymer having 90% or greater α-1,3-glycosidic linkages, less than 1% by weight of alpha-1,3,6-glycosidic branch points, and a number average degree of polymerization in the range of from 55 to 10,000; and
c) optionally, at least one polyol.

In a further embodiment, the polyurethane polymer comprises:
a) at least one polyisocyanate;
b) a polysaccharide comprising:
   i) poly alpha-1,3-glucan;
   ii) a poly alpha-1,3-glucan ester compound with a degree of substitution of about 0.05 to about 3.0;
   iii) poly alpha-1,3-1,6-glucan;
   iv) water insoluble alpha-(1,3-glucan) polymer having 90% or greater α-1,3-glycosidic linkages, less than 1% by weight of alpha-1,3,6-glycosidic branch points, and a number average degree of polymerization in the range of from 55 to 10,000; or
   v) a composition comprising a poly alpha-1,3-glucan ester compound represented by the structure: 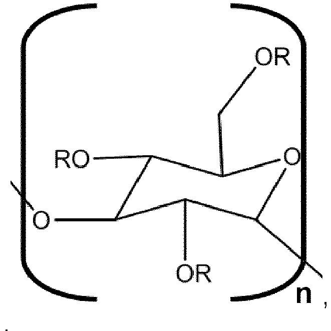 wherein
      (A) n is at least 6;
      (B) each R is independently an -H or a first group comprising -CO-Cₓ-COOH, wherein the -Cₓ- portion of said first group comprises a chain of 2 to 6 carbon atoms; and
      (C) the compound has a degree of substitution with the first group of about 0.001 to about 0.1; and
c) optionally, at least one polyol.

In an additional embodiment, the polyurethane polymer comprises:
a) at least one polyisocyanate;
b) a polysaccharide comprising:
   i) poly alpha-1,3-glucan;
   ii) poly alpha-1,3-glucan ester compound represented by Structure I: 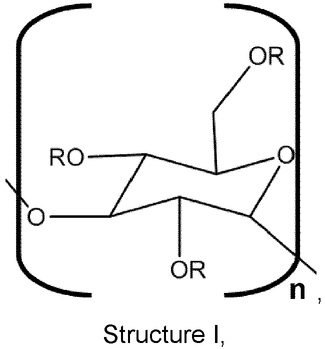 wherein
      (A) n is at least 6;
      (B) each R is independently an -H or an acyl group; and
      (C) the compound has a degree of substitution of about 0.05 to about 3.0;
   iii) poly alpha-1,3-1,6-glucan;
   iv) water insoluble alpha-(1,3-glucan) polymer having 90% or greater alpha-1,3-glycosidic linkages, less than 1% by weight of alpha-1,3,6-glycosidic branch points, and a number average degree of polymerization in the range of from 55 to 10,000;
   v) a poly alpha-1,3-glucan ester compound represented by Structure II: 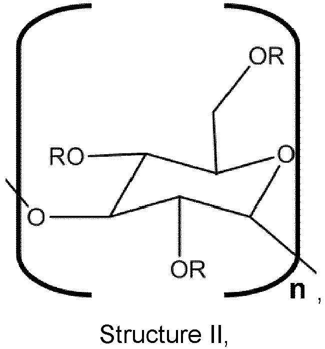 wherein
      (D) n is at least 6;
      (E) each R is independently an -H or a first group comprising -CO-Cₓ-COOH, wherein the -Cₓ- portion of said first group comprises a chain of 2 to 6 carbon atoms; and
      (F) the compound has a degree of substitution with the first group of about 0.001 to about 0.1; or
   vi) a poly alpha-1,3-glucan ether compound represented by Structure III: 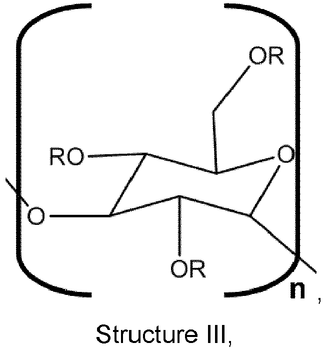 wherein
      (G) n is at least 6;
      (H) each R is independently an -H or an organic group; and
      (J) the ether compound has a degree of substitution of about 0.05 to about 3.0; and
c) optionally, at least one polyol.

The polysaccharide is present in the polyurethane polymer at an amount in the range of from about 0.1 weight percent to about 50 weight percent, based on the total weight of the polyurethane polymer. In some embodiments, the polysaccharide is present in the polyurethane polymer at an amount of about 0.1, 0.5, 1, 2, 3, 4, 5, 6, 7, 8, 9, 10, 15, 20, 25, 30, 35, 40, 45, 50, 0.1-1, 0.1-5, 0.1-10, 1-5, 5-10, 5-15, 5-20, 5-25, 5-30, 10-20, 10-30, 10-40, 10-50, 20-30, 20-40, 20-50, 15-25, 25-35, 25-50, or 40-50 weight percent, based on the total weight of the polyurethane polymer.

The at least one polyol can be any polyol comprising two or more hydroxyl groups, for example, a C₂ to C₁₂ alkane diol, ethylene glycol, 1,2-propylene glycol, 1,3-propylene glycol, isomers of butane diol, pentane diol, hexane diol, heptane diol, octane diol, nonane diol, decane diol, undecane diol, dodecane diol, 2-methyl-1,3-propane diol, 2,2-dimethyl-1,3-propane diol (neopentyl glycol), 1,4-bis(hydroxymethyl)cyclohexane, 1,2,3-propane triol (glycerol), 2-hydroxymethyl-2-methyl-1,3-propanol (trimethylolethane), 2-ethyl-2-hydroxymethyl-1,3-propanediol (trimethylolpropane), 2,2-bis(hydroxymethyl)-1,3-propane diol (pentaerythritol); polymeric polyols, for example, polyether polyols, polyester polyols or combinations thereof. In some embodiments, the polyol can be poly(oxytetramethylene) glycol, polyethylene glycol, poly 1,3-propane diol. Polyester polyols can also be used. Polyester polyols are well-known in the art and are typically produced by the transesterification of aliphatic diacids with aliphatic diols. Suitable aliphatic diacids can include, for example, C₃ to C₁₀ diacids, malonic acid, succinic acid, glutaric acid, adipic acid, pimelic acid, suberic acid, azelic acid, sebacic acid. In some embodiments, aromatic and/or unsaturated diacids can also be used to form the polyester polyols. While the diacids are specifically named, it is common to use esters or dihalides of the diacids in order to form the desired polyester polyols. Any of the above mentioned polyols, especially diols can be used to form the polyester polyols. Combinations of any of the above polyols can also be used.

In some embodiments, the polyurethane can further comprise one or more one or more amines; and/or one or more hydroxy acids. In some embodiments, the polyurethane polymer can further comprise at least one of a second polyol comprising at least one hydroxy acid. Suitable amines can include, for example, 1,2-ethylenediamine, diethylenetriamine, triethylenetetramine, dipropyltriamine, hexamethylenediamine, isophorone diamine, N-(2-aminoethyl)-2-aminoethanol or a combination thereof. Suitable hydroxyacids can include, for example, 2,2-dimethylolpropionic acid, 2-hydroxymethyl-3-hydroxypropanoic acid, 2-hydroxymethyl-2-methyl-3-hydroxypropanoic acid, 2-hydroxymethyl-2-ethyl-3-hydroxypropanoic acid, 2-hydroxymethyl-2-propyl-3-hydroxypropanoic acid, citric acid, tartaric acid, or a combination thereof. In some embodiments, the hydroxy acids are useful for incorporation into the polyurethane wherein the carboxylic acid groups are subsequently neutralized using an amine, for example, triethyl amine, N,N-dimethylethanolamine, N-methyldiethanolamine, triethanolamine, N,N-dimethylisopropanolamine, N-methyldiisopropanolamine, triisopropylamine, N-methylmorpholine, N-ethylmorpholine, ammonia to form a quaternary ammonium salt. The presence of the quaternary ammonium salt can help to disperse the polyurethane in an aqueous solvent. The neutralization amines, if used, can be added during the formation of the isocyanate functional prepolymer, or after the formation of the isocyanate functional prepolymer.

In an additional embodiment, the polyurethane polymer further comprises a polyetheramine. Mixtures of two or more polyetheramines can also be used. Useful polyetheramines include monoamines, diamines, and triamines having polyether backbones. The polyether backbones can be based on, for example, ethylene oxide, propylene oxide, a mixture of ethylene oxide and propylene oxide, poly(tetramethylene ether glycol, or poly(tetramethylene ether glycol)/(polypropylene glycol) copolymers. The polyetheramines can have molecular weights in the range of from about 200 g/mole to about 5000 g/mole, or higher. Polyetheramines can be prepared by methods known in the art or obtained commercially, for example from the JEFFAMINE^{®} product line from Huntsman.

In one embodiment, the polyurethane polymer comprises a polyetheramine in an amount of from about 0 to 80 weight percent (wt%), based on the total weight of the polyurethane polymer. In another embodiment, the polyurethane polymer comprises a polyetheramine in an amount of from 1 to 60 weight percent. In yet another embodiment, the polyurethane polymer comprises 1 wt%, 2 wt%, 3 wt%, 4 wt%, 5 wt%, 6 wt%, 7 wt%, 8 wt%, 9 wt%, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, or 80 wt% (or any value between 0 and 80) of polyetheramine.

Catalysts can be added to aid the formation of the polyurethanes. Suitable catalysts can include, for example, dibutyltin oxide, dibutyltin dilaurate, triethylamine, tin(II) octoate, dibutyltin diacetate, stannous chloride, dibutyltin di-2-ethyl hexanoate, stannous oxide, 1,4-diazabicyclo[2.2.2]octane, 1,4-diazabicyclo[3.2.0]-7-nonene, 1,5-diazabicyclo[5.4.0]-7-undecene, N-methylmorpholine, N-ethylmorpholine, diethylethanolamine, 1-methyl-4-dimethylaminoethylpiperazine, methoxypropyldimethylamine, N,N,N'-trimethylisopropyl propylenediamine, 3-diethylaminopropyldiethylamine, dimethylbenzylamine, or a combination thereof.

Polyurethanes comprising the polysaccharide can be produced in a variety of ways, resulting in compositions that can produce foams, films, coatings, and molding compositions. The components comprising the at least one polyisocyanate, the polysaccharide and the optional at least one polyol can be mixed all at once, they can be added portionwise, or they can be added sequentially. In other embodiments, the polyurethanes can be produced by first forming an isocyanate functional prepolymer. The isocyanate functional prepolymer can be produced by contacting a polyisocyanate with at least one polyol and choosing a high NCO:OH ratio, for example, an NCO:OH ratio in the range of from 1.5:1 to 2.5:1. The at least one polyisocyanate can be contacted with the at least one polyol in order to form the isocyanate functional prepolymer. The isocyanate functional prepolymer will have two or more isocyanate functional groups per molecule. The step of contacting can be conducted at temperatures in the range of from 20°C to 150°C in the presence or absence of a solvent. The solvent can be water, an organic solvent, or a combination thereof. If desired, one or more of the amines and/or hydroxyacids can be added during the contacting step.

If desired, a water dispersible isocyanate functional prepolymer can be formed. To form a water dispersible isocyanate functional prepolymer, the at least one polyol can include hydroxyacids, for example, any of those described above. In one embodiment, the hydroxy acid can be 2,2-dimethylolpropionic acid. After formation of the isocyanate functional prepolymer, the carboxylic acid group can be neutralized with an amine or a base, for example, metal hydroxides, metal carbonates, lithium hydroxide, sodium hydroxide or potassium hydroxide, and after neutralization, water can be added and mixed thoroughly to form an aqueous dispersion of the isocyanate functional prepolymer.

The isocyanate functional prepolymer can be contacted with the polysaccharide to form the desired polyurethane. The polysaccharide can be added as a dry powder, or as a wet cake, and then thoroughly agitated to form the desired polyurethane as a dispersion in the aqueous or organic solvent.

Polyurethane compositions comprising the polyurethane polymer can be formed, wherein the polyurethane composition further comprises a solvent. In some embodiments, the solvent is water, an organic solvent, or a combination thereof. Useful organic solvents can include acetone, methyl ethyl ketone, butyl acetate, tetrahydrofuran, methanol, ethanol, isopropanol, diethyl ether, hexane, toluene, dimethyl acetamide, dimethylformamide, and dimethyl sulfoxide. In some embodiments, useful organic solvents include polyether amines, polyether glycols, and mixtures thereof. In some embodiments, the polyurethane compositions comprise aqueous dispersions of the polyurethane polymer. In some embodiments, the polyurethane compositions comprise non-aqueous dispersions of the polyurethane polymer.

The polyurethane polymers and compositions can be used in a variety of applications, for example as adhesives, coatings, film, and/or foams.

Polyurethane foams can be produced by mixing the polyisocyanates with the polysaccharide, the at least one polyols and catalyst under high shear mixing conditions in water and/or using a blowing agent. Foams can typically be made at room temperature although elevated temperatures can be used, if desired.

The polysaccharide-containing polyurethane polymers and compositions disclosed herein can be used to coat fibrous substrates, such as fabrics, for example to provide waterproof clothing which has good water impermeability and improved water vapor transmission rates, and improved comfort for the wearer. In one embodiment, a coated fibrous substrate comprising a fibrous substrate having a surface, wherein the surface comprises a coating comprising a polyurethane polymer as disclosed herein on at least a portion of the surface, is disclosed. Fibrous substrates can include fibers, yarns, fabrics, fabric blends, textiles, nonwovens, paper, leather, and carpets. In one embodiment, the fibrous substrate is a fiber, a yarn, a fabric, a textile, or a nonwoven. The fibrous substrates can contain natural or synthetic fibers, including cotton, cellulose, wool, silk, rayon, nylon, aramid, acetate, acrylic, jute, sisal, sea grass, coir, polyamide, polyester, polyolefin, polyacrylonitrile, polypropylene, polyaramid, or blends thereof. By "fabric blends" is meant fabric made of two or more types of fibers. Typically, these blends are a combination of at least one natural fiber and at least on synthetic fiber, but also can include a blend of two or more natural fibers or of two or more synthetic fibers. Nonwoven substrates include, for example, spun-laced nonwovens such as SONTARA^{®} available from DuPont and spun-bonded-meltblown-spunbonded nonwovens.

Unless otherwise defined, all technical and scientific terms used herein have the same meaning as commonly understood by one of ordinary skill in the art. Although methods and materials similar or equivalent to those described herein can be used in the practice or testing of embodiments of the disclosed compositions, suitable methods and materials are described below. In addition, the materials, methods, and examples are illustrative only and not intended to be limiting.

In the foregoing specification, the concepts have been disclosed with reference to specific embodiments. However, one of ordinary skill in the art appreciates that various modifications and changes can be made without departing from the scope of the invention as set forth in the claims below.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all embodiments.

### EXAMPLES

Unless otherwise noted, all ingredients are available from The Sigma-Aldrich Company, St. Louis, Missouri.

Poly-G 85-29 polyether triol is available from Arch Chemicals, INC., Norwalk, Connecticut.

VORANOL^{™} VORACTIV 6340 polyether polyol and SPECFLEX^{™} polyol are available from Dow Chemicals, Inc., Midland, Michigan.

TEGOSTAB^{®} B4690 silicone surfactants are available from Evonik Industries, Hopewell, Virginia.

LUMULSE^{™} POE 26 polyol is available from Lambent Technologies, Gurnee, Illinois.

DABCO^{®} 33LV and DABCO^{®} T-12 catalysts are available from Air Products, Allentown, Pennsylvania.

LUPRANATE^{®} TD 80 toluene diisocyanate is available from BASF Polyurethanes North America, Wyandotte, Michigan.

TERATHANE^{®} 2000 poly(oxytetramethylene) glycol is available from INVISTA, Wilmington, Delaware.

FORMEZ^{®} 44-56 (2000MW butanediol-adipate polyester polyol) is available from Chemtura, Philadelphia, Pennsylvania.

The abbreviation "Comp. Ex." Means Comparative Example. The abbreviation "PU" means polyurethane. The abbreviation "MDI" means methylene diphenyl diisocyanate.

### Representative Preparation of Poly Alpha-1,3-Glucan

Poly alpha-1,3-glucan can be prepared using a gtfJ enzyme preparation as described in U.S. Patent No. 7,000,000; U.S. Patent Appl. Publ. No. 2013/0244288, now U.S. Patent No. 9,080,195; and U.S. Patent Appl. Publ. No. 2013/0244287, now U.S. Patent No. 8,642,757.

Poly alpha-1,3-glucan polymer can be synthesized, and wet cake thereof prepared, following the procedures disclosed in U.S. Patent Appl. Publ. No. 2014/0179913, now U.S. Patent No. 9,139,718 (see Example 12 therein, for example).

### Preparation of Comparative Polyurethane Dispersion A

46.8 grams of isophorone diisocyanate was added to a reaction vessel equipped with a stirrer, a nitrogen blanket and heated to 75°C. A mixture of 100 grams of TERATHANE^{®} 2000 poly(oxytetramethylene) glycol and 6.7 grams of 2,2-dimethylolpropionic acid was added to the reaction vessel in several portions. 0.045 grams of DABCO^{®} T-12 catalyst, available from Air Products, Allentown, Pennsylvania, was added to the reaction mixture. The reaction was held at 80°C for 1.5 hours to form an isocyanate functional prepolymer.

The reaction mixture was cooled to 60°C and the carboxylic acid group was neutralized with 5.17 grams of triethylamine. This mixture was then allowed to cool to 40°C. 245 grams of water was then added. dropwise with vigorous stirring. The mixture was stirred for 20 minutes to give an isocyanate functional prepolymer.

After cooling the reaction mixture comprising the isocyanate functional prepolymer to room temperature, 6.65 grams of ethylene diamine was added in several portions. The mixture was stirred at room temperature for 30 minutes to form the polyurethane dispersion, Comparative A.

### Preparation of Polyurethane-glucan dispersion #1

46.8 grams of isophorone diisocyanate was added to a reaction vessel equipped with a stirrer, a nitrogen blanket and heated to 75°C. A mixture of 100 grams of FORMEZ^{®} 44-56 (2000MW butanediol-adipate polyester polyol) and 6.7 grams of 2,2-dimethylolpropionic acid was added to the reaction vessel in several portions. 0.045 grams of DABCO^{®} T-12 dibutyl tin dilaurate, available from Air Products, Allentown, Pennsylvania, was added to the reaction mixture. The reaction was held at 80°C for 1.5 hours to form an isocyanate functional prepolymer.

The reaction mixture was cooled to 60°C and the carboxylic acid group was neutralized with 5.14 grams of triethylamine. This mixture was then allowed to cool to 40°C. A slurry of glucan was produced by mixing 109.9 grams of the glucan wet cake with 366.7 grams of water. This slurry was added dropwise with vigorous stirring to the neutralized polyurethane mixture. The mixture was stirred for 20 minutes.

After cooling the reaction mixture to room temperature, 6.81 grams of ethylene diamine was added in several portions. The mixture was stirred at room temperature for 30 minutes to form dispersion #1.

### Preparation of Polyurethane-glucan dispersion #2

46.8 grams of isophorone diisocyanate was added to a reaction vessel equipped with a stirrer, a nitrogen blanket and heated to 75°C. A mixture of 100 grams of TERATHANE^{®} 2000 poly(oxytetramethylene) glycol and 6.7 grams of 2,2-dimethylolpropionic acid was added to the reaction vessel in several portions. 0.046 grams of DABCO^{®} T-12 catalyst was added to the reaction mixture. The reaction was held at 80°C for 1.5 hours to form an isocyanate functional prepolymer.

The reaction mixture was cooled to 60°C and the carboxylic acid group was neutralized with 5.12 grams of triethylamine. This mixture was then allowed to cool to 40°C. A slurry of glucan was produced by mixing 109.9 grams of the glucan wet cake with 366.7 grams of water. This slurry was added dropwise with vigorous stirring to the neutralized polyurethane mixture. The mixture was stirred for 20 minutes.

After cooling the reaction mixture to room temperature, 6.73 grams of ethylene diamine was added in several portions. The mixture was stirred at room temperature for 30 minutes to form dispersion #2.

### Preparation of Polyurethane-glucan dispersion #3

The alkalinity of Dispersion #1 was adjusted by adding 0.42 grams of solid potassium hydroxide to 33 grams of Dispersion #1. The pH of the dispersion #3 was 14.

### Preparation of Polyurethane-glucan dispersion #4

The alkalinity of Dispersion #2 was adjusted by adding 0.21 grams of solid potassium hydroxide to 33 grams of Dispersion #1. The pH of the dispersion #3 was 11.5.

### Preparation of films and coatings

Films were prepared from each of the polyurethane dispersions by coating the aqueous dispersions onto a polypropylene substrate using a doctor blade. After drying at room temperature for 3 days, the films were removed from the polypropylene substrate, to give film #1, film #2, film #3, film #4, and comparative film A, from dispersions #1, #2, #3, #4 and Comparative A, respectively.

Coatings of the dispersions were prepared by coating each of the aqueous polyurethane dispersions onto a steel substrate panel (S-46, available from Q-Lab Corporation, Westlake, Ohio) using a doctor blade to give coating #1, coating #2, coating #3, coating #4 and comparative coating A, respectively. The coatings were dried at room temperature for three days prior to testing.

Various properties of the films and the coatings were analyzed. The testing methods and the results are summarized in Table 1. The testing was performed at room temperature, 50°C and at 70°C. The ability of the polyurethane dispersions to act as adhesives were determined according to ASTM D3359-97 (Adhesion tape test) and D1002 (Lap shear of adhesively bonded metal). In the lap shear test, 0.2 grams of the polyurethane dispersions was applied to aluminum plates (AR-14, Al plates, available from Q-Lab) and spread over a ½ inch by 1 inch (approximately 1.3 cm x 2.5 cm) bind area. Two plates were then clamped together over the bond area and allowed to dry at room temperature for 3 days before testing the adhesion strength.

**TABLE 1**

| | Film #1 | Film #2 | Film #3 | Film #4 | Film A |
|---|---|---|---|---|---|
| Appearance (qualitative rating) | Clear/Hazy | Hazy | Clear/Hazy | Hazy | Clear |
| Tensile Strength (MPa) @RT | 45.3±3.1 | 28.5±1.9 | 42.0±7.2 | 15.5±1.6 | 21.8±2.4 |
| Elongation at Break (%) @ RT | 111 ± 55 | 70 ± 21 | 193 ± 36 | 84 ± 27 | 339 ± 32 |
| Tensile Stress @ 20% elongation (MPa) and RT | 35.1 ± 3.1 | 23.3 ± 2.3 | 20.8 ± 2.3 | 12.4 ± 2.0 | 8.82 ± 1.5 |
| Tensile Stress @ 100% elongation (MPa) and RT | 42.4 ± 2.7 | NT | 28.6 ± 3.4 | 13.7 ± 2.2 | 10.3 ± 1.5 |
| Gouge Hardness, ASTM D3363 | 4H | H | B | 4H | 4H |
| Adhesion tape Test, ASTM D3359-97 | 5A | 5A | 4A | 5A | 5A |
| Adhesion, Load at break, kgf | 145 ± 10 | 96.6 ± 7.7 | 79.4 ± 15 | 54.0 ± 20 | 103 ± 14 |
| Adhesion, Load at failure, kg/cm² | 39.7 ± 3.5 | 25.3 ± 2.2 | 21.4 ± 5.8 | 15.4 ± 6.6 | 29.7 ± 4.4 |
| Load at Failure, N/mm2 | 3.90 ± 0.34 | 2.48 ± 0.22 | 2.10 ± 0.57 | 1.51 ± 0.65 | 2.92 ± 0.43 |
| Elongation at break, % | 4.8 ± 0.3 | 4.1 ± 0.3 | 3.7 ± 0.8 | 3.2 ± 0.9 | 4.7 ± 0.4 |
| MEK solvent resistance (% wt gain) | Gel | Gel | nt | nt | 513.5 |
| Toluene solvent resistance (% wt gain) | 50.6 | 71.3 | nt | nt | 403.4 |
| 0.1N NaOH solvent resistance (% wt gain) | Sample disintegrated | Sample disintegrated | nt | nt | Sample disintegrated |
| 0.1N HCI solvent resistance (% wt gain) | 43.4 | 100.4 | nt | nt | 9.41 |

nt means not tested.

The results in Table 1 show that incorporation of glucan provides higher tensile, adhesion, and hardness properties in most Examples.

### Preparation of Free-Rise Polyurethane Foams Containing Glucan

Foams were prepared by mixing the ingredients of Table 2 using a high-torque mixer (Craftsman 10-inch drill Press model No. 137.219000) at 3,100 revolutions per minute (rpm). The components were mixed using the high torque mixer for 5-7 seconds. After mixing, the composition was transferred to a polyethylene container (about 34cm x 21cm x 11.7cm) and allowed to free-rise. After the foams had risen, they were placed in an air-circulated oven preheated to 75°C for 30 minutes. The foams were then removed from the oven and aged for at least one week prior to testing.

Dry poly alpha-1,3-glucan was produced by drying a poly alpha-1,3-glucan wet cake overnight in a drying oven set to 60°C. The water content of the dry poly alpha-1,3-glucan was estimated to be 1% by weight.

**TABLE 2**

| | Foam #1 | Foam #2 | Foam #3 | Foam #4 | Comparative Foam A |
|---|---|---|---|---|---|
| Poly-G 85-29 | 33.5 | 33.5 | 33.5 | 33.5 | 33.5 |
| VORANOL ^{™} Voaractive 6340 | 30 | 30 | 30 | 30 | 30 |
| SPECFLEX^{™} NC701 | 30 | 30 | 30 | 30 | 30 |
| Dry Poly alpha-1,3-glucan | 5 | 10 | 15 | 20 | 0 |
| Water | 2.75 | 2.70 | 2.65 | 2.60 | 3.0 |
| LUMULSE^{™} POE 26 | 3 | 3 | 3 | 3 | 3 |
| TEGOSTAB^{®} B 4690 | 1 | 1 | 1 | 1 | 1 |
| DABCO^{®} 33LV | 1 | 1 | 1 | 1 | 1 |
| Diethanol amine | 1.5 | 1.5 | 1.5 | 1.5 | 1.5 |
| LUPRANATE^{®} TD80 | 34.71 | 34.71 | 34.71 | 34.71 | 34.71 |

The tensile properties of the foams were measured according to ASTM D3574. Compression Force Deflection (CFD) was measured using an Instron Mechanical tester at 25%, 50% and 65% deflection. Both CFD and tensile strength were measured parallel to foam rise. Testing results are shown in Table 3.

**TABLE 3**

| | Foam #1 | Foam #2 | Foam #3 | Foam #4 | Comparative Foam A |
|---|---|---|---|---|---|
| Density (kg/m²) | 37.8 ± 1.3 | 38.8 ± 1.4 | 39.1 ±1.0 | 40.7 ± 0.6 | 37.0 ± 1.3 |
| Resilience, ball rebound (%) | 66.26 ± 0.58 | 65.65 ± 0.43 | 64.74 ± 0.58 | 63.41 ± 0.43 | 68.29 ± 0.77 |
| CFD @ 25% (kg/m²) | 119 ± 14 | 162 ± 21 | 169 ± 21 | 260 ± 21 | 105 ± 7 |
| CFD @ 50% (kg/m²) | 218 ± 7 | 267 ± 28 | 281 ± 21 | 380 ± 21 | 183 ± 7 |
| CFD @ 65% (kg/m²) | 408 ± 35 | 464± 42 | 478 ± 28 | 590 ± 63 | 337 ± 28 |
| Tensile Strength, (kPa) | 64.7 ± 5.4 | 63.8 ± 6.5 | 75.0 ± 5.3 | 72.5 ± 10 | 76.19 ± 81 |
| Elongation at break (%) | 128 ± 8 | 117 ± 4 | 80 ± 5 | 107 ± 8 | 150 ± 7 |

The results in Table 3 show that free-rise foams using poly alpha-1,3-glucan gave properties very similar to those of Comparative Foam A, which did not contain poly alpha-1,3-glucan. The results show incorporation of poly alpha-1,3-glucan while maintaining density, resilience, and increasing compression force deflection.

### Preparation of Polyurethane films

### Preparation of Polyurethane Aqueous Dispersion B

100 parts by weight (pbw) of FOMREZ^{®} 44-56 polyol and 6.7 pbw of dimethylol propionic acid were blended at 135°C. The mixture was allowed to cool to 80°C. This mixture was added in several portions to 46.4 parts by weight of isophorone diisocyanate. A small amount (0.047 pbw) of DABCO T-12 was added as a catalyst. The mixing was continued for 1.5 hours at 80°C. The isocyanate functional prepolymer was cooled to 60°C and triethyl amine 5.1 pbw, was added. After the addition of the triethyl amine, the mixture was cooled to 40°C. Water, 240 pbw, was then added dropwise with vigorous mixing. With this mixture at room temperature, ethylene diamine, 5.86 pbw, was then added in several portions under vigorous mixing to form the polyurethane aqueous dispersion.

### Preparation of aqueous glucan dispersion C

25 parts by weight (pbw) of the 33% glucan wet cake was dispersed in 76 pbw of distilled water. The mixture was blended for 60 seconds with a speed mixer. 25 pbw of this mixture was further diluted with 45 pbw of distilled water and mixed with a speed mixer for 60 seconds to form an aqueous glucan dispersion with a viscosity of 1250 cps.

### Preparation of polyurethane/glucan dispersions #5, #6, and #7

Several blends of the polyurethane aqueous dispersion and the aqueous glucan dispersions were prepared by mixing in a speed mixer (60 seconds at 2200 rpm) at room temperature. For polyurethane/glucan dispersion #5, 70 pbw of the polyurethane aqueous dispersion and 30 pbw of the aqueous glucan dispersion were used. For polyurethane/glucan dispersion #6, 60 pbw of the polyurethane aqueous dispersion and 40 pbw of the aqueous glucan dispersion were used. For polyurethane/glucan dispersion #7, 50 pbw of the polyurethane aqueous dispersion and 50 pbw of the aqueous glucan dispersion were used. The dispersions were stable at room temperature.

### Preparation of polyurethane/glucan dispersion #8.

100 parts by weight (pbw) of FOMREZ^{®} 44-56 polyol and 6.7 pbw of dimethylol propionic acid were blended at 135°C. The mixture was allowed to cool to 80°C. This mixture was added in several portions to 46.4 parts by weight of isophorone diisocyanate. A small amount (0.047 pbw) of DABCO T-12 was added as a catalyst. The mixing was continued for 1.5 hours at 80°C. The isocyanate functional prepolymer was cooled to 60°C and triethyl amine 5.1 pbw, was added. After the addition of the triethyl amine, the mixture was cooled to 40°C. Water, 240 pbw, was then added dropwise with vigorous mixing. 403 pbw of the aqueous glucan dispersion was then added dropwise with mixing. 5.51 pbw of ethylene diamine was then added with mixing and stirred for 30 minutes after the addition was complete.

### Preparation of films 5-8 and Comparative Films B and C

Films of polyurethane aqueous dispersion B, polyurethane/glucan dispersions 5-8 and the aqueous glucan dispersion were prepared by coating the dispersions onto a polypropylene panel using a doctor blade. Films were also prepared by coating each of the dispersions onto steel panels (Q-panel, S-46 steel panels) using a doctor blade. The films were allowed to dry at room temperature for 3 days prior to testing. Each film was tested for Tensile strength and elongation (ASTM D2370); water uptake (immersion in water at room temperature for 3 days); Hardness, Pencil Gauge hardness (ASTM D3363); Impact Resistance (ASTM D2794); Adhesion tape test (ASTM D3359-97, test method A, X-cut tape test, Scotch Magic tape, available from 3M). The results are found in Table 4.

In order to test the properties of the dispersions as adhesives, 0.2 grams of each dispersion was placed in an aluminum substrate (1 x 4 x 0.063 inches, Q-Lab, AR-14 panels) and spread over an area of ½ x 1 inch bond area. A second panel was placed over top of the dispersion and the two panels were clamped together and allowed to dry/condition at room temperature for three days prior to testing. The adhesion properties were measured using a Lap Shear test, ASTM D1002. Separate adhered panels were allowed to age at 38°C for 3 days at 95% humidity and tested. The results can be found on Table 5. The film resulting from the aqueous glucan dispersion C was very brittle and was not tested further.

**TABLE 4**

| | Film 5 | Film 6 | Film 7 | Film 8 | Comparative Film B |
|---|---|---|---|---|---|
| Appearance | Hazy | Hazy | Hazy | Clear to Hazy | Clear |
| Tensile Strength, kg/cm² | 418.1 ± 71.3 | 375.0 ± 56.9 | 321.3 ± 16.9 | 491.0 ± 51.6 | 435.7 ± 93.4 |
| Elongation at break, % | 363 ± 38 | 178 ± 54 | 208 ± 39 | 141 ± 45 | 411 ± 52 |
| Tensile Stress at 50% elongation, kg/cm² | 117 ± 14.7 | 229.4 ± 43.9 | 190.4 ± 20.4 | 364.3 ± 54.9 | 82.7 ± 23.5 |
| Tensile Stress at 100% elongation, kg/cm² | 146.0 ± 20.0 | 286.1 ± 57.7 | 232.6 ± 26.6 | 406.2 ± 62.2 | 105.7 ± 24.6 |
| Tensile Stress at 200% elongation, kg/cm² | 224.9 ± 34.5 | 322.4 ± 99.3 | 289.5 ± 3.1 | n/t | 178 ± 32.7 |
| Adhesion tape test | 5A | 5A | 5A | 5A | 5A |
| Impact resistance | No rupture from max height | No rupture from max height | No rupture from max height | No rupture from max height | No rupture from max height |

nt means not tested

Impact resistance was performed with a ½ inch (1.27 cm) indenter punch weight, and a 21lb (9.52 kg) drop weight; drop height was 49 inches (124.5 cm).

**TABLE 5**

| | Film 5 | Film 6 | Film 7 | Film 8 | Comparative Film B |
|---|---|---|---|---|---|
| Load at failure, Newton | 458 ± 98 | 787 ± 382 | 1249 ± 329 | 1601 ± 106 | 307 ± 67 |
| Elongation at failure, % | 2.5 ± 0.7 | 3.4 ± 0.8 | 4.3 ± 0.5 | 5.2 ± 0.2 | 1.3 ±0.3 |
| Type of failure | Cohesive | Cohesive | Cohesive | Cohesive | Cohesive |

| After Aging 3 days at 95% RH and 38°C | | | | | |
|---|---|---|---|---|---|
| Load at failure, Newton | 1289 ± 129 | 591 ± 151 | 1120 ± 173 | 1245 ± 173 | 1187 ± 138 |
| Elongation at failure, % | 4.3 ± 0.3 | 3.1 ± 0.8 | 4.2 ± 0.2 | 4.4 ± 0.3 | 4.4 ± 0.3 |

The results in Tables 4 and 5 show that incorporation of poly alpha-1,3-glucan into the polyurethane polymer provides higher tensile stress at 50, 100, and 200% elongation and load at failure, while maintaining adhesion and hardness.

### Preparation of Polyurethane/Glucan-Coated Fabrics

### Preparation of Polyurethane/Glucan Dispersions 9, 10, 11, 12, and Comparative Polyurethane Dispersions D and E

Two types of commercially available aqueous polyurethane dispersions were selected, Edolan SN which has some self-crosslinking properties and Edolan GS with Edolan XCI as crosslinker - see Table 6 for description of the ingredients. The following procedure was used to prepare polyurethane/glucan dispersions. For each dispersion prepared, the components used and their amounts are indicated in Table 7. Comparative dispersions D and E did not contain any glucan. Poly alpha-1,3-glucan (40 wt% wet cake powder, DP 800) was dispersed as a 10 wt% slurry in water (glucan dispersion) using a Dispermat ^{®} mixer at 6000 rpm until a thick, homogeneous dispersion was achieved. The glucan dispersion was then added to the polyurethane dispersion and the overall viscosity adjusted by adding Edolan XTP. The viscosity was adjusted to be about the same for all of Dispersions 9-12 and Comparative Dispersions D and E. The selected ratios of glucan to polyurethane polymer were 15/85 and 25/75 (see Table 7 for formulation details). The glucan could easily be dispersed in the dispersions with no dispersion instability issues.

**TABLE 6 - Description of Polyurethane Dispersions Used as Ingredients**

| Name of Ingredient | Edolan SN | Edolan GS | Edolan XTP | Edolan XCI | Respumit 3301 |
|---|---|---|---|---|---|
| Vendor | Tanatex Chemicals | Tanatex Chemicals | Tanatex Chemicals | Tanatex Chemicals | Tanatex Chemicals |
| Chemical Basis | aliphatic polyester based polyurethane, aqueous dispersion | aliphatic polyester based polyurethane, aqueous dispersion | Water soluble polyurethane thickener | Mixture of aliphatic polyisocyanates (formaldehyde free crosslinking agent) | Preparation of stearates and mineral oil, antifoam for aqueous coating |
| lonicity | Anionic | Anionic | Nonionic | Anionic | Nonionic |
| Form supplied | White liquid | White liquid | Viscous yellowish opalescent liquid | Yellowish liquid | Beige liquid |
| Density | (at 25 °C) 1.03 g/cm³ | (at 23 °C) 1 .1 g/cm³ | (at 23 °C) 1 g/cm³ | (at 23 °C) 1.16 g/m³ | (at 20 °C) 0.8-0.9 g/cm³ |
| Viscosity | (at 25 °C) 100 mPas | (at 23 °C) approx. 12 - 30 s, according to AFAM 2008/1050304-00 | 1500 - 2500 mPa s | (at 23 °C) approx. 2800 mPa s | (at 23 °C) approx. 500 mPa s |
| pH | (20 °C) approx 7-9 | (at 23 °C) approx. 7 | (at 10wt%) approx 6.5-7 | -- | -- |
| Dry solid | approx. 40% | approx. 50% | -- | -- | -- |

**TABLE 7 - Polyurethane/Glucan Formulations Used for Dispersions and Coatings**

| Dispersion | Coating | Edolan SN (g) | Glucan Dispersion (g) | Edolan XTP (g) | Respumit 3301 (g) | - |
|---|---|---|---|---|---|---|
| Comp. D | Comp. D | 200 | 0 | 3 | 0.6 | - |
| 9 | 9 | 150 | 150 | 4.44 | 1.05 | - |
| 10 | 10 | 200 | 140 | 3.4 | 1.02 | - |

| | | Edolan GS (g) | Glucan Dispersion (g) | Edolan XCI (g) | Edolan XTP (g) | Respumit 3301 (g) |
|---|---|---|---|---|---|---|
| Comp. E | Comp. E | 200 | 0 | 6 | 1.49 | 0.6 |
| 11 | 11 | 150 | 250 | 4.5 | 4.99 | 1.2 |
| 12 | 12 | 200 | 175 | 6 | 4.17 | 1.1 |

### Preparation and Evaluation of Coated Fabric Samples 9, 10, 11, 12 and Comparative Samples D and E

Each dispersion was coated onto an A4-sized W004 woven polyester fabric obtained from Concordia Textile. The coating unit was a labcoater from Mathis LTE-S. The substrate was blade-coated with the polyurethane/glucan dispersions using a 100 um blade coater. The coated fabric samples were than dried for 1 minute at 110 °C and cured for 2 minutes at 160 °C.

Each coated fabric sample was evaluated (according to the method shown in parentheses) for resistance to hydrostatic pressure/water penetration (EN 20811), water vapor transmission (ASTM E96) and abrasion resistance (EN 12947).

The hydrostatic head supported by a coated fabric sample is a measure of the opposition to the passage of water through the coated fabric. A specimen is subjected to a steadily increasing pressure of water on one face, under standard conditions, until penetration occurs in three places. The pressure at which the water penetrates the fabric at the third place is noted. The test was performed on the coated side.

The water vapor transmission rate (WVTR) was evaluated according to ASTM E96 at a temperature of 32°C and relative humidity of 50%. In the Desiccant Method the test specimen is sealed to the open mouth of a test dish containing a desiccant, and the assembly placed in a controlled atmosphere. Periodic weighing determines the rate of water vapor movement through the specimen into the desiccant.

The abrasion resistance of the coated fabric samples was evaluated according to EN 530, which determines the abrasion resistance of protective clothing materials. The abradant was sand paper (type F2). The applied pressure was 9 kPa. After 500 cycles the weight loss was determined.

**TABLE 8 - Water Permeability, Water Vapor Transmission Rate, and Abrasion Resistance Results for Coated Fabric Samples**

| Fabric Sample | with Coating | Hydrostatic pressure (mm) | Water vapor transmission (g/day/m²) | Abrasion resistance (weight loss %) |
|---|---|---|---|---|
| Comp. D | Comp. D | ≥1000 | 130 | 1.43 |
| 9 | 9 | ≥1000 | 280 | 1.96 |
| 10 | 10 | ≥1000 | 230 | 1.94 |
| Comp. E | Comp. E | ≥1000 | 40 | 0.03 |
| 11 | 11 | ≥1000 | 80 | 1.4 |
| 12 | 12 | ≥1000 | 80 | 0.97 |

The addition of glucan to the polyurethane formulation did not compromise water impermeability of the coated fabric, which is a key requirement for water proof coating. Also, with addition of glucan to the polyurethane formulation, the abrasion resistance of the coated fabric was minimally affected and remained at an acceptable level. While maintaining key performance metrics, fabrics with coatings containing a polyurethane/glucan dispersion showed significant increase in water vapor transmission rates relative to the Comparative Fabrics D and E which had 100% polyurethane-based coatings.

### Preparation of Visco-Elastic (Memory) Polyurethane/Glucan Foams

The raw materials used to prepare the visco-elastic foams are listed in Table 9. All materials other than glucan were used as received from suppliers.

Four samples of poly alpha-1,3-glucan were used to prepare polyurethane/glucan visco-elastic foams. All glucan samples were dried overnight at 60 °C before use.

Glucan #1 was wet cake, prepared as described herein above. Glucan #1 was used in the formulations and foams of Examples 13A-13F.

Glucan #2 and Glucan #3 were two different batches of ground wet cake. The wet cake was ground to a d50 of 5 microns using a fluidized bed jet mill. Glucan #2 was used in the formulations and foams of Examples 14A-14C and Examples 15A-15C.

Glucan #4 was wet cake that had been dried and sieved below 20 mesh. Glucan #4 was used in the formulations and foams of Examples 17A-17F.

Comparative Example F and Comparative Example G were polyurethane formulations and foams prepared without any glucan.

**TABLE 9**

| **Material** | **Description** | **Supplier** |
|---|---|---|
| **POLYOLS** | | |
| Poly-G 30-240 | Oxypropylated polyether triol Hydroxyl Value = 235mgKOH/g; (Eq. wt. =238.72) | Arch |
| Poly-G 76-120 | Ethylene oxide capped polyether triol Hydroxyl Value = 116.3mgKOH/g; (Eq. wt. = 482.37) | Arch |
| Poly- G 85-34 | Ethylene oxide capped polyether triol Hydroxyl Value = 34 mgKOH/g; (Eq. wt. =1650 ) | Arch |

| **SURFACTANT** | | |
|---|---|---|
| Tegostab B8871 | Polyether-modified polysiloxane-copolymer; (Eq. wt. = 561) | Evonik |
| Tegostab B8870 | Polyether-modified polysiloxane-copolymer; (Eq. wt. = 561) | Evonik |

| **CELL OPENER** | | |
|---|---|---|
| Lumulse POE 26 | Ethoxylated glycerin; (OH = 134.83 mg KOH/g) | Lambent Technologies |

| **CATALYSTS** | | |
|---|---|---|
| Dabco 33LV | Triethylenediamine in Dipropylene Glycol (Eq. wt. = 105) | Air Products |
| Niax A-1 | Bis(2-dimethylaminoethyl) Ether in Dipropylene Glycol (Eq. wt. = : 233.7) | Momentive |

| **CHAIN EXTENDER** | | |
|---|---|---|
| Diethylene Glycol | Diethylene Glycol; (Eq. wt. = 53.06) | Aldrich |

| **ISOCYANATES** | | |
|---|---|---|
| Lupranate MI | 2,4'-Rich Diphenylmethane Diisocyanate (F=2.0; NCO%=33.5; Eq. wt.=125.43) | BASF |
| Rubinate M | Standard Polymeric MDI (F=2.7; NCO%=31.1; Eq. wt.=135.11) | Huntsman |

Dry glucans were introduced into the model foam formulation as a proportional replacement for the four polyols Poly-G 30-240, Poly-G 76-120, Poly-G 85-34, and Lumulse POE 26 without any adjustment in catalysis and amount of added water.

All foams were prepared using a high-torque mixer (CRAFSTMAN 10-Inch Drill Press, Model No. 137.219000) at 3,100 rpm speed. In all foaming experiments, polyol component and isocyanate component of the foam systems were mixed for 10 seconds. Afterwards, the mixture was transferred into an open polyethylene container covered with polyethylene liner and allowed to free-rise. After the rise time, the foams were immediately placed for 60 minutes into an air-circulating oven preheated at 70° to complete the cure.

All foams were aged under room conditions for minimum one week before testing. Unless indicated, the testing was performed on foams prepared using 300 g of polyol component.

The following properties were measured according to ASTM D 3574-08:
- Foam Density (Test A),
- Resilience via Ball Rebound (Test H),
- Tensile Strength at Break (Test E),
- Elongation at Break (Test E ),
- Tear Strength (Test F),
- CFD, Compression Force Deflection at 25%, 50%, and 65% Deflection (Modified Test C).
- CFD at 50% deflection with 60 sec Dwell time (Test C),
- Hysteresis (Procedure B - CFD Hysteresis Loss),
- Dry Constant Deflection Compression Set (Test D),
- Wet Constant Deflection Compression Set (Test D & Wet Heat Aging, Test L)
- Wet aged CFD change at 50% deflection with 60 sec Dwell time (Test C & Wet Heat Aging, Test L).

The tear strength was also measured according to ASTM D624, Die C Method. The cell size was measured according to ASTM D 3576.

Recovery Time was measured on Instron Tester using in-house protocol. The following were measurement parameters:
- Sample dimensions: 2" x 2" x 1"
- Indentor Foot Area: 18 mm²
- Speed: 500 mm/min
- Indentation: 80%
- Hold Time: 60 sec.

A test specimen was placed on the supporting plate. The indentor foot was brought into contact with the specimen. Immediately, the specimen was indented 80% of its initial thickness at a speed of 500 mm/min and hold for 60 seconds. After 60 seconds dwell time, the indentor was returned to 0% deflection at a rate of 500 mm/min. The stopwatch was started immediately upon initiating the upward movement of the indentor. The time was recorded as soon as the imprint of the indentor foot is not visible. The measurement was repeated on two additional specimens and the average recovery time was calculated.

Table 10 provides the formulations of foams with Glucan #1, and Table 11 indicates the properties of these foams.

Table 12 provides the formulations of foams with Glucan #2, and Table 13 indicates the properties of these foams.

Table 14 provides the formulations of foams with Glucan #2 and a different surfactant, and Table 15 indicates the properties of these foams.

Table 16 provides the formulations of foams with Glucan #3, and Table 17 indicates the properties of these foams.

Tables 18 and 19 provide the formulations of foams with Glucan #4, and Table 20 indicates the properties of these foams.

**TABLE 10. Formulations with Glucan #1 (Examples 13A-13F)**

| **Example** | **Comp. Ex. F** | | **13A** | | **13B** | | **13C** | | **13D** | | **13E** | | **13F** | |
|---|---|---|---|---|---|---|---|---|---|---|---|---|---|---|
| **% Glucan on total wt of formulation** | **0** | | **5.0** | | **7.5** | | **10** | | **15** | | **20** | | **25** | |
| **Isocyanate Index** | **70** | | **70** | | **70** | | **70** | | **70** | | **70** | | **70** | |

| **Polyol component of PU system** | | **%** | | **%** | | **%** | | **%** | | **%** | | **%** | | **%** |
|---|---|---|---|---|---|---|---|---|---|---|---|---|---|---|
| Poly G 30-240 | 21 | 19.75 | 19.37 | 18.21 | 18.57 | 17.46 | 17.77 | 16.71 | 16.17 | 15.20 | 14.60 | 13.73 | 12.75 | 11.99 |
| Poly G 76-120 | 21 | 19.75 | 19.37 | 18.21 | 18.57 | 17.46 | 17.77 | 16.71 | 16.17 | 15.20 | 14.60 | 13.73 | 12.75 | 11.99 |
| Poly G 85-34 | 18 | 16.93 | 16.60 | 15.61 | 15.92 | 14.97 | 15.23 | 14.32 | 13.86 | 13.03 | 12.51 | 11.76 | 10.66 | 10.02 |
| Lumulse POE 26 | 40 | 37.61 | 36.90 | 34.70 | 35.37 | 33.26 | 33.84 | 31.82 | 30.8 | 28.96 | 27.8 | 26.14 | 25.95 | 24.40 |
| DEG | 2.25 | 2.12 | 2.25 | 2.12 | 2.25 | 2.12 | 2.25 | 2.12 | 2.25 | 2.12 | 2.25 | 2.12 | 2.25 | 2.12 |
| Water | 2.3 | 2.16 | 2.3 | 2.16 | 2.3 | 2.16 | 2.3 | 2.16 | 2.3 | 2.16 | 2.3 | 2.16 | 2.3 | 2.16 |
| Tegostab B 8871 | 1.5 | 1.41 | 1.5 | 1.41 | 1.5 | 1.41 | 1.5 | 1.41 | 1.5 | 1.41 | 1.5 | 1.41 | 1.5 | 1.41 |
| Dabco 33LV | 0.1 | 0.09 | 0.1 | 0.09 | 0.1 | 0.09 | 0.1 | 0.09 | 0.1 | 0.09 | 0.1 | 0.09 | 0.1 | 0.09 |
| Niax A-1 | 0.2 | 0.19 | 0.2 | 0.19 | 0.2 | 0.19 | 0.2 | 0.19 | 0.2 | 0.19 | 0.2 | 0.19 | 0.2 | 0.19 |
| Glucan #1 | - | - | 7/76 | 7.30 | 11.58 | 10.89 | 15.4 | 14.48 | 23 | 21.63 | 30.5 | 29.68 | 37.9 | 35.64 |
| Residual Water | 0.02 | 0.0188 | 0.0959 | 0.0902 | 0.1333 | 0.1253 | 0.1708 | 0.1606 | 0.2452 | 0.2306 | 0.3188 | 0.2998 | 0.3915 | 0.3681 |
| Total water (water + residual water) | 2.3200 | 2.1815 | 2.3959 | 2.2528 | 2.4333 | 2.2880 | 2.4708 | 2.3233 | 2.5452 | 2.3932 | 2.6188 | 2.4624 | 2.6915 | 0.2531 |
| **Total weight of Polyol PU System** | **106.35** | **100** | **106.35** | **100** | **106.35** | **100** | **106.35** | **100** | **106.35** | **100** | **106.35** | **100** | **106.35** | **100** |

| **Isocyanate component of PU system** | | | | | | | | | | | | | | |
|---|---|---|---|---|---|---|---|---|---|---|---|---|---|---|
| Lupranate MI/ Rubinate M *(1:1 weight ratio)* | 49.45 46.50 | | 48.53 | 45.63 | 48.08 | 45.21 | 47.63 | 44.79 | 46.73 | 43.94 | 45.85 | 43.11 | 45.03 | 42.34 |
| **Isocyanate Index** | 70 | | 70 | | 70 | | 70 | | 70 | | 70 | | 70 | |
| **Reaction Profile of Free-rise** | 300 | | 200 | 300 | 200 | 300 | 200 | 300 | 300 | | 300 | | 300 | |
| Mix time, sec. | 10 | | 10 | 10 | 10 | 10 | 10 | 10 | 10 | | 10 | | 10 | |
| Cream time, sec. | 20 | | 20 | 21 | 19 | 20 | 17 | 17 | 16 | | 14 | | 10 | |
| Gel time, sec. | 48 | | 64 | 61 | 59 | 55 | 53 | 47 | 45 | | 41 | | 40 | |
| Rise time, sec. | 146 | | 146 | 140 | 130 | 133 | 119 | 117 | 112 | | 108 | | 120 | |
| Post-curing time &temp. | 60 min @ 70°C | | 60 min @ 70°C | | 60 min @ 70°C | | 60 min @ 70°C | | 60 min @ 70°C | | 60 min @ 70°C | | 60 min @ 70°C | |

| **Properties*** | | | | | | | | | | | | | | |
|---|---|---|---|---|---|---|---|---|---|---|---|---|---|---|
| Free-rise density, pcf (200g) | - | | 2.86 ± 0.04 | | 2.91 ± 0.05 | | 3.04 ± 0.01 | | - | | - | | - | |
| Free-rise density, pcf (300g) | 3.29 ± 0.04 | | 3.43 ± 0.02 | | 3.49 ± 0.03 | | 3.51 ± 0.04 | | 3.48 ± 0.05 | | 3.68 ± 0.04 | | 3.60 ± 0.05 | |
| Resilience, % | - | | 6.4 ± 0.3 | | 7.4 ± 0.3 | | 7.9 ± 0.3 | | - | | - | | - | |
| Apparent cell structure | Fine/Uniform | | Rough surface from un-dispersed polysaccharide | | | | | | | | | | | |

**TABLE 11. Properties of Viscoelastic Foams Using Glucan #1 (Examples 13A-13F)**

| **Example** | **Comp. Ex. F** | **13A** | **13B** | **13C** | **13D** | **13E** | **13F** |
|---|---|---|---|---|---|---|---|
| **% Glucan on total wt of formulation** | **0** | **5.0** | **7.5** | **10** | **15** | **20** | **25** |
| **Isocyanate index** | 70 | 70 | 70 | 70 | 70 | 70 | 70 |

| **Properties** | | | | | | | |
|---|---|---|---|---|---|---|---|
| Free-rise density, pcf | 3.29 ± 0.04 | 3.43 ± 0.02 | 3.49 ± 0.03 | 3.51 ± 0.04 | 3.48 ± 0.05 | 3.68 ± 0.04 | 3.60 ± 0.05 |
| Resilience via Ball rebound, % | 2.9 ± 0.3 | 4.9 ± 0.5 | 6.9 ± 0.6 | 7.3 ± 0.3 | 7.4 ± 0.3 | 7.9 ± 0.2 | 8.4 ± 0.2 |
| Tensile Strength, psi | 19.1 ± 19 | 21.9 1.4 | 24.3 ± 1.5 | 22.8 ± 1.9 | 21.3 ± 2.0 | 30.7 ± 1.9 | 36.1 ± 3.9 |
| Elongation at Break, % | 166 ± 10 | 161 ± 8 | 149 ± 13 | 147 ± 10 | 127 ± 4 | 68 ± 10 | 59 ± 4 |
| Trouser Tear Strength (Test F), Ibf/in | 1.3 ± 0.1 | 1.5 ± 0.2 | 1.4 ± 0.1 | 2.0 ± 0.2 | 1.6 ± 0.1 | 2.2 ± 0.1 | 2.0 ± 0.1 |
| Tear Strength, DIE C, Ibf/in | 3.1 ± 0.1 | 3.3 ± 0.2 | 3.5 ± 0.2 | 4.0 ± 0.3 | 5.1 ± 0.2 | 6.5 ± 0.7 | 6.9 ± 0.1 |
| Recovery Time, sec | 12 ± 1 | 40 ± 2 | 83 ± 5 | 139 ± 13 | 648 ± 44 | 1157 ± 55 | - |
| Cell size, mm | 0.57 ± 0.04 | 0.55 ± 0.03 | - | 0.55 ± 0.05 | - | 0.45 0.02 | - |
| Hysteresis at 75% Deflection, % | 61.7 ± 2.9 | - | - | 89.0 ± 3.4 | - | 86.3 ± 4.6 | - |
| CFD @ 25%, psi | 0.16 ± 0.01 | 0.22 ± 0.02 | 0.35 ± 0.03 | 0.27 ± 0.03 | 0.73 ± 0.10 | 2.08 ± 0.22 | 3.52 ± 0.25 |
| CFD @ 50%, psi | 0.25 ± 0.01 | 0.32 ± 0.02 | 0.49 ± 0.04 | 0.40 ± 0.04 | 0.94 ± 0.07 | 2.90 ± 0.29 | 4.66 ± 0.46 |
| CFD @ 65%, psi | 0.41 ± 0.04 | 0.52 ± 0.03 | 0.79 ± 0.07 | 0.70 ± 0.09 | 1.48 ± 0.02 | 4.50 ± 0.56 | 7.70 ± 1.04 |
| CFD @ 50% Deflection for 60 sec, Pa | 1018 ± 94 | 1173 ± 101 | 1348 ± 205 | 1307 ± 104 | 2158 ± 241 | 3766 ± 369 | 5126 ± 377 |
| Dry Compression Set @ 70° C, 50% Deflection (Cₜ) % | 2.5 ± 0.1 | 2.2 ± 0.9 | 2.2 ± 0.1 | 2.3 1.1 | 5.6 ± 1.2 | 5.0 ± 1.7 | 9.1 ± 3.1 |
| Wet Compression Set @ 50°C ,50% Deflection (Cₜ) % | 1.2 ± 0.8 | 1.2 ± 0.1 | 0.9 ± 0.3 | 2.0 ± 0.5 | 1.7 ± 0.4 | 3.9 ± 1.3 | 1.4 ± 0.4 |
| Wet aged CFD change at 50% Deflection with 60 sec. dwell time | 1.4 | -9.8 | -17.7 | -23.4 | -10.7 | 19.4 | -65.6 |
| Flammability, mm/min | 92 ± 8 | - | - | 106 ± 7 | - | 116 ± 8 | - |

**TABLE 12. Formulations with Glucan #2 (Examples 14A-14C)**

| **Example** | **Comp. Ex. F** | | **14A** | | **14B** | | **14C** | |
|---|---|---|---|---|---|---|---|---|
| **% Glucan on total wt of formulation** | **0** | | **5.0** | | **7.5** | | **10** | |
| **Isocyanate Index** | **70** | | **70** | | **70** | | **70** | |
| **Polyol component of PU system** | | % | | % | | % | | % |
| Poly G 30-240 | 21 | 19.75 | 19.37 | 18.21 | 18.57 | 17.46 | 17.77 | 16.71 |
| Poly G 76-120 | 21 | 19.75 | 19.37 | 18.21 | 18.57 | 17.46 | 17.77 | 16.71 |
| Poly G 85-34 | 18 | 16.93 | 16.60 | 15.61 | 15.92 | 14.97 | 15.23 | 14.32 |
| Lumulse POE 26 | 40 | 37.61 | 36.90 | 34.70 | 35.37 | 33.26 | 33.84 | 31.82 |
| DEG | 2.25 | 2.12 | 2.25 | 2.12 | 2.25 | 2.12 | 2.25 | 2.12 |
| Water | 2.3 | 2.16 | 2.3 | 2.16 | 2.3 | 2.16 | 2.3 | 2.16 |
| Tegostab B 8871 | 1.5 | 1.41 | 1.5 | 1.41 | 1.5 | 1.41 | 1.5 | 1.41 |
| Dabco 33LV | | 0.09 | 0.1 | 0.09 | 0.1 | 0.09 | 0.1 | 0.09 |
| Niax A-1 | 0.2 | 0.19 | 0.2 | 0.19 | 0.2 | 0.19 | 0.2 | 0.19 |
| Glucan #2 | - | - | 7.76 | 7.30 | 11.58 | 10.89 | 15.4 | 14.48 |
| Residual Water | 0.02 | 0.0188 | 0.0959 | 0.0902 | 0.1333 | 0.1253 | 0.1708 | 0.1606 |
| Total water (water + residual water) | 2.3200 | 2.1815 | 2.3959 | 2.2528 | 2.4333 | 2.2880 | 2.4708 | 2.3233 |
| **Total weight of Polyol PU System** | **106.35** | **100** | **106.35** | **100** | **106.35** | **100** | **106.35** | **100** |

| **Isocyanate component of PU system** | | | | | | | | |
|---|---|---|---|---|---|---|---|---|
| Lupranate MI/ Rubinate M *(1:1 weight ratio)* | 49.45 | 46.50 | 48.53 | 45.63 | 48.08 | 45.21 | 47.63 | 44.79 |

**TABLE 13. Properties of Viscoelastic Foams Using Glucan #2 (Examples 14A-14C)**

| **Example** | **Comp. Ex. F** | **14A** | **14B** | **14C** |
|---|---|---|---|---|
| **% Glucan on total wt of formulation** | **0** | **5.0** | **7.5** | **10** |
| **Isocyanate indes** | 70 | 70 | 70 | 70 |
| **Properties** | | | | |
| Free-rise density, pcf | 3.29 ± 0.04 | 3.50 ± 0.04 | 3.93 ± 0.03 | 3.85 ± 0.08 |
| Resilience via Ball rebound, % | 2.9 ± 0.3 | 6.1 ± 0.2 | 8.1 ± 0.5 | 10.3 ± 0.5 |
| Tensile Strength, psi | 19.1 ± 1.9 | 12.1 ± 1.5 | 15.3 ± 1.2 | 14.8 ± 0.9 |
| Elongation at Break, % | 166 ± 10 | 109 ± 10 | 95 ± 8 | 83 ± 7 |
| Trouser Tear Strength (Test F), Ibf/in | 1.3 ± 0.1 | 1.1 ± 0.1 | 1.4 ± 0.2 | 1.2 ± 0.1 |
| Tear Strength, DIE C, Ibf/in | 3.1 ± 0.1 | 2.6 ± 0.2 | 3.7 ± 0.02 | 3.3 ± 0.2 |
| Recovery Time, sec | 12 ± 1 | 34 ± 4 | 46 ± 3 | 60 ± 1 |
| Cell size, mm | 0.57 ± 0.04 | 0.74 ± 0.06 | - | 1.22 ± 0.2 |
| Hysteresis at 75% Deflection, % | 61.7 ± 2.9 | 57.6 ± 1.6 | 88.2 ± 1.1 | 88.4 ± 1.8 |
| CFD @ 25%, psi | 0.16 ± 0.01 | 0.28 ± 0.01 | 0.38 ± 0.01 | 0.34 ± 0.03 |
| CFD @ 50%, psi | 0.25 ± 0.01 | 0.40 ± 0.02 | 0.65 ± 0.03 | 0.59 ± 0.03 |
| CFD @ 65%, psi | 0.41 ± 0.04 | 0.67 ± 0.03 | 1.28 ± 0.14 | 1.09 ± 0.04 |
| CFD @ 50% Deflection for 60 sec, Pa | 1018 ± 94 | 1185 ± 27 | 1868 ± 106 | 1662 ± 189 |
| Dry Compression Set @ 70° C, 50% Deflection (Cₜ) % | 2.5 ± 0.1 | 2.4 ± 0.6 | 2.3 ± 0.1 | 2.1 ± 0.6 |
| Wet Compression Set @ 50°C ,50% Deflection (Cₜ) % | 1.2 ± 0.8 | 2.3 ± 04 | 4.2 ± 0.1 | 1.7 ± 0.7 |
| Wet aged CFD change at 50% Deflection with 60 sec. dwell time | 1.4 | 5.1 | 4.7 | -5.1 |

**TABLE 14. Formulations with Glucan #2, with Tegostab 8870 instead of Tegostab 8871 as a Surfactant (Examples 15A-15C)**

| **Example** | **Comp. Ex. G** | | **15A** | | **15B** | | **15C** | |
|---|---|---|---|---|---|---|---|---|
| **% Glucan on total wt of formulation** | **0** | | **5** | | **7.5** | | **10** | |
| **Isocyanate Index** | **70** | | **70** | | **70** | | **70** | |
| **Polyol component of PU system** | | % | | % | | % | | % |
| Poly G 30-240 | 21 | 19.75 | 19.37 | 18.21 | 18.57 | 17.46 | 17.77 | 16.71 |
| Poly G 76-120 | 21 | 19.75 | 19.37 | 18.21 | 18.57 | 17.46 | 17.77 | 16.71 |
| Poly G 85-34 | 18 | 16.93 | 16.60 | 15.61 | 15.92 | 14.97 | 15.23 | 14.32 |
| Lumulse POE 26 | 40 | 37.61 | 36.90 | 34.70 | 35.37 | 33.26 | 33.84 | 31.82 |
| DEG | 2.25 | 2.12 | 2.25 | 2.12 | 2.25 | 2.12 | 2.25 | 2.12 |
| Water | 2.3 | 2.16 | 2.3 | 2.16 | 2.3 | 2.16 | 2.3 | 2.16 |
| Tegostab B 8871 | - | - | - | - | - | - | - | - |
| Tegostab B 8870 | 1.5 | 1.41 | 1.5 | 1.41 | 1.5 | 1.41 | 1.5 | 1.41 |
| Dabco 33LV | 0.1 | 0.09 | 0.1 | 0.09 | 0.1 | 0.09 | 0.1 | 0.09 |
| Niax A-1 | 0.2 | 0.19 | 0.2 | 0.19 | 0.2 | 0.19 | 0.2 | 0.19 |
| Glucan #2 | - | - | 7.76 | 7.30 | 11.58 | 10.89 | 15.4 | 14.48 |
| Residual Water | 0.02 | 0.0188 | 0.0959 | 0.0902 | 0.1333 | 0.1253 | 0.1708 | 0.1606 |
| Total water (water + residual water) | 2.3200 | 2.1815 | 2.3959 | 2.2528 | 2.4333 | 2.2880 | 2.4708 | 2.3233 |
| **Total weight of Polyol PU System** | **106.35** | **100** | **106.35** | **100** | **106.35** | **100** | **106.35** | **100** |
| **Isocyanate component of PU system** | | | | | | | | |
| Lupranate MI/ Rubinate M *(1:1 weight ratio)* | 49.45 | 46.50 | 48.53 | 45.63 | 48.08 | 45.21 | 47.63 | 44.79 |

**TABLE 15. Properties of Viscoelastic Foams Using Glucan #2 with Tegostab 8870 instead of Tegostab 8871 as a Surfactant (Examples 15A-15C)**

| **Example** | **Comp. Ex. G** | **15A** | **15B** | **15C** |
|---|---|---|---|---|
| **% Glucan on total wt of formulation** | **0** | **5.0** | **7.5** | **10** |
| **Isocyanate Index** | 70 | 70 | 70 | 70 |
| **Properties** | | | | |
| Free-rise density, pcf | 3.09 ± 0.04 | 3.24 ± 0.04 | 3.32 ± 0.04 | 3.36 ± 0.03 |
| Resilience via Ball rebound, % | 2.9 ± 0.2 | 6.1 ± 0.1 | 8.0 ± 0.1 | 10.0 ± 0.6 |
| Tensile Strength, psi | 24.4 ± 2.1 | 20.8 ± 2.0 | 21.8 ± 2.1 | 20.0 ± 2.8 |
| Elongation at Break, % | 208 ± 12 | 147 ± 13 | 150 ± 6 | 109 ± 7 |
| Trouser Tear Strength (Test F), Ibf/in | 1.5 ± 0.1 | 1.6 ± 0.1 | 1.6 ± 0.1 | 1.5 ± 0.1 |
| Tear Strength, DIE C, Ibf/in | 4.6 ± 0.3 | 3.9 ± 0.4 | 3.5 ± 0.3 | 3.6 ± 0.1 |
| Recovery Time, sec | 15 ± 1 | 37.3 ± 2.5 | 62.7 ± 2.5 | 97.3 ± 3.1 |
| Cell size, mm | 0.45 ± 0.05 | 0.49 ± 0.06 | - | 0.57 ± 0.04 |
| Hysteresis at 75% Deflection, % | 63.8 ± 1.3 | 79.2 ± 3.3 | 83.0 ± 5.7 | 88.0 ± 3.0 |
| CFD @ 25%, psi | 0.17 ± 0.01 | 0.22 ± 0.02 | 0.26 ± 0.03 | 0.36 ± 0.02 |
| CFD @ 50%, psi | 0.26 ± 0.01 | 0.36 ± 0.03 | 0.48 ± 0.03 | 0.71 ± 0.03 |
| CFD @ 65%, psi | 0.42 ± 0.03 | 0.65 ± 0.05 | 0.90 ± 0.05 | 1.48 ± 0.13 |
| CFD @ 50% Deflection for 60 sec, Pa | 898 ± 45 | 1154 ± 89 | 1278 ± 151 | 1451 ± 130 |
| Dry Compression Set @ 70° C, 50% Deflection (Cₜ) % | 2.3 ± 1.0 | 1.8 ± 0.3 | 3.0 ± 0.5 | 1.9 ± 05 |
| Wet Compression Set @ 50°C ,50% Deflection (Cₜ) % | 1.4 ± 0.5 | 2.0 ± 0.5 | 3.4 ± 0.7 | 3.7 ± 0.6 |
| Wet aged CFD change at 50% Deflection with 60 sec. dwell time | -3.7 | 1.2 | 5.6 | 1.4 |

**TABLE 16. Formulations with Glucan #3 (Examples 16A-16D)**

| **Example** | **Comp. Ex. F** | | **16A** | | **16B** | | **16C** | | **16D** | |
|---|---|---|---|---|---|---|---|---|---|---|
| **% Glucan on total wt of formulation** | **0** | | **5** | | **7.5** | | **10** | | **15** | |
| **Isocyanate Index** | **70** | | **70** | | **70** | | **70** | | **70** | |
| **Polyol component of PU system** | | % | | % | | % | | % | | % |
| Poly G 30-240 | 21 | 19.75 | 19.37 | 18.21 | 18.57 | 17.46 | 17.77 | 16.71 | 16.17 | 15.20 |
| Poly G 76-120 | 21 | 19.75 | 19.37 | 18.21 | 18.57 | 17.46 | 17.77 | 16.71 | 16.17 | 15.20 |
| Poly G 85-34 | 18 | 16.93 | 16.60 | 15.61 | 15.92 | 14.97 | 15.23 | 14.32 | 13.86 | 13.03 |
| Lumulse POE 26 | 40 | 37.61 | 36.90 | 34.70 | 35.37 | 33.26 | 33.84 | 31.82 | 30.8 | 28.96 |
| DEG | 2.25 | 2.12 | 2.25 | 2.12 | 2.25 | 2.12 | 2.25 | 2.12 | 2.25 | 2.12 |
| Water | 2.3 | 2.16 | 2.3 | 2.16 | 2.3 | 2.16 | 2.3 | 2.16 | 2.3 | 2.16 |
| Tegostab B 8871 | 1.5 | 1.41 | 1.5 | 1.41 | 1.5 | 1.41 | 1.5 | 1.41 | 1.5 | 1.41 |
| Dabco 33LV | 0.1 | 0.09 | 0.1 | 0.09 | 0.1 | 0.09 | 0.1 | 0.09 | 0.1 | 0.09 |
| Niax A-1 | 0.2 | 0.19 | 0.2 | 0.19 | 0.2 | 0.19 | 0.2 | 0.19 | 0.2 | 0.19 |
| Glucan #3 | - | - | 7.76 | 7.30 | 11.58 | 10.89 | 15.4 | 14.48 | 23 | 21.63 |
| Residual Water | 0.02 | 0.0188 | 0.0959 | 0.0902 | 0.1333 | 0.1253 | 0.1708 | 0.1606 | 0.2452 | 0.2306 |
| Total water (water + residual water) | 2.3200 | 2.1815 | 2.3959 | 2.2528 | 2.4333 | 2.2880 | 2.4708 | 2.3233 | 2.5452 | 2.3932 |
| **Total weight of Polyol PU System** | **106.35** | **100** | **106.35** | **100** | **106.35** | **100** | **106.35** | **100** | **106.35** | **100** |
| **Isocyanate component of PU system** | | | | | | | | | | |
| Lupranate MI/ Rubinate M *(1:1 weight ratio)* | 49.45 | 46.50 | 48.53 | 45.63 | 48.08 | 45.21 | 47.63 | 44.79 | 46.73 | 43.94 |

**TABLE 17. Properties of viscoelastic foams using Glucan #3 (Examples 16A-16D)**

| **Example** | **Comp. Ex. F** | **16A** | **16B** | **16C** | **16D** |
|---|---|---|---|---|---|
| **% Glucan on total wt of formulation** | **0** | **5** | **7.5** | **10** | **15** |
| **Isocyanate Index** | 70 | 70 | 70 | 70 | 70 |
| **Properties** | | | | | |
| Free-rise density, pcf | 3.29 ± 0.04 | 3.75 ± 0.03 | 3.79 ± 0.02 | 3.89 ± 0.03 | 4.27 ± 0.02 |
| Resilience via Ball rebound, % | 2.9 ± 0.3 | 5.6 ± 0.3 | 6.3 ± 0.2 | 8.1 ± 0.4 | 10.7 ± 0.3 |
| Tensile Strength, psi | 19.1 ± 1.9 | 9.3 ± 0.8 | 10.2 ± 0.8 | 9.8 ± 1.1 | - |
| Elongation at Break, % | 166 ± 10 | 103 ± 10 | 106 ± 9 | 103 ± 11 | - |
| Trouser Tear Strength (Test F), Ibf/in | 1.3 ± 0.1 | 1.4 ± 0.1 | 1.2 ± 0.1 | 1.0 ± 0.1 | - |
| Tear Strength, DIE C, Ibf/in | 3.1 ± 0.1 | 2.4 ± 0.1 | 2.2 ± 0.1 | 2.3 ± 0.2 | - |
| Recovery Time, sec | 12 ± 1 | 24 ± 2 | 34 ± 2 | 48 ± 2 | - |
| Cell size, mm | 0.57 ± 0.04 | 1.37 ± 0.18 | - | 2.12 ± 0.54 | |
| Hysteresis at 75% Deflection, % | 61.7 ± 2.9 | 78.9 ± 1.7 | 74.1 ± 2.5 | 80.9 ± 1.1 | - |
| CFD @ 25%, psi | 0.16 ± 0.01 | 0.30 ± 0.03 | 0.31 ± 0.02 | 0.42 ± 0.03 | - |
| CFD @ 50%, psi | 0.25 ± 0.01 | 0.43 ± 0.04 | 0.47 ± 0.03 | 0.65 ± 0.04 | - |
| CFD @ 65%, psi | 0.41 ± 0.04 | 0.70 ± 0.04 | 0.81 ± 0.05 | 1.10 ± 0.05 | - |
| CFD @ 50% Deflection for 60 sec, Pa | 1018 ± 94 | 1522 ± 152 | 1597 ± 71 | 1811 ± 145 | - |
| Dry Compression Set @ 70° C, 50% Deflection (Cₜ) % | 2.5 ± 0.1 | 2.6 ± 0.9 | 1.9 ± 0.3 | 3.4 ± 0.7 | 1.8 ± 0.6 |
| Wet Compression Set @ 50°C ,50% Deflection (Cₜ) % | 1.2 ± 0.8 | 1.1 ± 0.2 | 1.8 ± 0.3 | 2.1 ± 0.4 | 3.6 ± 1.2 |
| Wet aged CFD change at 50% Deflection with 60 sec. dwell time | 1.4 | - | - | - | - |

**TABLE 18. Formulations with Glucan #4 (Examples 17A-17D)**

| **Example** | **Comp.** Ex. F | | 17A | | **17B** | | **17C** | | 17D | |
|---|---|---|---|---|---|---|---|---|---|---|
| % Glucan on total wt of formulation | **0** | | 5 | | 7.5 | | 10 | | 15 | |
| Isocyanate Index | 70 | | 70 | | 70 | | 70 | | 70 | |
| **Polyol** component **of PU** system | | % | | % | | % | | % | | % |
| Poly G 30-240 | 21 | 19.75 | 19.37 | 18.21 | 18.57 | 17.46 | 17.77 | 16.71 | 16.17 | 15.20 |
| Poly G 76-120 | 21 | 19.75 | 19.37 | 18.21 | 18.57 | 17.46 | 17.77 | 16.71 | 16.17 | 15.20 |
| Poly G 85-34 | 18 | 16.93 | 16.60 | 15.61 | 15.92 | 14.97 | 15.23 | 14.32 | 13.86 | 13.03 |
| Lumulse POE 26 | 40 | 37.61 | 36.90 | 34.70 | 35.37 | 33.26 | 33.84 | 31.82 | 30.8 | 28.96 |
| DEG | 2.25 | 2.12 | 2.25 | 2.12 | 2.25 | 2.12 | 2.25 | 2.12 | 2.25 | 2.12 |
| Water | 2.3 | 2.16 | 2.3 | 2.16 | 2.3 | 2.16 | 2.3 | 2.16 | 2.3 | 2.16 |
| Tegostab B 8871 | 1.5 | 1.41 | 1.5 | 1.41 | 1.5 | 1.41 | 1.5 | 1.41 | 1.5 | 1.41 |
| Dabco 33LV | 0.1 | 0.09 | 0.1 | 0.09 | 0.1 | 0.09 | 0.1 | 0.09 | 0.1 | 0.09 |
| Niax A-1 | 0.2 | 0.19 | 0.2 | 0.19 | 0.2 | 0.19 | 0.2 | 0.19 | 0.2 | 0.19 |
| Glucan #4 | - | - | 7.76 | 7.30 | 11.58 | 10.89 | 15.4 | 14.48 | 23 | 21.63 |
| Residual Water | 0.02 | 0.0188 | 0.0959 | 0.0902 | 0.1333 | 0.1253 | 0.1708 | 0.1606 | 0.2452 | 0.2306 |
| Total water (water + residual water) | 2.3200 | 2.1815 | 2.3959 | 2.2528 | 2.4333 | 2.2880 | 2.4708 | 2.3233 | 2.5452 | 2.3932 |
| **Total weight of Polyol PU System** | **106.35** | **100** | **106.35** | **100** | **106.35** | **100** | **106.35** | **100** | **106.35** | **100** |
| **Isocyanate component of PU system** | | | | | | | | | | |
| ; Lupranate MI/ Rubinate M *(1:1 weight ratio)* | 49.45 | 46.50 | 48.53 | 45.63 | 48.08 | 45.21 | 47.63 | 44.79 | 46.73 | 43.94 |

**TABLE 19. Formulations with Glucan #4 (Examples 17E-17F)**

| **Example** | **Comp. Ex. F** | | **17E** | | **17F** | |
|---|---|---|---|---|---|---|
| % **Glucan on total wt of formulation** | **0** | | **20** | | **25** | |
| **Isocyanate Index** | **70** | | **70** | | **70** | |
| **Polyol component of PU system** | | % | | % | | % |
| Poly G 30-240 | 21 | 19.75 | 14.60 | 13.73 | 12.75 | 11.99 |
| Poly G 76-120 | 21 | 19.75 | 14.60 | 13.73 | 12.75 | 11.99 |
| Poly G 85-34 | 18 | 16.93 | 12.51 | 11.76 | 10.66 | 10.02 |
| Lumulse POE 26 | 40 | 37.61 | 27.8 | 26.14 | 25.95 | 24.40 |
| DEG | 2.25 | 2.12 | 2.25 | 2.12 | 2.25 | 2.12 |
| Water | 2.3 | 2.16 | 2.3 | 2.16 | 2.3 | 2.16 |
| Tegostab B 8871 | 1.5 | 1.41 | 1.5 | 1.41 | 1.5 | 1.41 |
| Dabco 33LV | 0.1 | 0.09 | 0.1 | 0.09 | 0.1 | 0.09 |
| Niax A-1 | 0.2 | 0.19 | 0.2 | 0.19 | 0.2 | 0.19 |
| Glucan #4 | - | - | 30.5 | 28.68 | 37.9 | 35.64 |
| Residual Water | 0.02 | 0.0188 | 0.3188 | 0.2998 | 0.3915 | 0.3681 |
| Total water (water + residual water) | 2.3200 | 2.1815 | 2.6188 | 2.4624 | 2.6915 | 0.2531 |
| **Total weight of Polyol PU System** | **106.35** | **100** | **106.35** | **100** | **106.35** | **100** |
| **Isocyanate component of PU system** | | | | | | |
| **Lupranate MI/ Rubinate M** *(1:1 weight ratio)* | **49.45** | **46.50** | **45.85** | **43.11** | **45.03** | **42.34** |

**TABLE 20. Properties of viscoelastic foams using Glucan #4 (Examples 17A-17F)**

| **Example** | **Comp. Ex. F** | **17A** | **17B** | **17C** | **17D** | **17E** | **17F** |
|---|---|---|---|---|---|---|---|
| **% Glucan on total wt of formulation** | **0** | **5** | **7.5** | **10** | **15** | **20** | **25** |
| **Isocyanate Index** | 70 | 70 | 70 | 70 | 70 | 70 | 70 |
| **Properties** | | | | | | | |
| Free-rise density, pcf | 3.29 ± 0.04 | 3.28 ± 0.04 | 3.33 ± 0.02 | 3.46 ± 0.02 | 3.54 ± 0.03 | 3.41 ± 0.02 | 3.58 ± 0.03 |
| Resilience via Ball rebound, % | 2.9 ± 0.3 | 4.4 ± 0.2 | 6.3 ± 0.2 | 7.9 ± 0.1 | 8.4 ± 0.1 | 9.5 ± 0.2 | 10.7 ± 0.3 |
| Tensile Strength, psi | 19.1 ± 1.9 | 21.5 ± 1.9 | 19.8 ± 1.8 | 27.5 ± 1.5 | 30.7 ± 2.8 | 28.6 ± 2.6 | 34.3 ± 1.9 |
| Elongation at Break, % | 166 ± 10 | 159 ± 10 | 146 ± 9 | 131 ± 10 | 110 ± 9 | 70.4 ± 8.5 | 63.0 ± 6.5 |
| Trouser Tear Strength (Test F), Ibf/in | 1.3 ± 0.1 | 1.3 ± 0.1 | 1.2 ± 0.1 | 1.3 ± 0.1 | 1.6 ± 0.2 | 1.7 ± 0.1 | 1.8 ± 0.2 |
| Tear Strength, DIE C, Ibf/in | 3.1 ± 0.1 | 3.3 ± 0.2 | 3.5 ± 0.2 | 5.4 ± 0.2 | 5.0 ± 0.4 | 6.7 ± 0.6 | 6.5 ± 0.3 |
| Recovery Time, sec | 12 ± 1 | 18 ± 2 | 32 ± 2 | 79 ± 3 | 142 ± 7 | 1040 ± 125 | Foam tear |
| Cell size, mm | 0.57 ± 0.04 | 0.59 ± 0.05 | - | 0.56 ± 0.05 | - | 0.66 ± 0.08 | - |
| Hysteresis at 75% Deflection, % | 62 ± 3 | - | - | 80 ± 2 | - | 89 ± 1 | - |
| CFD @ 25%, psi | 0.16 ± 0.01 | 0.23 ± 0.03 | 0.29 ± 0.02 | 0.46 ± 0.03 | 0.93 ± 0.10 | 2.05 ± 0.22 | 3.04 ± 0.29 |
| CFD @ 50%, psi | 0.25 ± 0.01 | 0.36 ± 0.02 | 0.43 ± 0.03 | 0.66 ± 0.06 | 1.32 ± 0.14 | 2.78 ± 0.25 | 4.29 ± 0.25 |
| CFD @ 65%, psi | 0.41 ± 0.04 | : 0.66 ± 0.02 | 0.72 ± 0.04 | 1.13 ± 0.15 | 1.91 ± 0.29 | 3.82 ± 0.39 | 6.35 ± 0.06 |
| CFD @ 50% Deflection for 60 sec, Pa | 1018 ± 94 | 1192 ± 59 | 1290 ± 88 | 1582 ± 203 | 2865 ± 419 | 5466 ± 333 | 8327 ± 857 |
| Dry Compression Set @ 70° C, 50% Deflection (Cₜ) % | 2.5 ± 0.1 | 0.9 ± 0.3 | 2.0 ± 0.4 | 4.1 ± 1.8 | 3.9 ± 0.7 | 4.9 ± 0.7 | 6.0 ± 0.2 |
| Wet Compression Set @ 50°C ,50% Deflection (Cₜ) % | 1.2 ± 0.8 | 2.4 ± 0.3 | 1.8 ± 0.3 | 2.3 ± 0.7 | 2.3 ± 1.1 | 2.1 ± 0.3 | 2.9 ± 0.3 |
| Wet aged CFD change at 50% Deflection with 60 sec. dwell time | 1.4 | 6.1 | 4.2 | 8.9 | 6.8 | 17.6 | 53.2 |

### Preparation of Microcellular Foams

The raw materials used to prepare microcellular foams are listed in Table 21. All materials other than glucan were used as received from suppliers.

Two samples of dry poly alpha-1,3-glucan were used to prepare polyurethane/glucan microcellular foams. All glucan samples were dried overnight at 60 °C before use.

Glucan #5 and #6 were wet cake, prepared as described herein above, and further processed. Glucan #5 was wet cake that had been isolated, dried, and sieved below 20 mesh. Glucan #5 was used in the formulations and foams of Examples 18A - 18D. Glucan #6 was wet cake that had been isolated, dried with the process described above and milled below 5 micron. Glucan #6 was used in the formulations and foams of Examples 19A - 19F.

Comparative Example H and Comparative Example J were polyurethane formulations and foams prepared without any glucan.

**TABLE 21. Materials Used to Make Microcellular Foams**

| *Material* | *Description* | *Supplier* |
|---|---|---|
| Poly G 55-28 | Polyether polyol; OH value = 28.8mg KOH/g; moisture content = 0.154% | Monument Chemical |
| Poly G 85-29 | Polyether polyol; OH value = 26.8mg KOH/g; moisture content = 0.156% | Monument Chemical |
| 1,4-butanediol | 1,4-butanediol; moisture content = 0.141 | Sigma-Aldrich |
| Water | Distilled water | - |
| Tegostab B4113 | Low potency MDI surfactant | Evonik Industries |
| Dabco 33LV | 33% triethylene diamine/67% dipropylene glycol; polyurethane catalyst | Air Products |
| Dabco T12 | Dibutyltin dilaurate catalyst | Air Products |
| Mondur CD | Carbodiimide modified diphenylmethane diisocyanate; 29.4% NCO | Bayer Material Science |

All microcellular elastomers were prepared using a high-torque mixer (CRAFSTMAN 10-Inch Drill Press, Model No. 137.219000) at 3,100 rpm speed. Materials of the polyol component of the polyurethane systems conditioned at room temperature were weighed into a 400 mL polypropylene tri-pour cup and mixed via drill mixer for 30 seconds. Isocyanate component was then weighed into the container with the polyol component and immediately mixed via drill mixer for 20 seconds. Afterwards, the mixture was poured into a 1000 mL polypropylene tri-pour cup and let free-rise or into a preheated aluminum mold which was then closed and left at ambient temperature for 15 minutes before demolding.

Materials of the polyol components of the polyurethane systems were added to the polypropylene cup and mixed with a high-torque mixer in order as listed in the tables below with exception of Dabco T-12 which was pre-blended with 1,4-butanediol by mixing via Speed Mixer DAC 400V (FlackTek) at 2100 rpm for 60 seconds.

Cream time, gel time, rise time, and tack free time were measured on free-rise foams. The free-rise foams were allowed to cure in the cup for 30 minutes at room temperature before removal.

The aluminum mold with 6 mm frame was preheated at 70 °C and the mold with 12 mm frame was preheated to 50°C before pouring in the mixture of isocyanate and polyol component of the polyurethane system. The surface of the mold used for molding microcellular elastomers was coated with a mold release PU-11331 (Release Agent, Chem-Trend) using a brush.

All microcellular elastomers were aged under room conditions for minimum one week before testing. The test methods and conditions are shown in Table 22.

**TABLE 22. Test Methods and Conditions For Evaluating Microcellular Foams**

| Property | ASTM Test Standard | Testing Conditions | Machinery |
|---|---|---|---|
| Resilience (Bashore Rebound) | D 2632 | - | Bashore resiliometer |
| Resilience (Ball Rebound) | D 3574 | Test H | - |
| Tensile Strength | D 412 | Test method A; Dumbbell specimens; Instron speed: 20 in./min | Instron 5500R Model 1122 |
| Tensile strength at 50°C | D 412 | 50°C Instron speed: 20 in./min | |
| Wet aged tensile strength | D 412 | 7 days aging at 65°C and 95% relative humidity Humidity and temp controlled chamber Instron speed: 20 in./min | |
| Tear Strength | D 624 | Die C specimens; Instron speed: 20 in./min | |
| Hysteresis | - | Die H specimens; 10 cycles to 70% elongation Instron speed: | |
| Compressive strength | D 575 | Instron speed: 12 mm/min | |
| Constant deflection compression set | D 395 | Test method B - constant deflection in air 25% compressive strain at 70°C for 22 hours | - |
| Wet constant deflection compression set | D 3574 | Modified compressive strain 25% compressive strain at 50°C and 95% relative humidity | - |
| Dynamic mechanical analysis (DMA) | D 5024 | 3 point bend Static force: 100 mN; Dynamic force: 120 mN; Ramp: -100°C to 100°C at 3°C per minute | DMA 7E Perkin Elmer |
| Differential scanning Calorimetry (DSC) | D 3489 | Ramp: -100°C to 150°C at 10°C per minute | DSC Q10 TA Intruments |
| Infrared fourier transform spectroscopy (FTIR) | - | - | Spectrum Two Perkin Elmer with Pike Miracle ATR attachment |

Table 23 provides the general free-rise formulations at 10% incorporation of polysaccharide. Properties were further investigated in detail for microcellular elastomers made with Glucan #5 or Glucan #6 at varying weight percentages. Dry polysaccharides were introduced into the formulation as proportional drop-in replacements for the two polyols Poly-G 55-25 and Poly-G 85-29 and 1,4-BD as a chain extender. As a result, a portion of the polyurethane matrix (proportion of the two polyols, chain extender, and the isocyanate component) was replaced with polysaccharides.

The polysaccharides were introduced without any adjustment in amount of directly added water in the polyol component. As result, theoretically total water increased with addition of polysaccharides. The stoichiometry was calculated with assumption that the water content in the dry polysaccharides was 1%.

**TABLE 23. Free-Rise Formulations with 10% Polysaccharide**

| Material | Com parative Example H | Example 18D | Example 19D |
|---|---|---|---|
| % Polysaccharide based on total weight | 0 | 10.00 | 10.00 |
| Poly G 55-25 | 81.7 | 70.7 | 70.7 |
| Poly G 85-29 | 9.55 | 8.26 | 8.26 |
| 1,4-butanediol | 7.99 | 6.91 | 6.91 |
| Total water | 0.372 | 0.485 | 0.485 |
| Added water | 0.220 | 0.220 | 0.220 |
| Residual water (polyols) | 0.152 | 0.131 | 0.131 |
| Residual water (polysaccharide) | - | 0.134 | 0.134 |
| Tegostab B4113 | 0.475 | 0.475 | 0.475 |
| Dabco 33LV | 0.090 | 0.090 | 0.090 |
| Dabco T-12 | 0.0065 | 0.0065 | 0.0065 |
| Glucan #5 | - | 13.36 | - |
| Glucan #6 | - | - | 13.36 |
| Polysaccharide #3 | - | - | - |
| Mondur CD | 37.41 | 34.94 | 34.94 |
| Isocyanate index | 0.98 | 0.98 | 0.98 |

Table 24 provides the formulations for free-rise and molded microcellular elastomers containing Glucan #5, and Table 25 indicates the properties of these.

Table 26 provides the formulations for free-rise and molded microcellular elastomers containing Glucan #6, and Table 27 indicates the properties of these foams.

**TABLE 24. Formulations for Free-Rise and Molded Microcellular Elastomers Containing Glucan #5 (Examples 18A - 18D)**

| Example | Comparative Example J | 18A | 18B | 18C | 18D |
|---|---|---|---|---|---|
| % Polysaccharide based on total weight | 0 | 3.00 | 5.00 | 7.50 | 10.00 |

| **Polyol component of polyurethane system** | | | | | |
|---|---|---|---|---|---|
| Poly G 55-25 | 81.7 | 78.3 | 76.1 | 73.4 | 70.7 |
| Poly G 85-29 | 9.55 | 9.16 | 8.90 | 8.58 | 8.26 |
| 1,4-butanediol | 7.99 | 7.66 | 7.45 | 7.18 | 6.91 |
| Total water | 0.372 | 0.406 | 0.429 | 0.457 | 0.485 |
| Added water | 0.220 | 0.220 | 0.220 | 0.220 | 0.220 |
| Residual water (polyols) | 0.152 | 0.145 | 0.141 | 0.136 | 0.131 |
| Residual water (polysaccharide) | - | 0.041 | 0.067 | 0.101 | 0.134 |
| Tegostab B4113 | 0.475 | 0.475 | 0.475 | 0.475 | 0.475 |
| Dabco 33LV | 0.090 | 0.090 | 0.090 | 0.090 | 0.090 |
| Dabco T-12 | 0.0090 | 0.0090 | 0.0090 | 0.0090 | 0.0090 |
| Dry Glucan #5 | - | 4.06 | 6.74 | 10.06 | 13.36 |

| **Isocyanate component of polyurethane system** | | | | | |
|---|---|---|---|---|---|
| Mondur CD | 37.41 | 36.66 | 36.17 | 35.55 | 34.94 |
| Isocyanate index | 0.98 | 0.98 | 0.98 | 0.98 | 0.98 |

| **Reaction profile** | | | | | |
|---|---|---|---|---|---|
| Cream time, s | 49 | 45 | 47 | 53 | 55 |
| Gel time, s | 108 | 119 | 123 | 132 | 138 |
| Rise time, s | 142 | 147 | 157 | 160 | 154 |
| Tack free time, s | 158 | 158 | 168 | 169 | 170 |
| Density, pcf | 22.5 | 19.7 | 18.8 | 18.1 | 19.3 |
| Appearance | Uniform | Uniform | Uniform | Uniform | Uniform |

**TABLE 25. Properties of Molded Microcellular Elastomers Using Glucan #5 (Examples 18A - 18D)**

| Example | Com parative Example H | 18A | 18B | 18C | 18D |
|---|---|---|---|---|---|
| % Polysaccharide based on total weight | 0 | 3.00 | 5.00 | 7.50 | 10.00 |

| **Density of microcellular elastomers** | | | | | |
|---|---|---|---|---|---|
| Free rise density, pcf | 22.5 | 19.7 | 18.8 | 18.1 | 19.3 |
| Molded density, pcf 6mm samples | 31.8/32.1 | 30.5/29.7 | 29.9/29.9 | 28.6/30.4 | 30.2/29.9 |
| Molded density, pcf 14mm samples | 32.1 | - | 28.0 | - | 28.6 |
| Average over packing, % | 45.6 | 52.8 | 55.7 | 63.0 | 55.7 |
| Appearance: | Uniform | Settling of polysaccharide visible on underside of molded microcellular elastomers | | | |

| **Properties of molded microcellular elastomers** | | | | | |
|---|---|---|---|---|---|
| Resilience (Bashore rebound), % | 39.9 ± 0.2 | 37.1 ± 0.7 | 37.9 ± 0.5 | 37.4 ± 0.5 | 36.3 ± 0.8 |
| Resilience (ball rebound), % | 43.6 ± 0.3 | 40.6 ± 0.2 | 40.6 ± 0.2 | 40.3 ± 0.3 | 39.9 ± 0.1 |
| Tensile strength at break, psi | 275 ± 9 | 277 ± 18 | 283 ± 16 | 248 ± 9 | 238 ± 10 |
| Tensile elongation at break, % | 196 ± 10 | 147 ± 7 | 161 ± 6 | 143 ± 7 | 137 ± 8 |
| Tensile modulus at 50%, psi | 123 ± 15 | 129 ± 11 | 108 ± 4 | 108 ± 6 | 111 ± 3 |
| Tensile modulus at 100%, psi | 184 ± 9 | 221 ± 16 | 192 ± 6 | 191 ± 5 | 198 ± 6 |
| Tensile set, % | 1.3 ± 0.3 | 1.2 ± 0.7 | 2.0 ± 0.8 | 1.2 ± 0.4 | 1.2 ± 0.3 |
| Tensile strength at break (50°C,) psi | 201 ± 20 | - | - | - | 138 ± 17 |
| Tensile elongation at break (50°C), % | 128 ± 14 | - | - | - | 92 ± 8 |
| Tensile modulus at 50% (50°C), psi | 115 ± 5 | - | - | - | 95 ± 8 |
| Tensile modulus at 100% (50°C), psi | 176 ± 8 | - | - | - | - |
| Tensile retention at break (50°C), % | 73.1 | - | - | - | 58.0 |
| Wet aged tensile strength at break(65°C, 95%RH), psi | 395 ± 37 | - | - | - | 187 ± 20 |
| Wet aged tensile elongation at break (65°C, 95%RH), % | 271 ± 22 | - | - | - | 149 ± 17 |
| Wet aged tensile modulus at 50% (65°C, 95%RH), psi | 127 ± 14 | - | - | - | 106 ± 7 |
| Wet aged tensile modulus at 100% (65°C, 95%RH), psi | 194 ± 12 | - | - | - | 163 ± 11 |
| Wet aged tensile strength retention at break (65°C, 95%RH), % | 143.6 | - | - | - | 78.6 |
| Wet aged tensile moisture absorption (65°C, 95%RH), % | 1.8 | | | | 2.7 |
| Tear strength, N/cm | 152 ± 26 | - | 137 ± 19 | - | 105 ± 16 |
| Hysteresis at 70% elongation, 1^{st} curve | 31.9 | - | 35.1 | - | 24.6 |
| Hysteresis at 70% elongation, 10^{th} curve | 17.9 | - | 19.9 | - | 17.7 |
| Compressive stress at 25%, psi at 50%, psi | 55 ± 2 156 ± 6 | - | - | - | 33 ± 1 113 ± 1 |
| Dry aged constant deflection compression set | 46.6 ± 1.3 | - | - | - | 26.4 ± 1.7 |
| Wet aged constant deflection compression set | 2.6 ± 0.1 | - | - | - | 3.4 ± 0.6 |
| DSC transitions, °C | -59.7, 55.7 | - | - | - | -59.9, 62.8 |
| DMA (peak of loss modulus), °C | -52 | - | - | - | -41 |
| *Note: Target over packing for molded foams calculated for density of 33 pcf* | | | | | |
| *Note: Mold preheated to 70°C for 6mm samples; Mold preheated to 50°C for 14mm samples* | | | | | |

**TABLE 26. Formulations for Free-Rise and Molded Microcellular Elastomers Containing Glucan #6 (Examples 19A - 19F)**

| Example | Com parative Example J | 19A | 19B | 19C | 19D | 19E | 19F |
|---|---|---|---|---|---|---|---|
| % Polysaccharide based on total weight | 0 | 3.00 | 5.00 | 7.50 | 10.00 | 12.50 | 15.00* |

| **Polyol component of polyurethane system** | | | | | | | |
|---|---|---|---|---|---|---|---|
| Poly G 55-25 | 81.7 | 78.3 | 76.1 | 73.4 | 70.7 | 68.0 | 65.3 |
| Poly G 85-29 | 9.55 | 9.16 | 8.90 | 8.58 | 8.26 | 7.95 | 7.64 |
| 1,4-butanediol | 7.99 | 7.66 | 7.45 | 7.18 | 6.91 | 6.65 | 6.39 |
| Total water | 0.372 | 0.406 | 0.429 | 0.457 | 0.485 | 0.513 | 0.540 |
| Added water | 0.220 | 0.220 | 0.220 | 0.220 | 0.220 | 0.220 | 0.220 |
| Residual water (polyols) | 0.152 | 0.145 | 0.141 | 0.136 | 0.131 | 0.126 | 0.121 |
| Residual water (polysaccharide) | - | 0.041 | 0.067 | 0.101 | 0.134 | 0.166 | 0.199 |
| Tegostab B4113 | 0.475 | 0.475 | 0.475 | 0.475 | 0.475 | 0.475 | 0.475 |
| Dabco 33LV | 0.090 | 0.090 | 0.090 | 0.090 | 0.090 | 0.090 | 0.090 |
| Dabco T-12 | 0.0090 | 0.0090 | 0.0090 | 0.0090 | 0.0090 | 0.0090 | 0.0090 |
| Dry Glucan #6 | - | 4.06 | 6.74 | 10.06 | 13.36 | 16.63 | 19.86 |
| | | | | | | | |

| **Isocyanate component of polyurethane system** | | | | | | | |
|---|---|---|---|---|---|---|---|
| Mondur CD | 37.41 | 36.66 | 36.17 | 35.55 | 34.94 | 34.34 | 33.74 |
| Isocyanate index | 0.98 | | | | | | |

**TABLE 27. Properties of Molded Microcellular Elastomers Using Glucan #6 (Examples 19A - 19F)**

| Example | **Comparative Example H** | **19A** | **19B** | **19C** | **19D** | **19E** | **19F** |
|---|---|---|---|---|---|---|---|
| % Polysaccharide based on total weight | 0 | 3.00 | 5.00 | 7.50 | 10.00 | 12.50 | 15.00 |

| **Density of microcellular elastomers** | | | | | | | |
|---|---|---|---|---|---|---|---|
| Free rise density, pcf | 22.5 | 23.4 | 23.6 | 23.1 | 23.1 | 23.2 | - |
| Molded density, pcf 6mm samples | 31.8/32.1 | 31.4/32.7 | 33.2/31.7 | 32.3/31.8 | 32.3/33.8 | 34.0/33.8 | 34.4 |
| Molded density, pcf 14mm samples | 32.1 | - | 32.5 | - | 32.3 | - | 33.0 |
| Average over packing, % | 45.6 | 37.0 | 37.6 | 38.5 | 42.0 | 46.1 | - |
| Appearance: | Uniform | | | | | | |

| **Properties of molded microcellular elastomers** | | | | | | | |
|---|---|---|---|---|---|---|---|
| Resilience (Bashore rebound), % | 39.9 ± 0.2 | 38.5 ± 0.5 | 38.3 ± 0.7 | 35.4 ± 0.7 | 34.4 ± 0.5 | 34.0 ± 0.7 | 35.8 + 0.3 |
| Resilience (ball rebound), % | 43.6 ± 0.3 | 41.6 ± 0.2 | 41.1 ± 0.4 | 39.9 ± 0.2 | 39.2 ± 0.1 | 38.5 ± 0.1 | 36.7 ± 0.3 |
| Tensile strength at break, psi | 275 ± 9 | 298 ± 32 | 370 ± 10 | 381 ± 8 | 310 ± 26 | 303 ± 46 | 352 ± 27 |
| Tensile elongation at break, % | 196 ± 10 | 162 ± 15 | 177 ± 6 | 170 ± 6 | 145 ± 10 | 108 ± 23 | 122 ± 13 |
| Tensile modulus at 50%, psi | 123 ± 15 | 123 ± 14 | 145 ± 7 | 150 ± 7 | 155 ± 6 | 178 ± 3 | 192 ± 11 |
| Tensile modulus at 100%, psi | 184 ± 9 | 213 ± 16 | 244 ± 4 | 265 ± 5 | 242 ± 12 | 293 ± 6 | 304 ± 20 |
| Tensile set, % | 1.3 ± 0.3 | 2.6 ± 0.5 | 3.8 ± 1.2 | 3.3 ± 0.4 | 3.0 ± 0.4 | 1.2 ± 0.5 | 1.4 ± 0.9 |
| Tensile strength at break (50°C,) psi | 201 ± 20 | - | 196 ± 17 | - | 251 ± 27 | - | 248 ± 18 |
| Tensile elongation at break (50°C), % | 128 ± 14 | - | 118 ± 15 | - | 125 ± 15 | - | 94 ± 11 |
| Tensile modulus at 50% (50°C), psi | 115 ± 5 | - | 114 ± 5 | - | 143 ± 6 | - | 170 ± 10 |
| Tensile modulus at 100% (50°C), psi | 176 ± 8 | - | 161 ± 16 | - | 222 ± 9 | - | - |
| Tensile retention at break (50°C), % | 73.1 | - | 53.0 | - | 81.0 | - | 70.5 |
| Wet aged tensile strength at break(65°C, 95%RH), psi | 395 ± 37 | - | 396 ± 53 | - | 478 ± 39 | - | 314 ± 31 |
| Wet aged tensile elongation at break (65°C, 95%RH), % | 271 ± 22 | - | 225 ± 24 | - | 195 ± 6 | - | 118 ± 4 |
| Wet aged tensile modulus at 50% (65°C, 95%RH), psi | 127 ± 14 | - | 125 ± 12 | - | 186 ± 17 | - | 190 ± 18 |
| Wet aged tensile modulus at 100% (65°C, 95%RH), psi | 194 ± 12 | - | 205 ± 15 | - | 298 ± 25 | - | 293 ± 24 |
| Wet aged tensile strength retention at break (65°C, 95%RH), % | 143.6 | - | 107.0 | - | 154.2 | - | 90.1 |
| Wet aged tensile moisture absorption (65°C, 95%RH), % | 1.8 | | 2.3 | | 2.7 | | 3.1 |
| Tear strength, N/cm | 152 ± 26 | - | 159 ± 17 | - | 193 ± 23 | - | 236 ± 15 |
| Hysteresis at 70%, 1^{st} curve | 31.9 | - | 25.6 | - | 43.2 | - | 34.5 |
| Hysteresis at 70%, 10^{th} curve | 17.9 | - | 16.1 | - | 24.4 | - | 20.9 |
| Compressive stress at 25%, psi at 50%, psi | 55 ± 2 156 ± 6 | - | 59 ± 5 179 ± 10 | - | 71 ± 4 220 ± 8 | - | 82 ± 3 256 ± 15 |
| Dry aged constant deflection compression set, Ct | 15.2 ± 0.7 | - | 18.6 ± 1.2 | - | 14.0 ± 0.4 | - | 10.8 ± 0.7 |
| Wet aged constant deflection compression set | 2.6 ± 0.1 | - | 4.0 ± 0.1 | - | 2.7 ± 0.3 | - | 3.5 ± 0.4 |
| DSC transitions, °C | -59.7, 55.7 | - | -59.2, 55.0 | - | -58.6, 49.6 | - | -57.2, 48.8 |
| DMA (peak of loss modulus), °C | -52 | - | - | - | -50 | - | -47 |

### Example 20 and Comparative Example J

### Use of Poly Alpha-1,3-Glucan Succinate in Water-Based Polyurethane Dispersions (PUDs) for Adhesive Applications

### Preparation of Poly Alpha-1,3-Glucan Succinate

Poly alpha-1,3-glucan succinate was prepared according to the following procedure, using the specific amounts shown in Table 28 below. A jacketed reactor was loaded with water and 50% NaOH and the system was allowed to equilibrate to 60 °C. Glucan wet cake was then added to the mixer and soon afterward, the succinic anhydride powder was added to the system. The reaction was then kept at a constant temperature of 60 °C for 1 hour. Once the reaction was completed, the system was filtered and washed with deionized water. After the first filtration (which removed ~3.5 kg of water), the solid material was re-slurried with 3 kg of water and filtered again to obtain poly alpha-1,3-glucan succinate as a wet cake.

The moisture content of the poly alpha-1,3-glucan succinate as a wet cake was found to be 72.4%. The polysaccharide was linear in molecular structure and water insoluble.

**Table 28.**

| Materials Used in Synthesis of Poly Alpha-1,3-Glucan Succinate | |
|---|---|
| Glucan mass - dry (grams) | 1000.00 |
| Succinic anhydride (grams) | 37.06 |
| 50% NaOH in the system (grams) | 59.2 |
| Succinic anhydride (moles) | 0.37 |
| NaOH (moles) | 0.74 |
| Glucan wet cake mass (grams) | 2941.18 |
| Water added | 6034.11 |

### Formulation of adhesives

A control PUD, Comparative Example J, was prepared as follows: an aliphatic isocyanate pre-polymer was prepared by reacting aliphatic diisocyanate with polyester polyol diol and chain extender (DMPA) in order to introduce pendant carboxylic group into the prepolymer backbone. The carboxylic group was neutralized with triethylamine forming a salt group that enabled the dispersion of the pre-polymer in water. The dispersion of the pre-polymer in water was conducted under vigorous mixing (2200 rpm) for 1min. Finally, the water dispersed pre-polymer was polymerized with ethylene diamine to form the PUD control.

The PUD - polysaccharide dispersion, Example 20, was prepared by first mixing (2200 rpm for 1min of the aliphatic isocyanate pre-polymer with poly alpha-1,3-glucan succinate wet cake in water. *In situ* polymerization of the pre-polymer in the presence of about 20 wt. % of poly alpha-1,3-glucan succinate with ethylene diamine was then conducted. The *in situ* polymerization is expected to provide covalent bond grafting of isocyanate with the poly alpha-1,3-glucan succinate. The compositions used for Comparative Example J and Example 20 are shown in Table 29.

**Table 29. Ingredients used in the PUD dispersion formulations of Comparative Example J (Control, PUD with no polysaccharide) and**

| Example 20 (PUD - poly alpha-1,3-glucan succinate). | | |
|---|---|---|
| | Com parative Example J (Control PUD) | Example 20 (PUD with Polysaccharide) |
| Fomrez 44-56 | 100 | 100 |
| DMPA | 6.7 | 6.7 |
| IPDI | 46.4 | 46.4 |
| Catalyst | 0.045 | 0.045 |
| poly alpha-1,3-glucan succinate (polysaccharide) | - | 48.3 |
| TEA | 5.10 | 5.10 |
| H2O in PS | - | 9.7 |
| Added H2O | 240 | 240 + 100 |
| EDA | 5.86 | 5.05 |
| Isocynate index | 1.05 | 1.05 |
| % Polysaccharide in solids | - | 19.0 |
| % solids | 37 | 36.8 |

Dispersions prepared as indicated in Table 29 were evaluated as one-component adhesives on aluminum metal substrate. Standardized aluminum plates of 1 × 4 × 0.063 inches (2.54 cm × 10.16 cm × 0.16 cm) were used as substrate in the adhesive testing. 0.2 g of each of the prepared water dispersion adhesives were spread over 0.5 inch × 1 inch (1.27 cm × 2.54 cm) bond area of standardized adhesion test plate. Two plates were clamped together over the bond area and cured at 50 °C for 3 days. The adhesion performance of the resins was then tested on aluminum substrates using Lap Shear Test in accordance with ASTM D1002. Results are presented in Table 30.

**Table 30. Properties of adhesives - oven cured at 50°C for 3 days**

| | Comparative Example J (Control PUD) | Example 20 (PUD with Polysaccharide) |
|---|---|---|
| *Isocyanate Index* | 1.05 | 1.05 |
| *Load at break, lbf* | 257 ± 118 | 516 ± 30 |
| *Load at failure, psi* | 494 ± 210 | 916 ± 89 |
| *Elongation, %* | 4.5 ± 0.8 | 6.9 ± 1.0 |
| *Break type* | Cohesive | Cohesive |

The adhesive failure in both Comparative Example J and Example 20 formulations were cohesive, indicating that the adhesive itself is tough. Shear strength testing clearly showed that the incorporation of about 20 weight percent of the poly alpha-1,3-glucan succinate wet cake resulted in an 85% increase in adhesive strength compared to the PUD formulation of Comparative Example J. A 100.7% and a 53.3 % improvement in load at break and elongation at break, respectively, of the adhesive layer made from the formulation of Example 20 in comparison with the formulation of Comparative Example J is a clear indication of improvement in toughness by the polysaccharide. These adhesive performance improvements of the composite adhesive formulation are thought to result from the intrinsic strength and reinforcing capability of the poly alpha-1,3-glucan succinate in conjunction with its excellent dispersibility, induced by the succinic anhydride modification. Also, possible covalent grafting between the PUD and poly alpha-1,3-glucan succinate could be the reason for these observations.

### Comparative Example K and Example 21

### Use of Polyetheramine Dispersions in Urea-Elastomers

Polysaccharide was dispersed in polyether diamines and polyether triamines having various molecular weight ranges. A formulation using poly alpha-1,3-glucan succinate, prepared as described herein above, as the polysaccharide (Example 21) is presented in Table 31, as well as a polysaccharide-free control formulation (Comparative Example K). In the formulation of Example 21, the polysaccharide replaced about 10 weight% of the polyether triamine. Two polyetheramines were used: JEFFAMINE^{®} T-5000, which is a trifunctional primary amine with a polypropylene glycol backbone and a molecular weight of about 5000 g/mole, and JEFFAMINE^{®} D-2000, which is a difunctional primary amine having repeating oxypropylene units in the backbone and a molecular weight of about 2000 g/mole.

For each of Example 21 and Comparative Example K, the prepolymer and the resin as shown in Table 31 were mixed in a multi-axial mixer for 25 seconds and poured into a mold for curing. The curing took place for 3 hours at 25 °C. The cured elastomer was demolded and test specimens were prepared for evaluation of mechanical and thermal properties. The mechanical properties such as tensile strength, elongation, and modulus were measured using an Instron according to ASTM D638 and results are presented in Table 32.

**Table 31. Formulations of urea-urethane elastomers of Comparative Example K and Example 21**

| | Comparative Example K (Control formulation) | Example 21 |
|---|---|---|
| Prepolymer (Isophorone diisocyanate/Poly G 55-112; 5.8% NCO) | 15.1 | 15.1 |
| Isophorone diisocyanate; NCO%: 37.7 | 8.80 | 8.80 |
| Polyether triamine (JEFFAMINE^{®} T-5000 | 19.8 | - |
| Polyether triamine (JEFFAMINE^{®} T-5000)/ 10% Polysaccharide | - | 19.8 |
| Polyether diamine (JEFFAMINE^{®} D-2000) | 13.5 | 13.5 |
| Ethacure 100 | 6.75 | 6.75 |
| % polysaccharide | 0 | 3.0 |
| Temperature, °C | 25 | 25 |
| Mix time, s | 25 | 25 |

**Table 32. Tensile Properties of Urea-Urethane Elastomers of Comparative Example K and Example 21**

| | Comparative Example K | Example 21 |
|---|---|---|
| *Tensile Strength at break, psi* | 497 ± 39 | 536 ± 19 |
| *Elongation at break* % | 123 ± 23 | 122 ± 13 |
| *Tensile stress* @ *50% elongation* | 467 ± 37 | 529 ± 18 |
| *Tensile stress* @ *100% elongation* | 495 ± 40 | 543 ± 20 |
| *Tensile set,* % | 5% | 6% |

It was observed that a stable dispersion of the wet polysaccharide in the polyetheramines and later in the formulation was achieved. The use of polysaccharide in the formulation resulted in a uniform film with no visible polysaccharide particles. The curing temperature and mixing time were not affected by the use of the polysaccharide.

Analyses of the tensile properties (Table 32) indicated that the use of the polysaccharide via dispersions in Jeffamine^{®} T 5000 increased the tensile strength of the urea-elastomer, while the elongation at break remained unaffected. Therefore, the data shows that the poly alpha-1,3-glucan succinate / Jeffamine^{®} 5000 dispersion can increase the toughness of urea-elastomers.

Thermal property analysis of the control (Comparative Example K) and the polysaccharide-based formulation (Example 21) indicated that the elastomer has a primary glass transition temperature at approximately -59 °C and a secondary glass transition at about 50°C. Introducing the polysaccharide did not impact the overall thermal properties of the urea elastomers.

### Example 22

### Comparative Example L

Dried poly alpha-1,3-glucan powder was used to make two batches of a glucan ether referred to herein as hydroxypropyl glucan B. The hydroxypropyl glucan B was prepared using a similar process to that described in United States Patent No. 9,139,718. To change the molar substitution (MoS), the propylene oxide (PO) to anhydroglucose unit (AGU) ratio was adjusted. The molar ratio of reagents used to prepare hydroxypropyl glucan B was 1 AGU, 16 PO, and 0.4 NaOH. The term "molar substitution" as used herein refers to the moles of an organic group per monomeric unit of a poly alpha-1,3-glucan ether compound. It is noted that the molar substitution value for poly alpha-1,3-glucan may have no upper limit. For example, when an organic group containing a hydroxyl group (e.g., hydroxypropyl) has been etherified to poly alpha-1,3-glucan, the hydroxyl group of the organic group may undergo further reaction, thereby coupling more of the organic group to the poly alpha-1,3-glucan.

Characteristics of the glucan ether are shown in Table 33.

**Table 33. Characteristics of Hydroxypropyl Glucan Ether Used in Example 22**

| Hydroxypropyl Glucan B used in | Molar Substitution | Nominal DP | Hydroxyl # |
|---|---|---|---|
| Example 22 | 6.2 | 800 | 394 +/- 7.3 |

### Methods

Hydroxyl values of hydroxypropyl glucan B were determined via p-toluenesulfonyl monoisocyanate (TSI) using the following procedure.

Toluene was dried over molecular sieves for 24 hours. The moisture content of dry toluene was 0.01% as determined with Karl Fisher per ASTM D 4672. Tetrahydrofuran (THF) (100 mL) and TSI (6.0 g) were weighed into a sealable jar and mixed with magnetic stir bar for 2 hours. The NCO% of this solution was determined according to ASTM D 4274 method using Automatic Titrator Mettler Toledo T-50. Demoisturized blend of polyol and polysaccharide (about 0.7 g) was dissolved in 10 mL of TSI-THF mixture and allowed to react while stirring in closed glass vial for 5 minutes before titration of unreacted isocyanate by dibutylamine method (ASTM D 4274). The change in NCO% was used to calculate the equivalent weight of polyol samples. Polysaccharide hydroxyl value was determined by using a sample of 10% polysaccharide in THF for testing.

### Thermoplastic Polyurethane (TPU) Formulation and Properties

Polysaccharides were dissolved in THF, and then blended into polyol. THF and moisture were removed via vacuum.

Two samples of thermoplastic polyurethane containing polysaccharide were prepared. For each sample, 100 g of nominal 10% solution of hydroxypropyl glucan B in THF was prepared as follows. 90 grams of polyol POLY G 55-112 (EO-capped PPG diol, molecular weight 1000 g/mol, obtained from Monument Chemical, Brandenburg, KY) was added to this solution and blended. THF was removed from the blend using rota-evaporator. Hydroxyl value of the blend was determined and used in calculation of polyurethane elastomers. Polyurethane elastomer formulation was based on 1 equivalent polyol, 1 equivalent of 1,4-butane diol chain extender, and 2.04 equivalent of 4,4'-MDI isocyanate (isocyanate index 1.02).

Polyurethane elastomers were prepared using conventional laboratory compression molding method (Carver press). The blend of polyol and polysaccharide, chain extender 1,4-BD were weighed into Speed Mixer cup and mixed for 30 seconds at 2200 rpm using Speed Mixer (Flack Tek Inc.) and subsequently heated for 15 minutes in an air-circulating oven at 100°C. Liquid isocyanate conditioned at 70°C was added via syringe to the mixture of polyol and the chain extender (amounts given in Table 34). All components were mixed via Speed Mixer at 2200 rpm and transferred into an aluminum mold covered with Teflon sheet preheated at 120°C. At the gel time, the mold was closed and TPU was cured for 2 hours at 120°C. Afterwards, the samples were post-cured for 32 hours at 100°C in air-circulation oven.

The samples were aged at room temperature for 1 day at room conditions prior to testing. Stress-strain properties of elastomer were tested per ASTM D 412. Formulation and properties of a control without polysaccharide (Comparative Example L) and two samples with hydroxypropyl glucan B ("PS" for polysaccharide, Examples 22A and 22B) are shown in Table 34. For Example 22A, the amount of polysaccharide (hydroxypropyl glucan B) used was 9.8 wt%, based on the total weight of Poly G 55-112 and polysaccharide. For Example 22B, the amount of polysaccharide (hydroxypropyl glucan B) used was 10.3 wt%, based on the total weight of Poly G 55-112 and polysaccharide.

**Table 34. Formulation of TPU's and Their Properties**

| Material | Ex. 22A | Comp. Ex. L | Ex. 22B |
|---|---|---|---|
| Poly G 55-112, g | - | 36.82 | - |
| Poly G 55-112/PS *, g | 34.87 | - | 34.42 |
| 1,4-Butanediol, g | 3.73 | 3.43 | 3.78 |
| 4,4'-MDI, g | 21.4 | 19.75 | 21.79 |
| Dabco T-12, g | 0.0028 | 0.0014 | 0 |
| Total polysaccharide content, % | 5.7 | 0 | 5.9 |
| Hard segment, % | 41.9 | 38.6 | 42.6 |
| Isocyanate index, % | 102 | 1.02 | 1.02 |
| Temperature of polyol, °C | 100 | | |
| Temperature of chain extender, °C | 100 | | |
| Temperature of isocyanate, °C | 70 | | |
| Mix time, s | 20 | 68 | 20 |
| Gel time, s | ~20 | 107 | ~20 |
| Cure at 120°C | 2 hr | | |
| Cure at 100°C | 20 hr | | |
| Tensile strength at break, psi | 3006 ± 515 | 3340 ± 201 | 3442 ± 243 |
| Tensile strength at yield, psi | No yield | No yield | No yield |
| Elongation at break, % | 267 ± 23 | 637 ± 22 | 165 ± 10 |
| Elongation at yield, % | No yield | No yield | No yield |
| Tensile strength at 50% elongation, psi | 654 ± 67 | 259 ± 22 | 882 ± 62 |
| Tensile strength at 100% elongation, psi | 1230 ± 138 | 367 ± 37 | 1905 ± 92 |
| Tensile strength at 200% elongation, psi | 2357 ± 297 | 535 ± 38 | - |
| Tensile strength at 300% elongation, psi | - | 788 ± 43 | - |
| Young's Modulus, MPa | - | 8.7 | 18.9 |
| Tensile set, % | 3.1 | 2.7 | 3.1 |
| Tg°C | - | -6.7 | -7.8, 177 |

| | | | |
|---|---|---|---|
| Note: * "PS" refers to hydroxypropyl glucan B as the polysaccharide. | | | |

For Example 22B, the TPU formulation containing hydroxypropyl glucan B shows thermal transitions of the soft segment at -7.8°C and of a hard segment at 177°C. The analogous control (Comp. Ex. L) only shows a thermal transition of -6.7°C. The tensile strength is maintained yet shows higher modulus versus control. The tensile strength at 100% elongation is 5 times higher. Elongation at break is 4 times lower. The properties can be adjusted by changing the crosslinking.

## Claims

1. A polyurethane polymer comprising:
(a) at least one polyisocyanate;
(b) a polysaccharide comprising:
(i) poly alpha-1,3-glucan;
(ii) a poly alpha-1,3-glucan ester compound represented by Structure I: 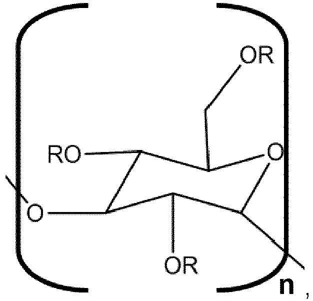 wherein
(A) n is at least 6,
(B) each R is independently an -H or an acyl group, and
(C) the compound has a degree of substitution of about 0.05 to about 3.0;
(iii) poly alpha-1,3-1,6-glucan;
(iv) a poly alpha-1,3-glucan ester compound represented by Structure II: 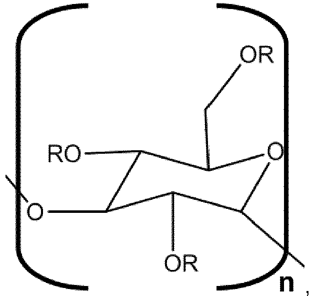 wherein
(D) n is at least 6,
(E) each R is independently an -H or a first group comprising -CO-Cₓ-COOH, wherein the -Cₓ- portion of said first group comprises a chain of 2 to 6 carbon atoms, and
(F) the compound has a degree of substitution with the first group of about 0.001 to about 0.1; or
(v) a poly alpha-1,3-glucan ether compound represented by Structure III: 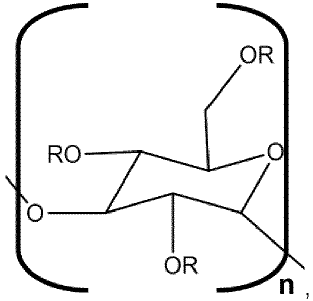 wherein
(G) n is at least 6,
(H) each R is independently an -H or an organic group, and
(I) the ether compound has a degree of substitution of about 0.05 to about 3.0;
and
(c) optionally, at least one polyol.

2. The polyurethane polymer of claim 1, wherein the polyisocyanate comprises 1,6-hexamethylene diisocyanate, isophorone diisocyanate, 2,4-diisocyanatotoluene, bis(4-isocyanatocyclohexyl) methane, 1,3-bis(1-isocyanato-1-methylethyl)benzene, bis(4-isocyanatophenyl)methane, or 2,4'-diphenylmethane diisocyanate.

3. The polyurethane polymer of any one of claims 1-2, wherein the polyol is present and the polyol is a C₂ to C₁₂ alkane diol, 1,2,3-propanetriol, 2-hydroxymethyl-2-methyl-1,3-propanediol, 2-ethyl-2-hydroxymethyl-1,3-propanediol, 2,2-bis(hydroxymethyl)-1,3-propanediol, polyether polyol, or polyester polyol.

4. The polyurethane polymer of any one of claims 1-3, wherein the polyurethane polymer further comprises at least one of a second polyol comprising at least one hydroxy acid.

5. The polyurethane polymer of claim 4, wherein the second polyol is 2-hydroxymethyl-3-hydroxypropanoic acid, 2-hydroxymethyl-2-methyl-3-hydroxypropanoic acid, 2-hydroxymethyl-2-ethyl-3-hydroxypropanoic acid, 2-hydroxymethyl-2-propyl-3-hydroxypropanoic acid, citric acid, or tartaric acid.

6. The polyurethane polymer of any one of claims 1-5, wherein the polysaccharide comprises the poly alpha-1,3-glucan.

7. The polyurethane polymer of claim 6, wherein the poly alpha-1,3-glucan has 90% or greater alpha-1,3-glycosidic linkages.

8. The polyurethane polymer of any one of claims 1-5, wherein the polysaccharide comprises the poly alpha-1,3-glucan ester compound represented by Structure I.

9. The polyurethane polymer of any one of claims 1-5, wherein the polysaccharide comprises the poly alpha-1,3-1,6-glucan.

10. The polyurethane polymer of any one of claims 1-5, wherein the polysaccharide comprises the poly alpha-1,3-glucan ester compound represented by Structure II

11. The polyurethane polymer of any one of claims 1-5, wherein the polysaccharide comprises a the poly alpha-1,3-glucan ether compound represented by Structure III.

12. The polyurethane polymer of any one of claims 1-11, wherein the polysaccharide is present in the polyurethane polymer at an amount of about 0.1 weight percent to about 50 weight percent, based on the total weight of the polyurethane polymer.

13. The polyurethane polymer of any one of claims 1-12, further comprising a polyetheramine.

14. A polyurethane composition comprising the polyurethane polymer of any one of claims 1-13, wherein the polyurethane composition further comprises a solvent, and the solvent is water, an organic solvent, or a combination thereof.

15. The polyurethane composition of claim 14, wherein the composition further comprises one or more additives selected from dispersants, rheological aids, antifoams, foaming agents, adhesion promoters, antifreezes, flame retardants, bactericides, fungicides, preservatives, polymers, or polymer dispersions.

16. A polyurethane foam, an adhesive, a coating, a film, or a molded article comprising the polyurethane polymer of any one of claims 1-13.

17. A coated fibrous substrate comprising a fibrous substrate having a surface, wherein the surface comprises a coating comprising the polyurethane polymer of any one of claims 1-13 on at least a portion of the surface, and wherein the fibrous substrate is a fiber, a yarn, a fabric, a textile, or a nonwoven.

## Patentansprüche

1. Polyurethanpolymer, umfassend:
(a) wenigstens ein Polyisocyanat;
(b) ein Polysaccharid umfassend:
(i) Poly-alpha-1,3-glucan;
(ii) eine Poly-alpha-1,3-glucanesterverbin-dung dargestellt durch Struktur I: 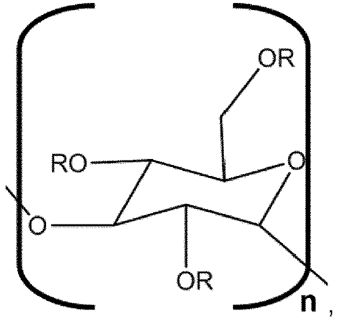 wobei
(A) n wenigstens gleich 6 ist,
(B) R jeweils unabhängig für ein -H oder eine Acylgruppe steht und
(C) die Verbindung einen Substitutionsgrad von etwa 0,05 bis etwa 3,0 aufweist;
(iii) Poly-alpha-1,3-1,6-glucan;
(iv) eine Poly-alpha-1,3-glucanesterverbin-dung dargestellt durch Struktur II: 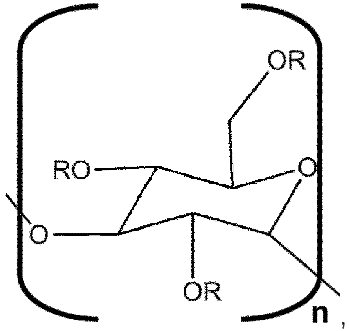 wobei
(D) n wenigstens gleich 6 ist,
(E) R jeweils unabhängig für ein -H oder eine erste Gruppe steht, die -CO-Cₓ-COOH umfasst, wobei der -Cx-Teil der ersten Gruppe eine Kette von 2 bis 6 Kohlenstoffatomen umfasst, und
(F) die Verbindung einen Substitutionsgrad mit der ersten Gruppe von etwa 0,001 bis etwa 0,1 aufweist; oder
(v) eine Poly-alpha-1,3-glucanetherverbin-dung dargestellt durch Struktur III: 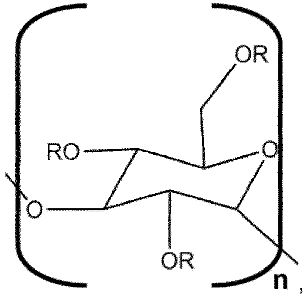 wobei
(G) n wenigstens gleich 6 ist,
(H) R jeweils unabhängig für ein -H oder eine organische Gruppe steht, und
(I) die Etherverbindung einen Substitutionsgrad von etwa 0,05 bis etwa 3,0 aufweist;
und
(c) gegebenenfalls wenigstens ein Polyol.

2. Polyurethanpolymer nach Anspruch 1, wobei das Polyisocyanat 1,6-Hexamethylendiisocyanat, Isophorondiisocyanat, 2,4-Diisocyanatotoluol, Bis(4-isocyanatocyclohexyl)methan, 1,3-Bis(1-isocyanato-1-methylethyl)benzol, Bis(4-isocyanatophenyl)-methan oder 2,4'-Diphenylmethandiisocyanat umfasst.

3. Polyurethanpolymer nach einem der Ansprüche 1-2, wobei das Polyol vorhanden ist und es sich dabei um ein C₂- bis C₁₂-Alkandiol, 1,2,3-Propantriol, 2-Hydroxymethyl-2-methyl-1,3-propandiol, 2-Ethyl-2-hydroxymethyl-1,3-propandiol, 2,2-Bis(hydroxymethyl)-1,3-propandiol, Polyetherpolyol oder Polyesterpolyol handelt.

4. Polyurethanpolymer nach einem der Ansprüche 1-3, wobei das Polyurethanpolymer ferner wenigstens eines von einem zweiten Polyol, das wenigstens eine Hydroxysäure umfass, umfasst.

5. Polyurethanpolymer nach Anspruch 4, wobei es sich bei dem zweiten Polyol um 2-Hydroxymethyl-3-hydroxypropansäure, 2-Hydroxymethyl-2-methyl-3-hydroxypropansäure, 2-Hydroxymethyl-2-ethyl-3-hydroxypropansäure, 2-Hydroxymethyl-2-propyl-3-hydroxypropansäure, Citronensäure oder Weinsäure handelt.

6. Polyurethanpolymer nach einem der Ansprüche 1-5, wobei das Polysaccharid das Poly-alpha-1,3-glucan umfasst.

7. Polyurethanpolymer nach Anspruch 6, wobei das Poly-alpha-1,3-glucan 90% oder mehr alpha-1,3-glycosidische Verknüpfungen aufweist.

8. Polyurethanpolymer nach einem der Ansprüche 1-5, wobei das Polysaccharid die durch Struktur I dargestellte Poly-alpha-1,3-glucanesterverbindung umfasst.

9. Polyurethanpolymer nach einem der Ansprüche 1-5, wobei das Polysaccharid das Poly-alpha-1,3-1,6-glucan umfasst.

10. Polyurethanpolymer nach einem der Ansprüche 1-5, wobei das Polysaccharid die durch Struktur II dargestellte Poly-alpha-1,3-glucanesterverbindung umfasst.

11. Polyurethanpolymer nach einem der Ansprüche 1-5, wobei das Polysaccharid die durch Struktur III dargestellte Poly-alpha-1,3-glucanetherverbindung umfasst.

12. Polyurethanpolymer nach einem der Ansprüche 1-11, wobei das Polysaccharid im Polyurethanpolymer in einer Menge von etwa 0,1 Gewichtsprozent bis etwa 50 Gewichtsprozent, bezogen auf das Gesamtgewicht des Polyurethanpolymers, vorliegt.

13. Polyurethanpolymer nach einem der Ansprüche 1-12, ferner umfassend ein Polyetheramin.

14. Polyurethanzusammensetzung, umfassend das Polyurethanpolymer nach einem der Ansprüche 1-13, wobei die Polyurethanzusammensetzung ferner ein Lösungsmittel umfasst und es sich bei dem Lösungsmittel um Wasser, ein organisches Lösungsmittel oder eine Kombination davon handelt.

15. Polyurethanpolymer nach Anspruch 14, wobei die Zusammensetzung ferner ein oder mehrere Additive ausgewählt aus Dispergiermitteln, rheologischen Hilfsmitteln, Entschäumern, Schaummitteln, Haftvermittlern, Frostschutzmitteln, Flammschutzmitteln, Bakteriziden, Fungiziden, Konservierungsstoffen, Polymeren oder Polymerdispersionen umfasst.

16. Polyurethanschaum, Haftmittel, Beschichtung, Film oder Formartikel, umfassend das Polyurethanpolymer nach einem der Ansprüche 1-13.

17. Beschichtetes faserartiges Substrat, umfassend ein faserartiges Substrat mit einer Oberfläche, wobei die Oberfläche eine das Polyurethanpolymer nach einem der Ansprüche 1-13 umfassende Beschichtung auf wenigstens einem Teil der Oberfläche umfasst und wobei es sich bei dem faserartigen Substrat um eine Faser, ein Garn, einen Stoff, eine Textilie oder ein Vlies handelt.

## Revendications

1. Polymère de type polyuréthane comprenant :
(a) au moins un polyisocyanate ;
(b) un polysaccharide comprenant :
(i) un poly(alpha-1,3-glucane) ;
(ii) un composé de type ester de poly(alpha-1,3-glucane) représenté par la structure I : 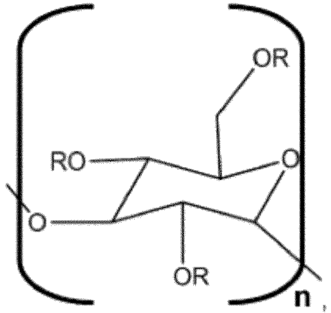
(A) n étant au moins 6,
(B) chaque R étant indépendamment un -H ou un groupe acyle, et
(C) le composé possède un degré de substitution d'environ 0,05 à environ 3,0 ;
(iii) un poly(alpha-1,3-1,6-glucane) ;
(iv) un composé de type ester de poly(alpha-1,3-glucane) représenté par la structure II : 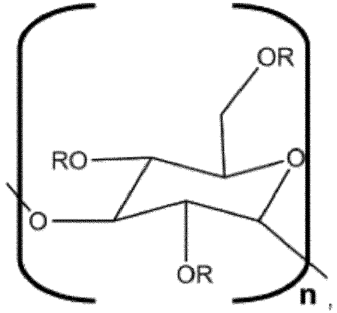
(D) n étant au moins 6,
(E) chaque R étant indépendamment un -H ou un premier groupe comprenant -CO-Cₓ-COOH, la partie -Cₓ- dudit premier groupe comprenant une chaîne de 2 à 6 atomes de carbone, et
(F) le composé possédant un degré de substitution par le premier groupe d'environ 0,001 à environ 0,1 ; ou
(v) un composé de type éther de poly(alpha-1,3-glucane) représenté par la structure III : 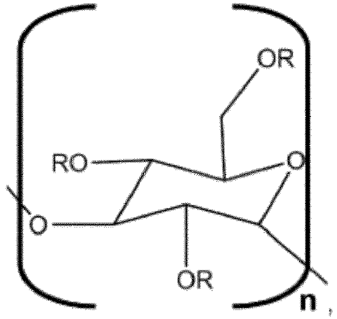
(G) n étant au moins 6,
(H) chaque R étant indépendamment un -H ou un groupe organique, et
(I) le composé de type éther possédant un degré de substitution d'environ 0,05 à environ 3,0 ;
et
(c) éventuellement, au moins un polyol.

2. Polymère de type polyuréthane selon la revendication 1, le polyisocyanate comprenant le 1,6-diisocyanate d'hexaméthylène, le diisocyanate d'isophorone, le 2,4-diisocyanatotoluène, le bis(4-isocyanatocyclohexyl)méthane, le 1,3-bis(1-isocyanato-1-méthyléthyl)benzène, le bis(4-isocyanatophényl)méthane, ou le 2,4'-diisocyanate de diphénylméthane.

3. Polymère de type polyuréthane selon l'une quelconque des revendications 1 à 2, le polyol étant présent et le polyol étant un C₂ à C₁₂ alcanediol, le 1,2,3-propanetriol, le 2-hydroxyméthyl-2-méthyl-1,3-propanediol, le 2-éthyl-2-hydroxyméthyl-1,3-propanediol, le 2,2-bis(hydroxyméthyl)-1,3-propanediol, un polyéther polyol, ou un polyester polyol.

4. Polymère de type polyuréthane selon l'une quelconque des revendications 1 à 3, le polymère de type polyuréthane comprenant en outre au moins l'un parmi un deuxième polyol comprenant au moins un hydroxyacide.

5. Polymère de type polyuréthane selon la revendication 4, le deuxième polyol étant l'acide 2-hydroxyméthyl-3-hydroxypropanoïque, l'acide 2-hydroxyméthyl-2-méthyl-3-hydroxypropanoïque, l'acide 2-hydroxyméthyl-2-éthyl-3-hydroxypropanoïque, l'acide 2-hydroxyméthyl-2-propyl-3-hydroxypropanoïque, l'acide citrique ou l'acide tartrique.

6. Polymère de type polyuréthane selon l'une quelconque des revendications 1 à 5, le polysaccharide comprenant le poly(alpha-1,3-glucane).

7. Polymère de type polyuréthane selon la revendication 6, le poly(alpha-1,3-glucane) possédant 90 % ou plus de liaisons alpha-1,3-glycosidiques.

8. Polymère de type polyuréthane selon l'une quelconque des revendications 1 à 5, le polysaccharide comprenant le composé de type ester de poly(alpha-1,3-glucane) représenté par la structure I.

9. Polymère de type polyuréthane selon l'une quelconque des revendications 1 à 5, le polysaccharide comprenant le poly(alpha-1,3-1,6-glucane).

10. Polymère de type polyuréthane selon l'une quelconque des revendications 1 à 5, le polysaccharide comprenant le composé de type ester de poly(alpha-1,3-glucane) représenté par la structure II.

11. Polymère de type polyuréthane selon l'une quelconque des revendications 1 à 5, le polysaccharide comprenant le composé de type éther de poly(alpha-1,3-glucane) représenté par la structure III.

12. Polymère de type polyuréthane selon l'une quelconque des revendications 1 à 11, le polysaccharide étant présent dans le polymère de polyuréthane à raison d'une quantité d'environ 0,1 pour cent en poids à environ 50 pour cent en poids, sur la base du poids total du polymère de type polyuréthane.

13. Polymère de type polyuréthane selon l'une quelconque des revendications 1 à 12, comprenant en outre une polyétheramine.

14. Composition de polyuréthane comprenant le polymère de type polyuréthane selon l'une quelconque des revendications 1 à 13, la composition de polyuréthane comprenant en outre un solvant, et le solvant étant l'eau, un solvant organique, ou une combinaison correspondante.

15. Composition de polyuréthane selon la revendication 14, la composition comprenant en outre un ou plusieurs additifs choisis parmi des dispersants, des auxiliaires rhéologiques, des antimousses, des agents moussants, des promoteurs d'adhérence, des antigels, des retardateurs de flamme, des bactéricides, des fongicides, des conservateurs, des polymères, ou des dispersions de polymère.

16. Mousse de polyuréthane, adhésif, revêtement, film ou article moulé comprenant le polymère de type polyuréthane selon l'une quelconque des revendications 1 à 13.

17. Substrat fibreux revêtu comprenant un substrat fibreux possédant une surface, la surface comprenant un revêtement comprenant le polymère de type polyuréthane selon l'une quelconque des revendications 1 à 13 sur au moins une partie de la surface, et le substrat fibreux étant une fibre, un fil, un tissu, un textile ou un non-tissé.
